(19) Europäisches Patentamt
European Patent Office
Office européen des brevets

(11) EP 3 571 547 B1

(12) **EUROPÄISCHE PATENTSCHRIFT**

(45) Veröffentlichungstag und Bekanntmachung des Hinweises auf die Patenterteilung:
**16.08.2023 Patentblatt 2023/33**

(21) Anmeldenummer: **18726052.6**

(22) Anmeldetag: **18.01.2018**

(51) Internationale Patentklassifikation (IPC):
***G02F 1/07*** *(2006.01)* ***G02F 1/061*** *(2006.01)*
***G02F 1/29*** *(2006.01)*

(52) Gemeinsame Patentklassifikation (CPC):
**G02F 1/07; G02F 1/061; G02F 1/29**

(86) Internationale Anmeldenummer:
**PCT/EP2018/025014**

(87) Internationale Veröffentlichungsnummer:
**WO 2018/134041 (26.07.2018 Gazette 2018/30)**

(54) **ELEKTRISCH STEUERBARES OPTISCHES ELEMENT, INSBESONDERE DÜNNSCHICHTZELLE MIT EINEM OPTISCH WIRKSAMEN OBERFLÄCHENPROFIL UND VERFAHREN ZU DESSEN HERSTELLUNG**

ELECTRICALLY CONTROLLABLE OPTICAL ELEMENT, IN PARTICULAR THIN-FILM CELL HAVING AN OPTICALLY ACTIVE SURFACE PROFILE, AND METHOD FOR THE PRODUCTION THEREOF

ÉLÉMENT OPTIQUE COMMANDABLE ÉLECTRIQUEMENT, NOTAMMENT CELLULE SOLAIRE EN COUCHES MINCES PRÉSENTANT UN PROFIL DE SURFACE OPTIQUEMENT ACTIF, ET PROCÉDÉ POUR LE RÉALISER

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **18.01.2017 DE 102017000406**

(43) Veröffentlichungstag der Anmeldung:
**27.11.2019 Patentblatt 2019/48**

(73) Patentinhaber:
- **FOKUS TEC GmbH**
  **82131 Gauting (DE)**
- **Faustig, Stephanie**
  **80796 München (DE)**
- **Hoffmann, Klaus**
  **81476 München (DE)**

(72) Erfinder:
- **HOFFMANN, Klaus**
  **81476 München (DE)**
- **STUMPE, Joachim**
  **14641 Nauen (DE)**
- **FISCHER, Thomas ,**
  **10317 Berlin (DE)**
- **RUTLOH, Michael**
  **12679 Berlin (DE)**

(74) Vertreter: **Dreykorn-Lindner, Werner**
**Steinlachstrasse 2**
**90571 Schwaig (DE)**

(56) Entgegenhaltungen:
**DE-A1-102015 015 436**

- **YANG YOUNG-CHEOL ET AL: "Electro-optic Kerr effect in polymer-stabilized isotropic liquid crystals", APPLIED PHYSICS LETTERS, A I P PUBLISHING LLC, US, Bd. 98, Nr. 2, 13. Januar 2011 (2011-01-13), Seiten 23502-23502, XP012139194, ISSN: 0003-6951, DOI: 10.1063/1.3533396**
- **ZHU JI-LIANG ET AL: "Improved Kerr constant and response time of polymer-stabilized blue phase liquid crystal with a reactive diluent", APPLIED PHYSICS LETTERS, A I P PUBLISHING LLC, US, Bd. 102, Nr. 7, 18. Februar 2013 (2013-02-18), Seiten 71104-71104, XP012170089, ISSN: 0003-6951, DOI: 10.1063/1.4793416 [gefunden am 2013-02-20]**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).



Processed by Luminess, 75001 PARIS (FR)

## Beschreibung

Die Erfindung betrifft, gemäß dem Patentanspruch 1, ein elektrisch steuerbares optisches Element, insbesondere eine Dünnschichtzelle mit einem optisch wirksamen Oberflächenprofil und gemäß dem Patentanspruch 12 ein Verfahren zu dessen Herstellung auf Basis flüssiger Komposite.

Einstellbare optische Elemente sind gegenwärtig vorrangig mechanische Systeme. Diese sind schwer und voluminös sowie aufgrund der Verwendung mechanischer Triebe o.a. störanfällig und oft zu träge. Nicht-mechanisch optische Elemente sind deswegen von Vorteil und Gegenstand gegenwärtiger Entwicklung. Während für derartige optische Elemente mit geringerem nutzbarem Durchmesser schon Lösungen kommerzialisiert wurden, ist dies bei größeren Aperturen noch nicht der Fall.

Als elektrooptischen Kerr-Effekt (J. Kerr 1875), quadratischen elektrooptischen Effekt oder elektrische Doppelbrechung, bezeichnet man das Auftreten einer mit dem Quadrat der elektrischen Feldstärke eines angelegten Feldes anwachsenden Doppelbrechung. Bei diesem Effekt richten sich Moleküle mit permanentem Dipolmoment in einer isotropen Flüssigkeit im elektrischen Feld aus. Durch diese Ausrichtung wird das Material im Feld optisch anisotrop, wobei in Feldrichtung ein höherer Brechungsindex und senkrecht dazu ein geringerer Brechungsindex, verglichen mit der isotropen Flüssigkeit im spannungsfreien Zustand, eingestellt werden. Bei einer Kerr-Zelle wird das Brechungs- und Polarisationsverhalten eines Materials durch ein außen angelegtes elektrisches Feld verändert, so dass sich elektrische in optische Signale umwandeln lassen. Quer zur Richtung des durchfallenden Lichts wird über Elektrodenplatten in der Kerr-Flüssigkeit ein elektrisches Feld angelegt. Als Kerr-Flüssigkeit wird meist reines Nitrobenzen verwendet, welches eine Kerr-Konstante K von 2,44 x $10^{-12}$ $m/V^2$ hat, bei Raumtemperatur flüssig ist und gut mit Alkoholen, Ether und Benzol gemischt werden kann. Vergleichsweise hat Nitrotoluol eine Kerr-Konstante K von 1,37 x $10^{-12}$ $m/V^2$ und Wasser eine Kerr-Konstante K von 5,1 x $10^{-14}$ $m/V^2$. Bei den genannten Flüssigkeiten und üblichen Zellgrößen im Zentimeterbereich braucht man dabei elektrische Spannungen im Bereich weniger Kilovolt. Vorder- und Rückseite der Kerr-Zelle sind lichtdurchlässig aus Glas, die Seitenwände aus Metall stellen Elektrodenplatten dar.

Die technische Anwendung Kerrzelle ist somit ein Kondensator mit der Kerrflüssigkeit - meistens Nitrobenzen - als Dielektrikum. Sie wird zwischen gekreuzte Polarisatoren gebracht, deren optische Hauptachsen gegen die Richtung des elektrischen Feldes um je 45° geneigt sind. Liegt keine Spannung an der Zelle, so vermag das Licht diese Anordnung nicht zu durchdringen.

Im elektrischen Feld wird nun die Kerrflüssigkeit doppelbrechend, d.h. die in Richtung des Feldes schwingende Lichtkomponente erhält eine andere Fortpflanzungsgeschwindigkeit als die senkrecht zum Felde schwingende. Zwischen beiden ist somit beim Austritt aus der Kerrzelle eine Phasenverschiebung $\delta$ vorhanden. Durch die optische Anordnung tritt nunmehr die Lichtmenge L, die mit $\delta$ und der Lichtmenge $L_0$, die in die Zelle eintritt, in folgender Beziehung steht:

$$L = L_0 \bullet \sin^2 \delta/2$$

Die Phasenverschiebung $\delta$ ist abhängig von der Feldstärke E, der Länge 1 des Lichtweges zwischen den Kondensatorplatten und der Kerrkonstanten des Dielektrikums B gemäß der Beziehung

$$\delta = 2\pi \bullet B \bullet l \bullet E^2$$

Damit wird

$$L = L_0 \bullet \sin^2 (\pi \bullet B \bullet l \bullet E^2)$$

Um die Empfindlichkeit der Kerrzelle als Lichtrelais wesentlich zu erhöhen, ist es aus der DE 555 249-A bekannt, den Teilstrahlen des verwendeten polarisierten Lichtes außer der in der Kerrzelle erzeugten, spannungsabhängigen Phasenverschiebung noch eine weitere unveränderliche Phasenverschiebung zu erteilen. Zur Erzeugung der zusätzlichen Phasenverschiebung wird eine doppelt brechende Kristallplatte in den Lichtweg gebracht.

Bei Flüssigkeiten - wie Nitrobenzen - ist die gefundene Brechungsindex-Differenz sehr niedrig, selbst wenn Spannungen im Kilovolt-Bereich angelegt werden. Auf Grund des geringen Ausmaßes des lange bekannten Kerr-Effekts scheint die Herstellung aktiver optischer Elemente auf dessen Basis zunächst ausgeschlossen. So beträgt die Kerr-Konstante, die die Stärke des Kerr-Effektes quantifiziert, für Nitrobenzen (Zinth, W., Optik, Oldenbourg-Verlag, München, 2011) nur ca. 2,44 x $10^{-12}$ $mV^{-2}$.

Seit vielen Jahrzehnten wurden immer wieder Versuche angestellt, um Flüssigkeiten zu finden, die eine höhere Kerrkonstante als das bisher verwendete Nitrobenzen besitzen und dadurch den gleichen Effekt bei niedrigerer Steuerspannung ergeben. Beispielsweise ist aus der DE 622 368-A eine Kerrzellenflüssigkeit bekannt, bei der Doppel- oder Dreifachsubstitute des Benzolringes, die bei Zimmertemperatur in festem Aggregatzustand sind, in ein Lösemittel gebracht werden, dessen Kerrkonstante in der Größenordnung des Nitrobenzens liegt. Zweckmäßig wird dabei die Substitution mit Nitrogruppen ($-NO_2$) bevorzugt. Als Lösemittel werden gemäß der DE 622 368-A beispielsweise verwendet:

Nitrobenzen
meta Nitrotoluen
ortho Nitrotoluen

Als zu lösende Substanzen werden vorgeschlagen: ortho Dinitrobenzen, Nitroanilin (vorzugsweise para), para Nitrotoluen, ortho Chlornitrobenzen, 1-Chlor-2,3-Dintrobenzen, 1:2:3 Nitronaphthalin, Nitronaphthalin alpha, Dinitronaphthalin 1:8.

Weiterhin werden gegenwärtig Elemente eingesetzt, die auf Basis makroskopisch orientierter flüssigkristalliner Materialien basieren. Diese Systeme weisen jedoch den Nachteil auf, dass sie nur auf eine Polarisationsrichtung des Lichtes wirken, Licht mit der dazu senkrechten Polarisationsrichtung hingegen nahezu unbeeinflusst lassen. Aufgrund dieser Tatsache werden absorptive Polarisatoren mit solchen Elementen kombiniert. Dies führt aber notwendiger Weise zu einer Reduzierung der Lichtmenge auf weniger als 50%. Um diesen Nachteil zu beseitigen wurde vorgeschlagen zwei (oder mehr) baugleiche Elemente orthogonaler Orientierung miteinander zu kombinieren, was zu einem deutlich höheren Aufwand führt und zusätzliche Fehlerquellen durch räumliches Übersprechen, zu optischen Verlusten und zusätzlichen Problemen hinsichtlich der genauen Ausrichtung der Elemente zueinander bewirkt.

Weitere isotrope flüssigkristalline Zustände/LC Zustände sind streuende PDLC, wenig-streuende Nano-PDLC Systeme und isotrope polymerverstärkte Blaue LC Phasen. Diese sind durch hohe Schaltspannungen, die durch die Polymermatrix und Domänengrenzen verursacht werden, gekennzeichnet. Im Gegensatz zu reflektiven Elementen, wie LC Phasenmodulatoren, stört bei transmissiven Elementen die auftretende Reststreuung.

Bei isotropen Flüssigkeiten mit hoher Anisotropie des Dipolmomentes und stäbchenförmiger Molekülform können wesentlich größere Brechungsindex-Differenzen erzielt werden, so dass um Größenordnungen höhere Kerr-Konstanten gefunden werden. Dies wurde zum Beispiel für isotrope Phasen von Flüssigkristallen bei höheren Temperaturen bereits gezeigt.

Deutlich höhere Werte können in isotropen Schmelzen von Flüssigkristallen (J. Chem. Soc, Faraday Trans. 2, 1976, 72, 1447-1458 / DOI: 10.1039/F29767201447) knapp oberhalb der Klärtemperatur oder in polymerstabilisierten isotropen Flüssigkristallen (Appl. Phys. Lett. 98, 023502 (2011)/DOI: 10.1063/1.3533396) und polymerstabilisierten Blauen Phasen von Flüssigkristallen gemessen werden. Hier wurden Kerr-Konstanten von bis zu $300 \times 10^{-12}\ mV^{-2}$ gemessen.

Ein großer Nachteil des Kerr-Effektes in derartigen Systemen ist jedoch die sehr starke Temperaturabhängigkeit des Effektes, wie zum Beispiel für die isotrope Schmelze des Flüssigkristalls 5CB beschrieben wurde (Dunmur D. A. and Tomes A. E . , 1981, Mol. Cryst. Liq. Cryst. 76, 231). In polymerstabilisierten isotropen Flüssigkristallen konnte die Temperaturabhängigkeit verringert werden, jedoch nur für einen stark eingeschränkten Temperaturbereich (J. Phys. D: Appl. Phys. 42 (2009) 112002 / DOI: 10.1088/0022-3727/42/11/112002). Bei der Mehrzahl dieser Systeme erweisen sich die erforderlichen hohen Spannung und lange Schaltzeiten als ungünstig.

Um auf dem Gebiet der optischen Nachrichtenübertragung bzw. Kommunikation verbesserte elektro-optische Elemente in Kombination mit planaren Wellenleitern oder Lichtleitfasern zu schaffen, die bei Anwendungen geeignet ist, welche eine Modulation, Dämpfung, Polarisationssteuerung und ein Schalten von optischen Signalen erfordern, ist aus der WO 2004/046796-A1 eine Wellenleitervorrichtung bekannt, die einen optischen Wellenleiterkern und einen Mantel umfasst, welcher optisch an den optischen Wellenleiterkern gekoppelt ist. Der Mantel umfasst eine optisch funktionelle Zone mit einem Kerr-Effektmedium mit Definierung eines Brechungsindex, der so ausgebildet ist, dass er im Ansprechen auf ein Steuersignal variiert, welches an die optisch funktionelle Zone angelegt wird. Der Brechungsindex der optisch funktionellen Zone ist niedriger als der Brechungsindex des optischen Wellenleiterkerns bei der optischen Wellenlänge und der Temperatur im Betrieb der Vorrichtung. Der Mantel umfasst eine optisch funktionelle Zone, die durch ein ungepoltes im Wesentlichen isotropes oder im Wesentlichen anisotropes polymeres Mantelmaterial definiert ist. Insbesondere ist das Mantelmaterial eine polymere/chromophore Auskleidung, die durch eine chromophore Mobilität gekennzeichnet ist, welche ausreichend ist, um die optisch funktionelle Zone dazu zu befähigen, einen passiven Übergang zu erfahren und zwar von einem im wesentlichen orientierten Zustand in einen im wesentlichen isotropen Zustand in weniger als etwa einer Sekunde. Im Einzelnen enthält die polymere/chromophore Auskleidung wenigstens etwa 5 Gew.-% und etwa 20 Gew.-% an Chromophor und ist plastifiziert und das Kerr-Effekt-Medium enthält ein Polymer, ausgewählt aus Polycarbonat, Terpolymer, PMMA und Polycyclohexan. Vorzugsweise weist das Chromophor eine Donor-Komponente, eine Überbrückungskomponente mit einer konjugierten und/oder aromatischen Komponente und eine Akzeptor- Komponente auf. Im Einzelnen werden hierzu 12 verschiedene Strukturformeln des Kerr-Effekt-Mediums angegeben. Weiterhin ist ein Controller vorgesehen, der so konfiguriert ist, dass dieser die Betriebstemperatur der

Wellenleitervorrichtung steuert oder regelt. Das polymere Auskleidungsmedium ist gekennzeichnet durch eine effektive Glas-Übergangstemperatur, die niedriger liegt als die Betriebstemperatur der Vorrichtung. Dabei ist zu berücksichtigen, dass die effektive Glasübergangstemperatur eines Materials die Temperatur ist, bei der die Reorientierungsmobilität des Chromophors eine relativ große Zunahme als Funktion der Temperatur des Materials zeigt. Die effektive Glasübergangstemperatur eines elektrooptischen Materials kann anhand von Messungen des elektrooptischen Ansprechverhaltens des Materials als eine Funktion von dessen Temperatur bestimmt werden. Das Auskleidungsmedium weist einen akzeptablen Grad an chromophorer Mobilität und physikalischer Stabilität auf, indem entweder ein Plastifizierungsagens in das Auskleidungsmedium inkorporiert oder indem sicherstellt ist, dass die effektive Glasübergangstemperatur des Auskleidungsmediums niedriger liegt als die Betriebstemperatur der Vorrichtung. Im Detail sind die Auskleidungsmedien der WO 2004/046796 gekennzeichnet durch effektive Glasübergangstemperaturen unterhalb von ca. 120°C bis herab auf 20°C. Um eine ausreichende chromophore Mobilität zu erreichen ist ein Lösungsmittel in dem Auskleidungsmedium vorgesehen. In einem Fall eines polymeren Auskleidungsmediums, welches einen Chromophor und ein Basis-Polymer enthält, lösen geeignete Lösungsmittel sowohl das Chromophor als auch das Polymer auf. In vielen Fällen führt die Verwendung solcher Lösungsmittel zu geeigneten Betriebstemperaturen der Vorrichtungen bei oder nahe der Raumtemperatur. Mit Hilfe von Steuerelektroden wird in der optisch funktionellen Zone der Ummantelung ein elektrisches Feld E erzeugt. Alternativ kann das Steuersignal ein thermisches Signal bewirken, wobei die optisch funktionelle Zone der Ummantelung auf die Größe des thermischen Signals anspricht. In jedem Fall weist die Wellenleitervorrichtung einen geeigneten Controller auf, der so konfiguriert ist, um die optischen Eigenschaften von optisch funktionellen Abschnitten der optisch funktionellen Zone unabhängig voneinander zu ändern. Insbesondere induziert das Anlegen einer Steuerspannung an eine elektrooptische Polymer- Ummantelung oder -Beschichtung auch sukzessive Phasenverschiebungen $\Delta\phi$ in dem optischen Signal, es werden jedoch sukzessive Phasenverschiebungen mit gleichem Wert induziert und zwar mit progressiv kleineren Erhöhungen in der Steuerspannung V (E ungefähr $\sin^2 \phi$, worin gilt $\phi = BV^2$ ist). Daher nimmt im Falle der sukzessiven Phasenverschiebungen $\Delta\phi$ von 180° die Größe der sukzessiven Steuerspannungsinkremente $V\pi$, die zum Indizieren von sukzessiven Phasenverschiebungen von 180° erforderlich sind, ab und zwar mit Zunahme der Größe der Steuerspannung V. Um ein Mach-Zehnder-Interferometer (d.h. ein Strahlteiler mit zwei Armen zur Messung von Phasenverschiebungen oder zur Modulation von Licht durch gezielte Phasenmodulation in einem Arm des Interferometers bzw. zum wellenlängenabhängigen Demultiplexen) über eine 180°-Phasenverschiebung zu betreiben, werden bei der Wellenleitervorrichtung der WO 2004/046796-A1 etwa 340 Volt benötigt. Die nächste 180°-Phasenverschiebung bei etwa 520 Volt, wird jedoch durch lediglich Erhöhen der Treiberspannung um etwa 180 Volt erreicht (die Differenz zwischen 520 Volt und 340 Volt). Eine dritte 180°-Phasenverschiebung tritt bei etwa 610 Volt auf, einer Zunahme von lediglich etwa 90 Volt. Eine einfache Extrapolation führt zu dem Vorschlag, dass mit einer Vorspannung von etwa 3000 Volt, eine $V\pi$ -Treiberspannung von etwa 4 Volt erreicht werden kann. Durch Verbesserungen des polymeren Auskleidungsmedium oder Beschichtungsmediums und Verfeinerung der Elektrodenkonfiguration, die als Steuerelektroden verwendet wird, kann eine 180°-Phasenverschiebung erreicht werden kann und zwar mit Treiberspannungen von weniger als 5 Volt mit einer Vorspannung von etwa 1000 Volt.

Eine weitere technische Anwendung des elektro-optischen Kerr- oder Pockels-Effekts auf dem Gebiet der optischen Nachrichtenübertragung bzw. Kommunikation sind Gitter mit elektrisch einstellbarem Brechungsindex und elektrisch einstellbarer räumlicher Periodizität als Eingangs/Ausgangskoppler, Wellenleiter- Kopplungselement (-Interface), Modus-/Polarisations-Umwandler, Modus-/Polarisations-Filter, Ablenker bzw. Deflektoren, Reflektoren. Hierzu ist aus der EP 1 155 355 B1 ein Beugungsgitter mit einem elektrisch einstellbaren Brechungsindex und einer elektrisch einstellbaren räumlichen Frequenz bekannt, wobei das Gitter umfasst:

- ein Substrat;
- eine elektro-optische Struktur, die sich über das Substrat erstreckt, wobei die elektro-optische Struktur einen Wellenleiter mit einer Ausbreitungsachse umfasst;
- eine erste und eine zweite Elektrodenstruktur zum Erzeugen eines elektrischen Feldes dazwischen, wobei das elektrische Feld das Beugungsgitter in dem Wellenleiter induziert, wobei die erste und zweite Elektrodenstruktur auf gegenüberliegenden Seiten der elektro-optischen Struktur angeordnet sind und jede sich in einer Ebene parallel zu der Ausbreitungsachse des Wellenleiters erstreckt, wobei die erste Elektrodenstruktur einen ersten und einen zweiten Satz gefingert angeordneter Finger umfasst, wobei der erste Satz Finger unter einem Potential $V_0$ steht und der zweite Satz Finger unter einem Potential $V_0$ +¢ V steht, wobei $V_0$ zum Einstellen des Brechungsindexes des Beugungsgitters variabel ist und zum Schalten der räumlichen Periodizität des Gitters zwischen diskreten Werten variabel ist.

Alternativ umfasst zum Verändern von extern darauf einfallendem Licht das Beugungsgitter:

- ein Substrat;
- eine elektro-optische Struktur, die sich über das Substrat erstreckt;

- eine erste und eine zweite Elektrodenstruktur zum Erzeugen eines elektrischen Feldes dazwischen, wobei das elektrische Feld das Beugungsgitter in der elektrooptischen Struktur induziert, wobei die erste und zweite Elektrodenstruktur sich entlang übereinander angeordneter Ebenen parallel zueinander und zu der elektro-optischen Struktur erstrecken und auf gegenüberliegenden Seiten der elektro-optischen Struktur angeordnet sind, wobei die erste Elektrodenstruktur einen ersten und einen zweiten Satz von gefingert angeordneter Fingern umfasst, wobei der erste Satz Finger unter einem Potential $V_0$ ist und der zweite Satz Finger unter einem Potential $V_0$ +¢ V, wobei $V_0$ zum Einstellen des Brechungsindexes des Beugungsgitters variabel ist und zum Schalten der räumlichen Periodizität des Gitters zwischen diskreten Werten variabel ist.

In Einzelnen kann das Beugungsgitter der EP 1 155 355 B1 so ausgebildet sein, dass es als ein Bragg-Filter wirkt oder das Gitter kann zum kollinearen Gegenrichtungskoppeln für eine Reflektorfunktion verwendet werden, wobei es als ein aktiver optischer Filter für verteilte Rückkoppel- (DFB, distributed feedback) bzw. verteilte Bragg Reflektions- (DBR, distributed Bragg reflection) Laser dient. Andere Ausführungsformen beziehen sich auf Anwendungen in Multiplexsystemen zur Wellenlängenteilung (WDM, wavelength division Multiplexing) für faseroptische Kommunikation. Das Gitter kann alleine oder in Kombination mit anderen elektro-optischen Komponenten zum Bilden integrierter Strukturen eingesetzt werden. Das Gitter umfasst eine elektro-optische Struktur, beispielsweise ein aus einem Material wie $LiNbO_3$ oder einem elektro-optischen Polymer gebildeter, elektro-optischer Stab mit vorzugsweise eine Dicke von annähernd 0,5 bis 2 $\mu$m und eine Breite von etwa 5 $\mu$m, der sich über ein Substrat erstreckt. Erste und zweite Elektrodenstrukturen sind auf gegenüberliegenden Seiten der elektro-optischen Struktur parallel zu der Ausbreitungsrichtung bereitgestellt. Die ersten und zweiten Elektrodenstrukturen mit insbesondere kammähnlicher Form werden verschiedenen Potentialen unterworfen, um dazwischen ein elektrisches Feld und damit die Periodizität aufgrund des resultierenden elektrischen Feldes zu erzeugen. Moderne Herstellungstechnologien im Nanobereich machen gefingerte Elektrodenstrukturen mit Submikronfingerabständen möglich. Die gefingerten Elektroden werden aus einem durchsichtigen leitfähigen Material sowie Indium-Zinn-Oxid (ITO) mit beispielsweise einer Breite a = 105 $\mu$m und ITO Dicke von 0,1 $\mu$m hergestellt. Die Abstände zwischen dem Wellenleiter und den Elektrodenfingern werden mit Pufferschichten aus einem dielektrischen Material, wie $SiO_2$, gefüllt, das einen Brechungsindex niedriger als der Brechungsindex des Wellenleiters aufweist. Diese Pufferschichten bilden die Mantelschicht eines innerhalb des elektrooptischen Stabs gebildeten Wellenleiters und schützen die geführte Welle vor den verlustbehafteten Wechselwirkungen mit den Elektroden.

Weiterhin ist auf dem technischen Gebiet des Stereofernsehens die Ausnutzung des elektro-optischen Kerr-Effekt in Verbindung mit prismatische Brillengläser einer polarisierenden Brille aus der DE 28 28 910-A1 bekannt. Hierzu ist eine Polarisierungsvorrichtung so angeordnet und bemessen, dass sie sich über die gesamte Oberfläche des Bildschirmes eines Fernsehgeräts erstreckt, wobei deren Polarisationsebene zur wahlweisen Ausrichtung auf die Polarisationsebene der linken Linse oder der rechten Linse der polarisierenden Brille des Betrachters drehbar ist. Die Drehung der Polarisationsebene der Polarisierungsvorrichtung wird vorzugsweise durch eine Kerr-Effekt-Zelle erreicht, die aus einem optisch aktiven Material besteht, das die Polarisationsebene des durchgehenden polarisierten Lichtes in Abhängigkeit von einer an entgegengesetzten Elektroden der Zelle von einer Steuerspannungsquelle angelegten Spannung dreht. Dabei ist es möglich, die Rolle der linken oder rechten Linse zu vertauschen, wobei in einem Zustand der Polarisierungsvorrichtung die linke Linse das die Polarisationsvorrichtung durchlaufendes Licht überträgt, während die rechte Linse als Dunkelfilter wirkt, und im anderen Zustand der Vorrichtung die Linsen die Polarisationsvorrichtung durchlaufendes Licht sperren bzw. übertragen. Weiterhin kann nach Wahl des Betrachters die linke Linse oder die rechte Linse so gewählt werden, dass sie als Dunkelfilter wirkt, so dass es möglich ist, das Bild nach Wunsch dem Betrachter näher oder entfernter erscheinen zu lassen. Die Steuerspannungsquelle kann die erwähnte Spannung in Abhängigkeit von einem Befehlssignal liefern, das zusammen mit einem Fernsehsignal (im Falle einer Fernsehsignalwiedergabe) oder in Abhängigkeit von einem auf einem Film aufgezeichneten Signal (im Falle einer Filmwiedergabe) liefern kann. Die Kerr-Effekt-Zelle kann aus PLZT (polykristallinem Lanthan dotiertem modifiziertem Bleizirkonattitanat) oder anderen bekannten ferroelektrischen Keramikmaterialien hergestellt sein.

Ein weiterer Anwendungsfall für polarisationsfreie, elektrisch einstellbare bzw. schaltbare optische Linsen sind Sehhilfen und schaltbare Vergrößerungssysteme (Teleskop-Brillen). Klassische Sehhilfen einschließlich bifokaler Systeme werden in zunehmendem Maß mit zusätzlichen Funktionen ausgestattet. Ein ganz wesentlicher Aspekt ist die Entwicklung aktiver, d.h. intelligenter bzw. schaltbarerer oder einstellbarer optischer Systeme. Aktuell wird diese Entwicklung auch durch die Entwicklung von "Head Mounted Displays (HMD) und durch LC Systeme für das sich rasant entwickelnden Feld der "Augmented Reality" beeinflusst (AR ist eine Technologie, bei der Bilder der realen Welt mit Computer generierten Informationen kombiniert werden, so dass Bilder der realen Welt mit virtuellen Informationen ergänzt werden). Grundlage dieser Entwicklung sind LCD-basierte Mikrodisplays. In modifizierter Form kann diese Technologie auch andere Bereiche der Optik revolutionieren und zur Ablösung klassischer refraktiver Elemente wie Linsen, Prismen und anderer passiver Elemente führen.

Unter den beiden Aspekten individualisierbarer bzw. einstellbarer Linsen und erweiterter Funktionalität ist beispielsweise aus der EP 1 463 970 B1 eine binokulare elektronische Brille mit einem Brillengestell bekannt, deren Rahmen

als staubdichtes geschlossenes Gehäuse, an welchem die Bügel angefügt wurde, ausgestaltet ist und welche mindestens eine im Gehäuse angeordnete elektronische Videokamera, ein Objektiv, deren Linsen nach vorne schauen, und einen CCD-Sensor aufweist. Im Einzelnen ist ein motorisch verstellbares, frontseitig angeordnetes Linsensystem mit Linsen aus Kunststoff und mit Führungsmittel zur Einstellung durch Verbiegung und/oder Drehung der einzelnen Linsen, welches mit der elektronischen Kamera in Verbindung steht vorgesehen. Mit dem Linsensystem und der Kamera ist eine elektrische Steuereinrichtung verbunden und mit dieser ein Speicher, welcher die manuellen Voreinstellwerte für beiden Augen als Sollwerte zur Anpassung für die automatische Korrektur von Fehlsichtigkeit und Augenabstand während des Betriebs aufweist. Die Korrektur von Sehfehler erfolgt durch Einstellung der Brechkraft der Linsen und/oder Fokussierung einschließlich einer automatischen Einstellung auf Lese- oder Arbeitsdistanz, wobei eine kontrastgesteuerte Fokussierung vorgenommen wird, indem die Steuereinrichtung so ausgelegt ist, dass permanent eine kontrastgesteuerte Fokussierung eingestellt wird. Das Linsensystem besteht aus vier Linsen und der Vergrößerungsbereich liegt zwischen 2,5-fach und 10-fach. Die Steuereinrichtung dient zur Motorensteuerung und zur Erhöhung der Einstellgeschwindigkeit ist an der Abtriebsseite des Motors ein Getriebe angeordnet. Zur Energieversorgung ist im Brillengestell ein Akkumulator angeordnet und am Brillengestell ist eine Anzeige für den Ladezustand des Akkumulators vorgesehen. Weiterhin ist eine mit der Kamera in Verbindung stehende Schnittstellenschaltung für den Anschluss von Aufzeichnungsmitteln vorgesehen. Ferner ist im Bereich der Bügel ein Rundfunkempfänger und/oder ein Rufempfänger angeordnet, welche mit der Anzeige verbunden sind. Vor der ersten Benutzung des Brillensystems stellt der Brillenträger den Augenabstand und bei Fehlsichtigkeit seine Dioptrien-Werte ein. Die Konfigurationen werden im System gespeichert und dienen als Basis für alle weiteren, nun automatisch gesteuerten Prozesse. Bis zur Scharfstellung für das Zoomen zwischen dem Leseabstand von ca. 25cm und der Fokussierung bis ins Unendliche vergehen lediglich Sekunden. Das mechanische Linsensystem ist in der Lage, Objekte auf das 2.4-fache stufenlos heran zu zoomen. Die Objekte werden automatisch scharf abgebildet - unabhängig von der Stufe des Zooms, der sich per Knopfdruck einstellen lässt (in Analogie zur Digitalkamera). Diese Autofokus-Brille funktioniert mit einem mechatronischen Zusammenspiel aus chipgesteuerter Kamera, Motor, und speziellen oberflächenbehandelten Linsen. Weitere Zusatzfunktionen können eine Memory-Taste, Mikrofon, Sprachsteuerung, Lautsprecher im Bügel, externe Akkupacks, Speicher zur Langzeitaufzeichnung von Video und Audio sowie ein Spotlight sein.

Eine wichtige optische Funktion einer solchen Multifunktionsbrille stellt das Vergrößerungssystem dar. Herkömmliche Teleskopbrillen nutzen ein Linsensystem zur Vergrößerung betrachteter Objekte, dass im unteren Bereich der Brille befestigt ist. Kennzeichnend für diese Teleskopbrillen ist das fixierte Vergrößerungssystem, dass nur ein eher eingeschränkter Bereich des gesamten Sichtfeldes nutzen lässt. Generell kommt bei Vergrößerungssystemen je nach Anforderung ein Kepler- oder ein Galileisches System zum Einsatz: Galilei-Systeme gestatten direkt die Realisierung einer aufrechten und seitenrichtigen Vergrößerung, wogegen sich Keplersche Systeme durch größere Sichtfelder auszeichnen. Beim Kepler Teleskop wird jedoch ein spiegelverkehrtes Bild erzeugt, dass ggf. durch zusätzliche optische Elemente (Prisma oder Linse) umgewandelt wird. Ist die Bautiefe des Vergrößerungssystems kritisch, so ist das Galilei-Teleskop vorzuziehen.

Die bisher genutzten Prinzipien zur Entwicklung einstellbarer optischer Elemente, insbesondere von Linsen, basieren auf elastischen Membranen in Kombination mit geeigneten Fluiden, dem Electrowetting-Prinzip von Flüssiglinsen oder auf der elektrisch induzierten Umorientierung von Flüssigkristallen. Bei Elastomer-Membranen wird in eine Kaverne, die durch eine dünne Elastomer-Folie gebildet wird, eine Flüssigkeit gepumpt bzw. diese in ein Reservoir entlassen, um eine Krümmungsänderung der Membran zu bewirken. Membranlinsen können auch in Mikroskop-Systeme integriert werden (siehe Biomed. Opt. Express 5(2), 645-652 (2014) oder Biomed. Opt. Express 5(6), 1877-1885 (2014)). Diese mechanische Lösung weist aber nur moderate Schaltzeiten auf, da die Membran-Kaverne beim Schaltvorgang mit Flüssigkeit gefüllt oder geleert werden muss. Darüber hinaus ist die Stabilität der Elastomer-Membran bei einer hohen Zahl von Schaltzyklen zu prüfen. Außerdem ist die Periphere der Membran-Linsen durch Reservoir, Pumpen und Motoren relativ voluminös. Auf Basis von Membranlinsen wurden auch einstellbare Sehhilfen auf den Markt gebracht, bei denen der Pumpvorgang manuell ausgeführt wird. Derartige Systeme sind naturgemäß sehr langsam. Eine Alternative zu den Membran-Linsen stellen Flüssiglinsen dar, die auf dem Prinzip des Electrowettings beruhen. Einsatzgebiete dieser steuerbaren optischen Autofokus-Flüssiglinsen sind Smartphones, Webcams und andere Anwendungen.

Der Bereich der tunebaren Brechkraft der Linsen ist recht groß und reicht von -12 bis 12 Dioptrien, die Schaltzeiten sind mit 20ms schnell genug für eine Reihe von Anwendungen, jedoch nicht ausreichend für hohe Taktraten im machine vision Bereich. Für Anwendungen in optischen Fokussierelementen im Bereich machine vision gelten jedoch andere Anforderungen hinsichtlich Apertur, Geschwindigkeit und Auflösung. Stand der Technik zur Fokussierung im industriellen Bereich ist die mechanische Fokussierung der Objektive. Das stößt an seine Grenzen wegen der zu bewegenden Massen (Geschwindigkeit) sowie hinsichtlich der Langzeitstabilität (Verschleiß der mechanischen Elemente). Ein Nachteil dieser Lösung besteht auch darin, dass der spannungslose Zustand optisch nicht neutral ist, sondern eine Zerstreuungslinse darstellt. Außerdem ist die freie Apertur im Verhältnis zum Gesamtdurchmesser des Linsenelements beschränkt, so dass die ringförmige Versorgungseinheit das Linsenelement dominiert, insbesondere bei Anwendungen am Kopf.

Sowohl Elemente auf Basis des Electrowetting-Prinzips als auch Membran-Linsen sind demnach aufgrund ihrer Bauform mit voluminösen Versorgungseinrichtungen und durch ihr Gewicht für Hybrid-Optiken und auch für Sehhilfen oder Teleskop-Brillen wenig geeignet.

Schaltbare Linsen auf Basis von Flüssigkristallen (LC - Liquid Crystal) zeigen diese Nachteile nicht. Eine schaltbare Bifokalbrille auf Flüssigkristall-Basis basiert in der Regel auf der feldinduzierten Änderung der Orientierung einer dünnen Flüssigkristall-Schicht innerhalb einer klassischen refraktiven Linse. Durch den Brechungsindexkontrast wird im geschalteten Zustand ein zusätzliches Linsenelement aktiviert, das eine scharfe Nahsicht ermöglichen soll. Im ausgeschalteten Zustand ist dieses Linsen-Element nicht aktiv und die scharfe Fernsicht wird von der refraktiven Linse gewährleistet. Die Schaltung zwischen den Zuständen kann manuell oder durch einen Neigungsdetektor erfolgen.

Für die Anwendungen in Webcams oder Kameras in Mobiltelefonen kommt man mit Linsen von nur wenigen Millimetern Durchmesser aus, was das technische Problem sehr vereinfacht. Einschränkungen sind hier die starke Polarisationsabhängigkeit des genutzten Effektes, welcher entweder die Lichtausbeute durch den Einsatz von zusätzlichen Polarisatoren reduziert oder der Aufbau der Elemente wird durch die alternative orthogonale Kombination zweier Elemente deutlich aufwändiger und birgt zusätzliche Fehlerquellen in der Herstellung. Der Vorteil LC basierter Linsen besteht darin, dass mit ihrer Hilfe z.B. Teleskopsysteme oder Fokussiereinrichtungen realisiert werden können, die vollkommen ohne mechanische Elemente auskommen und somit eine robuste und wartungsfreie Optik ermöglichen und außerdem zu einer Reduktion von Bautiefe und Gewicht führen.

Bei refraktiven Linsen ist die mögliche Brechkraft generell durch den Krümmungsradius der Phasengrenze zwischen optisch dichterem und dünnerem Medium und den Brechungsindexhub bestimmt. Ähnliches gilt auch für GRIN-Linsen (Gradienten-Index), als solche sind auch plane Flüssigkristall-Linsen zu betrachten. Hier sind der radiale Brechungsindexhub, vom Zentrum zum Randbereich, in Verbindung mit dem Durchmesser die bestimmenden Größen. Bei allen dieser Linsentypen gilt: Der geforderte Durchmesser der Linse beschränkt die zu erzielende Brechkraft, wenn die Schichtdicke des Mediums konstant bleiben soll. Soll bei einer bestimmten Brechkraft der Durchmesser der Linse erhöht werden, muss auch die Schichtdicke erhöht werden. Dies führt jedoch bei Flüssigkristall-Linsen zu einer quadratischen Zunahme der nötigen Schaltspannungen bei einer gleichzeitigen Abnahme der Schaltgeschwindigkeit.

Diese Beschränkungen lassen sich nur durch Beugungslinsen, bzw. genauer Phasen-Zonenplatten überwinden. Im Gegensatz zu Fresnel-Zonenplatten, die auf einer Amplitudenmodulation beruhen, nutzen Phasen-Zonenplatten eine Phasenverschiebung von der Hälfte der Wellenlänge aus, um die Linsenfunktion zu erzielen. Deswegen ist bei ihnen auch die Lichtausbeute erheblich höher, da das gesamte einfallende Licht genutzt wird, statt wie bei den Amplituden-Zonenplatten nur die Hälfte. Zusätzlich kann durch die Ausführung als Gabor-Hologramm (sinusförmiger statt binärer Übergang der Zonen) die typische Periodizität der Fokuslänge auf eine bestimmte Fokuslänge reduziert werden.

Konventionelle starre optische Elemente aus anorganischen Materialien, wie beispielsweise Linsen aus Glas oder kristalline Strahlteiler, werden zunehmend durch organische Materialien ersetzt. Erstere haben zwar den Vorteil exzellenter optischer Eigenschaften und hoher Stabilität, sind aber voluminös und durch eine aufwendige Herstellungstechnologie gekennzeichnet. Organische Materialien sind wesentlich leichter zu ver- und bearbeiten, insbesondere zu strukturieren (Spritzguss, Drucken, Nanoimprinting, 3D Druck, Laserstrukturierung). Ein weiterer ganz wesentlicher Vorteil besteht darin, dass viele organische Materialien auf externe Stimuli, wie Licht, elektrische Spannung, Temperatur, usw. reagieren und dadurch ihre physikalischen Eigenschaften permanent oder reversibel ändern. Die spannungsinduzierte Umorientierung von Flüssigkristallen in LCDs ist dafür das prominenteste Beispiel für die Nutzung elektrisch schalt- und einstellbarer optischer Elemente auf der Grundlage elektro-optischer Orientierungseffekte von Flüssigkristallen. Spannungsinduzierte Dicken- bzw. Längenänderungen von Elastomeren, nutzbar in Aktoren oder tunebaren Gittern, sind ein weiteres Beispiel. Damit werden aktive optische Systeme bzw. intelligente Systeme möglich, die gezielt einstellbar sind bzw. auf äußere Bedingungen aktiv reagieren.

Das Problem der Polarisationsabhängigkeit hingegen könnte durch spezifische LC-Systeme behoben werden, die makroskopisch in Durchstrahlungsrichtung isotrop sind. Dies trifft z.B. auf PDLC Systeme (Polymer Dispersed Liquid Crystal) oder polymerstabilisierte Flüssigkristalle mit Blauen Phasen (isotrope LC Phase mit komplexer 3D Struktur) zu. Aufgrund von erhöhten Wechselwirkungen mit den Polymerwänden sind jedoch hohe Schaltspannungen erforderlich. Zusätzlich dazu tritt, verursacht durch die Phasenseparation, eine erhöhte Streuung des transmittierten Lichts auf, was die Eignung dieser Basislösungen für abbildende optische Systeme erheblich einschränkt. Intensiv wird auch an Konzepten zur Reduzierung der Schaltzeiten gearbeitet, wobei diese derzeit mit nennenswertem Schalthub im Stand der Technik aber auf den sub-ms-Bereich begrenzt sind.

Die spannungsinduzierte Orientierung polarer Moleküle in Flüssigkeiten ist seit langem als optischer Kerr-Effekt bekannt. Die Kerr-Konstanten konventioneller Flüssigkeiten wie z.B. Nitrobenzen oder Schwefelkohlenstoff sind jedoch für die Anwendung in Linsen um Größenordnungen zu niedrig und die Schaltspannung um Größenordnung zu hoch.

Deutlich höhere Kerr-Konstanten werden in isotropen Flüssigkristallphasen beobachtet. Die Schaltzeiten liegen im einstelligen ms-Bereich oder darunter. Einige dieser Probleme flüssigkristalliner Systeme und konventioneller Kerr-Flüssigkeiten können in isotropen Schmelzen eines Flüssigkristalls und denen von Flüssigkristallmischungen in ihrer isotropen Phase oberhalb des Klärpunkts überwunden werden. Dabei werden Vororientierungseffekte der Flüssigkristalle

in isotropen Schmelzen kurz oberhalb des Klärpunktes ausgenutzt. Dies führt zu polarisationsfreien, schnell schaltenden und genügend effizienten Kerr-Systemen. Ein ganz wesentlicher Nachteil ist jedoch die extrem starke Temperaturabhängigkeit des Effektes kurz oberhalb des Klärpunktes. Zusammenfassend weisen alle Varianten auf Basis des Electrowetting-Prinzips, der flüssigkristallinen/LC-Orientierung oder der Membranfluidik in den optischen oder geometrischen Parametern erhebliche Einschränkungen auf.

Wie die vorstehende Würdigung des Standes der Technik aufzeigt, sind unterschiedlich ausgestaltete Vorrichtungen unter Ausnutzung des elektro-optischen Kerr-Effekts, insbesondere zur Modulation des Lichtes bekannt. Für eine breite industrielle Anwendung ist die sehr starke Temperaturabhängigkeit des Effektes in Verbindung mit hohen Betriebsspannungen nachteilig.

Hierzu ist aus der nicht vorveröffentlichten Deutschen Patentanmeldung 10 2015 015 436.2 A1 oder der nicht vorveröffentlichten WO 2017/092877 A1 der Anmelderin ein elektrisch steuerbares optisches Element aus einer optisch isotropen Flüssigkeit, insbesondere Linse, und ein Verfahren zu dessen Herstellung auf Basis flüssiger Komposite bekannt. Im Einzelnen weist eine Kerr-Mischung eine Mischung aus dipolaren, stäbchenförmigen Molekülen und Semi-Mesogenen als aktive Komponenten auf. Die Kerr-Mischung bildet eine dünne Schicht mit einem durch Photopolymerisation hergestellten, weitmaschigen, anisotropen Netzwerk zwischen auf einem Substrat aufgebrachten strukturierten oder / und flächigen leitfähigen Schicht in einer Dünnschichtzelle aus, derart, dass entsprechend dem elektro-optischen Kerr-Effekt der Zustand der aktiven Komposite aus Semi-Mesogene und dipolare, stäbchenförmige Moleküle der Kerr-Mischung ohne elektrisches Feld im Arbeitstemperaturbereich isotrop ist und durch elektrisch kontinuierliche Einstellung der Spannung U oder durch Anlegen einer konstanten Spannung eine Veränderung des spannungsinduzierten Phasenhubs oder Brechungsindexhubes im optischen Element erzeugt wird. Im Einzelnen weist die Dünnschichtzelle zwei Glas- oder Polymersubstrate auf, deren innere Oberfläche jeweils mit einer leitfähigen ITO-Elektrode als leitfähige Schicht und diese mit einer Orientierungsschicht versehen ist. Die Herstellung eines weitmaschigen, anisotropen Polymernetzwerks in der abgekühlten Kerr-Mischung erfolgt mittels beigemischter Photoinitiatoren, aliphatischer Monomere und reaktiver Mesogene, und UV-Bestrahlung, wobei bei Anlegen einer Spannung U ein Ausrichten der stäbchenförmigen Moleküle entlang der Feldlinien erfolgt. Dies weist den Vorteil auf, dass auf überraschende Art und Weise die Stärke der dielektrischen Anisotropie nicht herabsetzt wird, wenn in etwa eine Hälfte des Molekülgerüstes der Semi-Mesogene mesogen ausgestaltet wird und ca. die andere Hälfte des Molekülgerüstes nicht-mesogen ist, wobei die Abweichung von der stäbchenförmigen Struktur nicht die ausgeprägten Wechselwirkungen mit den mesogenen Bestandteilen der Komposite unterdrückt. Weiterhin enthält die zu einer homöotropen Orientierung führende Orientierungsschicht vernetzbare oder polymersierbare Gruppen. Das anisotrope Netzwerk ist vorzugsweise kovalent an die beiden Substratgrenzflächen fixiert, wodurch die Langzeitstabilität des Netzwerks in seiner anisotropen Form auch bei der Isotropisierung der Kerrflüssigkeit durch Temperaturerhöhung in den Arbeitstemperaturbereich langzeitstabil erhalten bleibt. Dies weist den Vorteil auf, dass auf überraschende Art und Weise unterhalb des Arbeitstemperaturbereiches die Wirkung der Aligninglayer eine homöotrope Orientierung aus (d.h. die Moleküle richten sich senkrecht zu den Substraten) verstärkt und das Netzwerk in der Dünnschichtzelle an die beiden Substratgrenzflächen fixiert ist.

Das Verfahren gemäß der nicht vorveröffentlichten DE 10 2015 015 436.2 A1 oder der nicht vorveröffentlichten WO 2017/092877 A1 der Anmelderin zur Herstellung eines elektrisch steuerbaren optischen Elements mit einer mit Kerr -Mischung gefüllten Zelle mit zwei Substraten und einer auf die innere Oberfläche des jeweiligen Substrats aufgebrachten leitfähigen Schicht ist dadurch gekennzeichnet, dass:

a) die Kerr-Mischung eine Mischung aus dipolaren, stäbchenförmigen Molekülen und Semi-Mesogenen als aktive Komponenten, reaktiven Mesogenen, Photoinitiatoren und aliphatische Monomere aufweist,
b) die Kerr-Mischung in eine Dünnschichtzelle gefüllt wird,
c) die Kerr-Mischung auf eine tiefere Temperatur T als Raumtemperatur RT abgekühlt wird, bei der sich eine flüssigkristalline Phase mit einer homöotropen Orientierung ausbildet, und
d) durch eine UV-Bestrahlung der homöotrop orientierten Schichten Radikale erzeugt werden, die eine Polymerisation der orientierten reaktiven Mesogenen bewirken, derart, dass ein weitmaschiges, loses anisotropes Netzwerk aus mit den aliphatischen Monomeren vernetzten reaktiven Mesogenen in der Kerr-Mischung entsteht.

Der Erfindung liegt die Aufgabe zugrunde, ein elektrisch steuerbares optisches Element derart auszugestalten bzw. herzustellen, dass basierend auf dem elektro-optischen Kerr-Effekt eine niedrige Schwellen- und Betriebsspannung, eine minimierte Temperaturabhängigkeit des Effekte und eine niedrige Ansprechzeit erreicht wird. Insbesondere soll bei der Dünnschichtzelle gemäß der nicht vorveröffentlichten DE 10 2015 015 436.2 A1 oder der nicht vorveröffentlichten WO 2017/092877 A1 der Anmelderin eine Linsenwirkung realisierbar sein.

Diese Aufgabe wird bei einem elektrisch steuerbaren optischen Element, gemäß dem Oberbegriff des Patentanspruchs 1, dadurch gelöst, dass ein optisch wirksames Oberflächenprofil auf der inneren Oberfläche eines Substrates oder in das Substrat oder beider Substrate eingearbeitet ist.

Weiterhin wird diese Aufgabe bei einem Verfahren zur Herstellung eines elektrisch steuerbaren optischen

Elements mit einer mit einer Ausgangsmischung gefüllten Zelle mit zwei Substraten und einer auf die innere Oberfläche des jeweiligen Substrats aufgebrachten leitfähigen Schicht gemäß Patentanspruch 12, dadurch gelöst, dass

a) die Ausgangsmischung eine Mischung aus dipolaren, stäbchenförmigen Molekülen und Semi-Mesogenen als aktive Komposite, reaktive Mesogenen, Photoinitiatoren und aliphatischen Monomere aufweist,
b) die Ausgangsmischung in eine als Dünnschichtzelle gefüllt wird,
c) die Ausgangsmischung auf eine tiefere Temperatur T als Raumtemperatur RT abgekühlt wird, bei der sich eine flüssigkristalline Phase mit einer homöotropen Orientierung ausbildet,
d) durch eine UV-Bestrahlung der homöotrop orientierten Schichten Radikale erzeugt werden, die eine Polymerisation der orientierten reaktiven Mesogene bewirken, derart, dass ein weitmaschiges, loses anisotropes Netzwerk aus mit den aliphatischen Monomeren vernetzten reaktiven Mesogenen in der Ausgangsmischung entsteht, und
e) ein optisch wirksames Oberflächenprofil auf der inneren Oberfläche eines Substrates oder in das Substrat oder beider Substrate eingearbeitet wird,

so dass ohne Spannung U im Arbeitstemperaturbereich RT das Komposit aus stäbchenförmigen Molekülen mit großem Dipolmoment und Semi-Mesogenen wieder isotrop ist und bei Anlegen der Spannung U sich die Moleküle des Komposits in Richtung der E-Feldlinien orientieren.

Bei der vorliegenden Erfindung wird der elektro-optische Kerr-Effekt (siehe auch das Internet-Lexikon Wikipedia, https://de.wikipedia.org/wiki/Kerr-Effekt) in isotropen Flüssigkeiten genutzt. Demnach handelt es sich nicht um flüssigkristalline Zustände. Insbesondere wird beim erfindungsgemäßen optischen Element eine Verstärkung des optischen Kerr-Effekts durch Selbstorganisation auf der Basis eines vorprägbaren, weitmaschigen, losen anisotropen Netzwerks bewirkt. Somit können auf überraschende Art und Weise durch die Verwendung der erfindungsgemäßen Komposite und die erfindungsgemäße Herstellungstechnologie, die zu spezifischen Zellkonfigurationen in der in der nicht vorveröffentlichten DE 10 2015 015 436.2 A1 oder der nicht vorveröffentlichten WO 2017/092877 A1 der Anmelderin beschriebenen Dünnschichtzelle führt, die Nachteile des klassischen Kerr-Effekts behoben werden. Der Zustand der aktiven Komposite ist ohne elektrisches Feld im Arbeitstemperaturbereich isotrop. Es existieren keine Domänen oder Mikrodomänen von geordneten Molekülen, die zur Streuung führen könnten. Insbesondere können zusätzlich stabilisierte Mesogen-Cluster oder geordnete Nanopartikel starrer stäbchenförmiger Moleküle oder reaktiver Mesogene als Bestandteil einer Ausgangsmischung eingesetzt werden, um weiterhin den Kerr-Effekt zu erhöhen und die Temperaturabhängigkeit des Effektes zu minimieren. Das gesamte Komposit verbleibt im flüssigen, isotropen Zustand, wenn keine Spannung anliegt.

Die darauf basierenden optischen Dünnschichtelemente sind elektrisch kontinuierlich einstellbar oder alternativ zwischen definierten Zuständen schaltbare Phasenmodulatoren, Linsen und Sehhilfen. Sie sind dadurch gekennzeichnet, dass sie optisch isotrop sind, d.h. dass sie polarisationsfrei und nicht-streuend sind. Sie werden mit elektro-optisch aktiven Kompositen realisiert, die sich in Transmissionsrichtung polarisationsfrei anwenden lassen und sind durch einen hohen elektrisch induzierbaren Phasenhub und / oder Brechungsindexhub gekennzeichnet. Insbesondere für den Anwendungsfall Sehhilfen liegt der Betriebsspannungsbereich der Spannung U zwischen 5V und 40V, vorzugsweise zwischen 5V und 25V.

Mittels dem in der nicht vorveröffentlichten DE 10 2015 015 436.2 A1 oder der nicht vorveröffentlichten WO 2017/092877 A1 der Anmelderin beschriebenen Verfahren werden polarisationsfreie, elektrisch schaltbare optische Elemente auf Basis von Dünnschichtzellen mit neuartigen elektro-aktiven Flüssigkeiten hergestellt, deren Orientierung durch die Wechselwirkung polarer, stäbchenförmiger Moleküle in anisotropen Polymernetzwerken verstärkt wird. Durch Moleküldesign und Verstärkung des Kerr-Effekts infolge Selbstorganisation werden deutlich höhere Brechzahlmodulationen bzw. Phasenhübe bei kurzen Schaltzeiten und geringer Spannung erreicht. Beispiele für elektrisch schaltbare bzw. einstellbare Linsen, insbesondere für Sehhilfen sind:

a) elektrisch schnell schaltbare optische Einzelelemente für Sehhilfen
b) tunebare, individuell einstellbare Sehhilfen
c) schaltbares Vergrößerungssystem für Teleskop-Brillen

In Weiterbildung der Erfindung sind, gemäß Patentanspruch 2, die Elektroden entweder unter dem Oberflächenprofil aufgebracht, in diesem integriert oder auf diesem angeordnet.

Weiterhin weist die Dünnschichtzelle zwei Glas- oder Polymersubstrate auf, deren innere Oberfläche jeweils mit einer leitfähigen ITO-Elektrode als leitfähige Schicht und diese mit einer Orientierungsschicht versehen ist und dass das Vorprägen eines weitmaschigen, anisotropen Polymernetzwerks in der abgekühlten Kerrflüssigkeit (Ausgangsmischung) mittels beigemischter Photoinitiatoren, aliphatischer Monomere und reaktiver Mesogene, und UV-Bestrahlung der erfolgt, wobei bei Anlegen einer Spannung U ein Ausrichten der stäbchenförmigen Moleküle entlang der Feldlinien erfolgt.

Dies weist den Vorteil auf, dass auf überraschende Art und Weise die Stärke der dielektrischen Anisotropie nicht herabsetzt wird, wenn in etwa eine Hälfte des Molekülgerüstes der Semi-Mesogene aus mesogenen Molekülfragmenten besteht und ca. die andere Hälfte des Molekülgerüstes nicht-mesogen ist, wobei die Abweichung von der stäbchenförmigen Struktur nicht die ausgeprägten Wechselwirkungen mit den mesogenen Bestandteilen der Komposite unterdrückt.

Weiterhin enthält die zu einer homöotropen Orientierung führende Orientierungsschicht vernetzbare bzw. polymersierbare Gruppen und das anisotrope Netzwerk ist vorzugsweise kovalent an die beiden Substratgrenzflächen fixiert, wodurch die Langzeitstabilität des Netzwerks in seiner anisotropen Form auch bei der Isotropisierung der Kerrflüssigkeit/ Ausgangsmischung durch Temperaturerhöhung in den Arbeitstemperaturbereich langzeitstabil erhalten bleibt.

Dies weist den Vorteil auf, dass auf überraschende Art und Weise unterhalb des Arbeitstemperaturbereiches die Wirkung der Aligninglayer eine homöotrope Orientierung aus (d.h. die Moleküle richten sich senkrecht zu den Substraten) verstärkt und das Netzwerk in der Dünnschichtzelle an den beiden Substratgrenzflächen bei tiefen Temperaturen, d.h. wo eine LC Phase vorliegt, fixiert ist. Im Arbeitstemperaturbereich ist das Komposit isotrop und der Aligninglayer unterstützt die Orientierung, bewirkt durch das elektrische Feld.

Weitere Vorteile und Einzelheiten lassen sich der nachfolgenden Beschreibung einer bevorzugten Ausführungsform der Erfindung unter Bezugnahme auf die Zeichnung entnehmen. In der Zeichnung zeigt:

| | |
|---|---|
| FIG. 1a - 1d | verschiedene Ausführungsformen für ein optisch wirksames Oberflächenprofil und Strukturierung der Elektroden bei einem elektrisch steuerbaren optischen Element gemäß der Erfindung, |
| FIG. 2 | eine bevorzugte Ausführungsform des elektrisch steuerbaren optischen Elements, links im Ausgangszustand rechts nach der photochemischen Herstellung des anisotropen Netzwerkes, |
| FIG. 3 | das optische Element nach FIG. 2 bei annähernder Raumtemperatur RT, links ohne Spannung U und rechts nach Anlegen der Spannung U, |
| FIG. 4 | die Zusammensetzung der isotropen Kerr-Komposite, |
| FIG. 5 | die Architektur einer bevorzugten Ausführungsform der Semi-Mesogene, |
| FIG. 6a, 6b | eine Ausführungsform zur Anbindung des anisotropen Netzwerkes an die Substrate und |
| FIG. 7 | ein Ausführungsbeispiel für den Bereich machine vision gemäß der Erfindung. |

Die FIG. 2 und FIG. 3 zeigen eine bevorzugte Ausführungsform des elektrisch steuerbaren optischen Elements, insbesondere zur Verdeutlichung des erfindungsgemäßen Kerr-Effekts isotroper Komposite einer Ausgangsmischung - nachfolgend Kerrflüssigkeit K genannt - auf Basis von Mischungen stäbchenförmiger Moleküle 5 und Semi-Mesogenen 4 in anisotropen Netzwerken 9 gemäß der in der nicht vorveröffentlichten DE 10 2015 015 436.2 A1 oder der nicht vorveröffentlichten WO 2017/092877 A1 der Anmelderin beschriebenen Dünnschichtzelle. Hervorzuheben ist, dass eine Kerrzelle anders aufgebaut ist; bei ihr durchtritt der Lichtstrahl den Elektrodenzwischenraum parallel zu den Elektroden, die typischerweise aus Metall sind und einen Abstand von 1cm haben. Bei der der in der nicht vorveröffentlichten DE 10 2015 015 436.2 A1 oder der nicht vorveröffentlichten WO 2017/092877 A1 der Anmelderin beschriebenen Dünnschichtzelle durchtritt das Licht den Elektrodenzwischenraum senkrecht zu den Elektroden (2a, 2b), die aus einem transparenten, leitfähigen Material wie ITO bestehen (Indium Tin Oxide) und einen Abstand von einigen $\mu$m haben. Weiterhin ist im Folgenden unter "isotrope Mischung" eine Mischung aus Flüssigkristallen und Semi-Mesogenen zu verstehen, die isotrop im Arbeitstemperaturbereich ist. Die Mischung vor der Generierung des Netzwerkes 9 (unter Beteiligung der Komponenten 4 bis 8) besteht aus der isotropen Mischung, reaktiven Mesogenen, aliphatischen Monomeren und einem Photoinitiator. Die Ausgangsmischung wird durch den Aufbau des anisotropen Netzwerkes durch insitu UV-Bestrahlung in das erfindungsgemäße Komposit überführt, wie dies in FIG. 2 bis 4 dargestellt wird.

Der in der nicht vorveröffentlichten DE 10 2015 015 436.2 A1 oder der nicht vorveröffentlichten WO 2017/092877 A1 der Anmelderin benutzte Begriff "Precursor Mischung" kann auch durch Ausgangsmischung ersetzt werden. Dabei handelt es sich um die Mischung stäbchenförmiger Moleküle 5 und Semi-Mesogene 4 sowie reaktiver Mesogene, Photoinitiatoren und aliphatischer Monomere. Durch UV-Belichtung dieser Ausgangsmischung erfolgt mittels Photopolymerisation der reaktiven Mesogene 8 und der aliphatischen Monomere 7 die Bildung des anisotropen Polymernetzwerkes 9.

Weiterhin ist in der nicht vorveröffentlichten DE 10 2015 015 436.2 A1 oder der nicht vorveröffentlichten WO 2017/092877 A1 der Anmelderin unter dem Begriff "vorprägen" die Herstellung eines weitmaschigen anisotropen Polymernetzwerkes 9 aus bifunktionalen reaktiven Mesogenen in homöotropen Ordnungszuständen zu verstehen. Die homöotrope Ausrichtung der mesogenen Einheiten des Netzwerkes 9 senkrecht zu den Substraten 1a, 1b bleibt auch bei Raumtemperatur (isotroper Zustand des Komposits/der Kerrflüssigkeit K) oder bei Abschalten der angelegten Spannung U erhalten. Das anisotrope Netzwerk 9 unterstützt die durch Anlegen einer Spannung U bewirkte Orientierung der aktiven Komponenten des Komposits, bestehend aus den stäbchenförmigen Molekülen 5 und den Semi-Mesogenen 4. Dies wird durch seine molekulare Struktur der Kettensegmente und der anisotropen 3D Struktur des Netzwerkes 9 im Kompositfilm (der Kerrflüssigkeit K) zwischen den beiden Substraten 1a, 1b bewirkt.

Weiterhin sind in der nicht vorveröffentlichten DE 10 2015 015 436.2 A1 oder der nicht vorveröffentlichten WO 2017/092877 A1 der Anmelderin unter dem Begriff "Mesogene" molekulare, formanisotrope Einheiten, die flüssigkristalline Phasen als einzelne Substanz, Mischungen oder als Bestandteil von Polymeren ausbilden zu verstehen. Sie bilden zwischen dem kristallinen Zustand und der isotropen Schmelze Mesophasen (flüssigkristallinen Phasen) aus, d.h. thermotrope Flüssigkristalle gehen vom Kristall durch Schmelzen nicht unmittelbar in eine isotrope Flüssigkeit über, sondern die formanisotrope Molekülstruktur bewirkt in Abhängigkeit von der Temperatur den schrittweisen Abbau der Orientierungs- und Positionsordnung (thermotrope Mesophasen). Der Begriff Mesogen wird auch als Synonym für Flüssigkristall (-Molekül) gebraucht.

Die thermischen und elektro-optischen Eigenschaften von Flüssigkristall-Mischungen, so auch Ordnung und Klärpunkt, können durch die Mischung unterschiedlicher Flüssigkristalle sehr genau eingestellt werden. Für die beanspruchte Lösung sind zur Ausbildung isotroper Schmelzen die Ordnung störende Substanzen notwendig, d.h. die veränderten zwischenmolekularen Wechselwirkungen bewirken eine sogenannte Klärpunktsdepression (Senkung des Klärpunktes, d.h. der Temperatur des Überganges von der flüssigkristallinen in die isotrope Phase).

Bei den in der nicht vorveröffentlichten DE 10 2015 015 436.2 A1 oder der nicht vorveröffentlichten WO 2017/092877 A1 der Anmelderin benutzten Begriffen "photoreaktive Semi-Mesogene" oder "photopolymerisierbare Semi-Mesogene" handelt es sich um die reaktiven Mesogene 8 der vorliegenden Anmeldung.

Dipolare, stäbchenförmige Moleküle 5mit hohen dielektrischer Anisotropie und hoher Kerr-Konstante sind an sich typische Eigenschaften für eine Vielzahl von stäbchenförmigen thermotropen Flüssigkristallen. Moleküle mit mehreren aromatischen Ringen in der Molekülachse liegen in der Regel als Kristall oder als Flüssigkristall vor. Die Struktur bedingt die Ausbildung kristalliner und/oder flüssigkristalliner Phasen. Für die Gegenstände gemäß der nicht vorveröffentlichten DE 10 2015 015 436 A1 der Anmelderin und der nicht vorveröffentlichten WO 2017/092877 A1 der Anmelderin ist die Eigenschaftskombination dipolar, stäbchenförmig, hohe dielektrische Anisotropie und hohe Kerr-Konstante entscheidend. Das können Flüssigkristalle sein, das ist aber keine notwendige Bedingung. Es erweist sich jedoch, dass Flüssigkristallinität der dipolaren, stäbchenförmigen Moleküle eine gute, praktikable Ausgangsposition mit einem großen Pool an Substanzen und Kenntnisse ihrer Eigenschaften ist. Derartige Moleküle bringen einen sehr hohen Beitrag zur Kerr-Konstante ein.

Die bei den Gegenständen gemäß der nicht vorveröffentlichten DE 10 2015 015 436 A1 der Anmelderin und der nicht vorveröffentlichten WO 2017/092877 A1 der Anmelderin benutzten Semi-Mesogene 4 sind dipolare, jedoch nicht-stäbchenförmige Moleküle mit hoher dielektrischer Anisotropie, hoher Kerr-Konstante und aber geringer Ordnungstendenz, so dass sie oberhalb des Schmelzpunktes zumeist als isotrope Flüssigkeiten vorliegen. Derartige Moleküle sind genau das Gegenteil, was bisher in der Flüssigkristall-Forschung z.B. für Anwendungen in Flüssigkristall-Displays und anderen elektro-optische Elementen entwickelt und beforscht wurde.

Erfindungsgemäß wurden derartige dipolare, nicht-stäbchenförmige Moleküle 4 bei ähnlicher Grundstruktur wie die dipolaren, stäbchenförmigen Moleküle 5 entwickelt (Grundsatz: Moleküle lösen sich in ähnlichen Molekülen am besten). Die geringe Ordnungstendenz wird durch voluminöse terminale und/oder laterale Substituenten, Abweichungen von der stäbchenförmigen Molekülgestalt, Kinken, geringeres Länge/Breite-Verhältnis u.a. erreicht. Erfindungsgemäß führt die geringe Ordnungstendenz dazu, dass in Mischungen mit Komponente 5 der Klärpunkt herabgesetzt wird (Klärpunktsdepression), so dass im Arbeitstemperaturbereich RT keine flüssigkristallinen Eigenschaften auftreten, sondern die Mischungen als isotrope Flüssigkeiten vorliegen.

Der Klärpunkt von Mischungen, d.h. der Phasenübergang flüssigkristalline / isotrope Flüssigkeit, der dipolaren, stäbchenförmigen Moleküle 5 wird durch den Zusatz von Semi-Mesogenen 4 erniedrigt, so dass im Arbeitstemperaturbereich eine isotrope Flüssigkeit vorliegt. Dafür wurden dipolare, nicht-stäbchenförmige Moleküle 4 mit unterdrückter Ordnungstendenz bzw. mit verborgenen Flüssigkristalleigenschaften (Flüssigkristallinität der Anfangsmischung treten ggf. erst bei deutlich tieferen Temperaturen auf) entwickelt, die als Semi-Mesogene 4 bezeichnet wurden. Der definierte Begriff steht für eine neue Klasse von Funktionsmaterialien, die in den erfindungsmäßig beanspruchten Mischungen unterschiedliche Funktionen einbringen. Der Begriff Semi-Mesogene 4 ist neu und charakterisiert die erfindungsgemäße Kombination von Eigenschaften der entwickelten Funktionsmoleküle treffend, d.h. fasst wesentliche Sachverhalte der Erfindung in einem Wort zusammen.

Mehr noch, die Semi-Mesogene 4 sind kein simples Lösungsmittel, wie Ethanol, Chloroform oder Benzen, sondern die erfindungsgemäßen Multifunktionsmoleküle 4 werden ebenfalls durch angelegte elektrische Felder orientiert und tragen durch Orientierung und dipolaren Charakter zum optischen Kerr-Effekt der Mischung bei. Konventionelle Lösungsmittel, wie die genannten, setzen dagegen den Kerr-Effekt im Gegensatz zu den Semi-Mesogenen 4 signifikant herab.

Die Struktur der Semi-Mesogene 4 ist auch für den Aufbau des anisotropen Netzwerkes 9 wichtig. So ist deren molekulare Struktur so ausgelegt,

a) dass die Ausgangsmischungen bei tiefen Temperaturen unterhalb des Arbeitstemperaturbereiches (T<RT) eine

homöotrop orientierte flüssigkristalline Phase ausbilden,

b) dass in Fällen, wo keine flüssigkristalline Phase bei tiefen Temperaturen auftritt, das anisotrope Netzwerk bei angelegter Orientierungsspannung mit Hilfe der ausgerichteten stäbchenförmigen Moleküle 5 und Semi-Mesogene 4 aufgebaut wird.

Die Konzentration der Semi-Mesogene 4 in den Mischungen sollte im Vergleich zu der der stäbchenförmigen Moleküle mit hoher dielektrischer Anisotropie und hoher Kerr-Konstante (Komponente 5) klein sein, um möglichst hohe Kerr-Konstanten der Mischungen zu erreichen. Die Konzentration der Semi-Mesogene 4 liegt im Bereich von 1-20 Ma%, vorzugsweise im Bereich von 3-5 Ma%.

Die erfindungsgemäßen Komposite der Ausgangsmischung/Kerrflüssigkeit K sind durch eine geeignete Kombination von stäbchenförmigen Molekülen 5 mit großem Dipolmoment, sowie nicht-stäbchenförmige, dipolare Semi-Mesogene 4, welche die Ausbildung geordneter Zustände wie z.B. von Flüssigkristall-Phasen verhindern, photovernetzbare mono-, bi- und trifunktionale Moleküle, insbesondere reaktive Mesogene 8, und Photoinitiatoren 6 gekennzeichnet. Photoinitiatoren sind chemische Verbindungen, die nach Absorption von (UV-) Licht in einer Photolysereaktion zerfallen und so reaktive Spezies bilden, die eine Reaktion starten (initiieren); in den erfindungsmäßigen Kerrflüssigkeiten insbesondere Polymerisationsreaktionen. Bei den reaktiven Spezies handelt es sich um Radikale oder um Kationen. Wobei weitere Bestandteile, wie Moleküle mit nicht-kovalenten Wechselwirkungen und fixierte Mesogen-Cluster die erwünschten Eigenschaften deutlich verbessern.

Die nicht stäbchenförmigen Moleküle, infolge Semi-Mesogen 4 genannt, zeichnen sich erfindungsgemäß dadurch aus, dass ein Teil des Molekülgerüstes, vorzugsweise circa die Hälfte, stäbchenförmig ist und daher mit anderen stäbchenförmigen Molekülen (so mit Komponente 5) wechselwirken kann, während der andere Teil des Moleküls nicht stäbchenförmig ist und somit die Ausbildung flüssigkristalliner Phasen erschwert oder verhindert. Darüber hinaus sind die erfindungsgemäßen Semi-Mesogene 4 dipolare Moleküle, wodurch sie durch elektrische Felder ausgerichtet werden können. Das Ausmaß der dielektrischen Anisotropie ist denen stäbchenförmiger Flüssigkristalle vergleichbar. Der funktionale Zusammenhang aller Komponenten wird nochmals dargestellt. Ausgangspunkt der vorliegenden Patentanmeldung sind die in der nicht vorveröffentlichten DE 10 2015 015 436 A1 der Anmelderin und der nicht vorveröffentlichten WO 2017/092877 A1 (2) der Anmelderin beschriebenen elektrisch einstellbare und schaltbare optische Dünnschichtelemente auf Basis von Molekülen mit hohen Kerr-Konstanten in Form isotroper Flüssigkeiten.

Die dort beschriebenen Ausgangsmischungen bestehen - kurz zusammengefasst - aus:

a) stäbchenförmigen dipolaren Molekülen mit großem Dipolmoment, Komponente 5, das sind in der Regel stäbchenförmige Flüssigkristalle mit mehreren aromatischen Ringen in der Moleküllängsachse, sie bringen einen hohen Beitrag zur Kerr-Konstante ein, die Struktur bedingt die Ausbildung kristalliner und flüssigkristalliner Phasen und

b) Semi-Mesogene (Komponente 4), das sind nicht-stäbchenförmige, dipolare Moleküle, dabei handelt es sich bei Raumtemperatur vorzugsweise um isotrope Flüssigkeiten, sie verhindern beim Zumischen zu Komponente 5 die Ausbildung flüssigkristalliner Phasen der Ausgangsmischungen, indem sie als sterische Störung für die Ausbildung flüssigkristalliner Phasen im Arbeitstemperaturbereich wirken. Die dipolaren Semi-Mesogene 4 verhindern nicht nur die Ausbildung flüssigkristalliner Ordnungszustände, sondern werden auch durch angelegte elektrische Felder ebenfalls orientiert und tragen so zum optischen Kerr-Effekt der Komposite bei.

Diffusion und Rotationsdiffusion des nunmehr isotropen Komposits/Kerrflüssigkeit K werden nicht mehr durch Mesophasen eingeschränkt, sondern weisen die hohe Dynamik isotroper Flüssigkeiten auf und zugleich bewirkt der Orientierungszustand unter Spannung eine hohe Anisotropie, wie sie sonst nur in Flüssigkristallen beobachtet wird.

Andererseits ist die molekulare Gestalt der Semi-Mesogene 4, ihre molekularen Wechselwirkungen und ihre Konzentration so ausgelegt, dass sie bei tiefen Temperaturen unterhalb des Arbeitstemperaturbereiches ($T<RT$) die Ausbildung einer homöotropen Orientierung der Ausgangsmischung (Kerrflüssigkeit K) erlauben.

Weitere Komponenten der Ausgangsmischung sind reaktive Mesogene 8 zur Ausbildung des anisotropen Netzwerkes 9 (dabei handelt es sich um reaktive Flüssigkristalle / Mesogene) mit polymerisierbaren Gruppen wie z.B. Acrylat-, Methacrylat- oder Epoxygruppen, aliphatische Monomere und Photoinitiatoren zur Generierung der Netzwerkbildung durch Photopolymerisation.

Die Semi-Mesogene 4 sind dipolare, jedoch nicht-stäbchenförmige Moleküle mit hoher dielektrischer Anisotropie, hoher Kerr-Konstante und aber geringer Ordnungstendenz, so dass sie als isotrope Flüssigkeiten vorliegen. Derartige Moleküle sind genau das Gegenteil, was bisher in der Flüssigkristall-Forschung z.B. für Anwendungen in Flüssigkristall-Displays und anderen elektro-optische Flüssigkristall basierten Elementen entwickelt und beforscht wurde.

Die nicht-stäbchenförmigen Semi-Mesogene 4 unterdrücken die Ausbildung einer flüssigkristallinen Phase bei Raumtemperatur RT bzw. im Arbeitstemperaturbereich. Ihre Funktion besteht im Bewirken einer Klärpunktsdepression der Flüssigkristall-Phasen der stäbchenförmigen Moleküle 5. Eine derartige ausbalancierte Klärpunktsdepression kann

beispielsweise durch voluminöse Flügelgruppen, laterale Substituenten, durch ein kleineres Länge/Breite-Verhältnis, durch Abweichungen von der stäbchenförmigen Struktur u.a. erreicht werden.

Andererseits ist die molekulare Gestalt der Semi-Mesogene 4, ihre molekularen Wechselwirkungen und ihre Konzentration so ausgelegt, dass sie bei tiefen Temperaturen unterhalb des Arbeitstemperaturbereiches (T<RT) die Ausbildung einer homöotropen Orientierung der Mischung erlauben. Eine Hälfte des Molekülgerüstes ist also mesogen und durch ausgeprägte Wechselwirkungen mit den Mesogenen der Komposite gekennzeichnet und die andere ist nicht-mesogen, wobei die Abweichung von der stäbchenförmigen Struktur nicht die Stärke der dielektrischen Anisotropie herabsetzt. Diese Moleküle sind ebenfalls durch ein möglichst hohes Dipolmoment gekennzeichnet, wodurch sie zur Stärke des Kerr-Effektes des Komposits beitragen.

Durch eine UV-Bestrahlung (vorzugsweise mit UV-Leistungsdioden) der homöotrop orientierten Schichten werden Radikale erzeugt, die eine Polymerisation der orientierten reaktiven Mesogene 8 bewirken. Es resultiert ein weitmaschiges, loses anisotropes Netzwerk 9. Bei Raumtemperatur bzw. im Arbeitstemperaturbereich RT wird das Komposit aus stäbchenförmigen Molekülen mit großem Dipolmoment und den nicht-stäbchenförmigen, dipolaren Semi-Mesogenen wieder isotrop. Legt man eine Spannung U an, so orientieren sich die Moleküle 4 und 5 des Komposits in Richtung der E-Feldlinien (homöotrop, d.h. senkrecht zu den Substratflächen) (FIG. 3 rechts).

In einer Ausführung enthält ein zur homöotropen Orientierung führende Aligninglayer/Orientierungsschicht 3, vernetzbare bzw. polymersierbare Gruppen. In diesem Fall wird das anisotrope Netzwerk 9 vorzugsweise kovalent an die beiden Substratgrenzflächen fixiert, wodurch das Netzwerk in besonderem Maße in seiner anisotropen Form auch bei der Isotropisierung des Komposits 4, 5 durch Temperaturerhöhung in den Arbeitsbereich langzeitstabil_erhalten bleibt. Im Rahmen der Erfindung können auch photovernetzbare bzw. photopolymersierbare Gruppen benutzt werden.

Die Polymer-basierte anisotrope Matrix bzw. das anisotropes Netzwerk 9 dient zur Unterstützung des elektrisch bewirkten Schaltzustandes und senkt die Schaltspannung. Sie wird durch ein spezielles Verfahren in der Ausgangsmischung unter Beteiligung der Komponenten 4 bis 8 erzeugt. Durch die Erzeugung des assistierenden Netzwerkes 9 wird keine makroskopisch wahrnehmbare Phasenseparation hervorgerufen, wie dies bei polymerstabilisierten Blauen Phasen, polymerstabilisierten isotropen Phasen und isotropen polymerdispersen Phasen der Fall ist.

Das weitmaschige, anisotrope Polymemetzwerk 9 mit seiner Orientierungsfunktion (Bulk-Alignment, Orientierungsschicht 3) bewirkt eine geringere Temperaturabhängigkeit, geringe Schaltspannungen und eine Verstärkung des optischen Kerr-Effekts durch Selbstorganisation.

Im Extremfall bildet sich bei Anlegen einer genügend hohen Spannung U und geeigneter zwischenmolekularer Wechselwirkungen der genau abgestimmten Zusammensetzung des Komposits und nur hierdurch, eine flüssigkristalline Phase aus.

Um eine geringere Temperaturabhängigkeit durch Stabilisierung infolge Fixierung der Ordnung in der Kerrflüssigkeit K zu erhalten, kann der Kerr-Effekt isotroper Komposite mit nanoskaligen Clustern und Nanopartikeln formanisotroper Molekülen mit großem Dipolmoment im weitmaschigen anisotropen Polymernetzwerk 9 erreicht werden. Hierzu werden nanoskopische Cluster und Nanopartikel formanisotroper Moleküle 4, die durch kovalente Bindungen oder zwischenmolekulare Wechselwirkungen in ihrer geordneten Anordnung fixiert werden, als Bestandteil der Ausgangsmischung eingesetzt. Derartige nanoskalige anisotrope Cluster und Nanopartikel erweitern den vorstehenden Ansatz des Kerr-Effekts isotroper Komposite auf Basis von Mischungen stäbchenförmiger Moleküle 5 und nicht-stäbchenförmige Semi-Mesogene 4 in anisotropen Netzwerken 9. Der Unterschied besteht darin, dass die stäbchenförmigen Moleküle mit großem Dipolmoment 5 in Form nanoskaliger Cluster oder Nanopartikel in geordneter Anordnung fixiert vorliegen (analog zu Vorordnungseffekt von Schwärmen dicht oberhalb des Klärpunkts nematischen Phasen). Derartige Cluster und Nanopartikel sind nanoskopisch klein (1nm bis 200nm, bevorzugt 5 bis 20nm). Auf Grund der nanoskopischen Größe bewirken sie keine Streuung des Komposits. Stäbchenförmige Moleküle mit reaktiven Gruppen (reaktive Mesogene) 8 können durch Photopolymerisation in gebildeten Droplets, Nanopartikeln oder nematischen Vorordnungsschwärmen dicht oberhalb des Klärpunkts fixiert werden. Anstelle einer Fixierung durch kovalente Bindungen kann dies auch durch nicht-kovalente zwischenmolekulare Wechselwirkungen (H-Brückenbindungen, ionische Wechselwirkungen oder $\pi\pi$-Wechselwirkungen) erfolgen, dies führt ebenfalls zu stabileren geordneten nanoskopischen Molekülanordnungen. Derartige Molekül-Cluster bzw. sphärische oder asphärische Nanopartikeln werden in der Ausgangsmischung (aus den Komponenten 4 bis 8) dispergiert. Die resultierenden Komposite sind isotrope, nicht streuende Flüssigkeiten.

Geordnet fixierte Cluster und Nanopartikel auf Basis formanisotroper Moleküle bewirken einerseits eine Erhöhung des Kerr-Effekts durch ihre hohe stabile Orientierungsordnung und minimieren insbesondere die ausgeprägte Temperaturabhängigkeit des Kerr-Effekts in Lösungen oder flüssigkristalline Materialien (LC Materialien) oberhalb des Klärpunktes.

Um eine geringere Temperaturabhängigkeit durch Ausnutzung unterschiedlicher Temperaturabhängigkeiten zwischenmolekularer Komplexbildung und Vorordnungseffekt in der Kerrflüssigkeit K zu erhalten, kann der Kerr-Effekt isotroper Komposite auf Basis der Komplexbildung entstehender formanisotroper Moleküle 5 mit großem Dipolmoment durch zwischenmolekulare Wechselwirkungen im weitmaschigen anisotropen Polymernetzwerk 9 erreicht werden. Hierzu werden die stäbchenförmigen Moleküle 5 mit großem Dipolmoment erst durch zwischenmolekulare Wechselwirkungen wie beispielsweise von H-Brückenbindungen, ionische Wechselwirkungen oder ππ-Wechselwirkungen (wie z.B. Pyridin/Säure, Säure/Säure o.a.) gebildet. Die unterschiedlichen Temperaturabhängigkeiten von zwischenmolekularen Wechselwirkungen und von Vororientierungseffekt wird zur Stabilisierung des Effektes genutzt. Die Ordnungstendenz der stäbchenförmigen Moleküle 5 wird - entsprechend dem vorstehenden Ansatz des Kerr-Effekts isotroper Komposite auf Basis von Mischungen stäbchenförmiger Moleküle 5 und nicht-stäbchenförmige Semi-Mesogene 4 - so durch nicht-kovalente zwischenmolekulare Wechselwirkungen erhöht. Demgemäß wird ein Spannungs-induzierter Ordnungs- bzw. Verstärkungseffekt durch Selbstorganisation bewirkt, der zu hohen Kerr-Konstanten führt.

Um eine geringere Temperaturabhängigkeit durch Ausnutzung unterschiedlicher Temperaturabhängigkeiten zwischenmolekularer Komplexbildung und Vorordnungseffekt in der Kerrflüssigkeit K zu erhalten, kann die thermische Stabilisierung des Kerr-Effekts isotroper Komposite mit Semi-Mesogenen 4, die durch zwischenmolekulare Wechselwirkungen gebildet werden, erreicht werden. Dabei werden die nicht-stäbchenförmigen Semi- Mesogene 4 erst durch zwischenmolekulare Wechselwirkungen, wie beispielsweise von H-Brückenbindungen oder ionische oder ππ-Wechselwirkungen, gebildet. Durch die Bildung der Semimesogene 4 wird bei Raumtemperatur RT bzw. im Arbeitstemperaturbereich eine isotrope Phase generiert. Eine Temperaturerhöhung führt zur Schwächung der nicht-kovalenten Wechselwirkungen und die Komplexe werden (teilweise) abgebaut. Auf diese Weise wird deren Konzentration geringer und so eine Steuerung der Ordnungstendenz möglich. Der thermisch induzierte Abbau der Komplexe, d.h. die verminderte Ausbildung von z.B. H-Brückenbindungen heben die Verwischung der Ladung, die durch die Komplexbildung bewirkt wird, auf und die Fragmente erhalten ein höheres Dipolmoment. Auf diese Weise erhält das Komposit mit Erhöhung der Temperatur eine höhere dielektrische Anisotropie und der Kerr-Effekt wird unterstützt.

Unter Nutzung der erfindungsgemäßen aktiven Komposite und deren Anwendung in dünnen Schichten zwischen strukturierten oder / und flächigen Elektroden 2 kann eine Vielfalt von Anwendungen realisiert werden:

- Refraktive und diffraktive optische Elemente,
- Elektrisch kontinuierlich einstellbare oder zwischen zwei Zuständen schaltbare Linse,
- Elektrisch kontinuierlich einstellbare und lokal modifizierbare Linse (Korrekturlinse, asphärische Linsen),
- Lokal und im Effekt kontinuierlich einstellbare Sehhilfe oder zwischen zwei Zuständen schaltbare Sehhilfe (Zuschaltbarer Nahsichtteil),
- Elektrisch steuerbare Beugungsgitter,
- Polarisationsunabhängige Phasenmodulatoren.

Nachfolgend wird der Aufbau des erfindungsgemäßen elektrisch steuerbaren optischen Elements im Detail unter Bezugnahme auf FIG. 2 und FIG. 3 beschrieben.

Zellsubstrate 1:

Die Zellsubstrate können aus Glas oder Kunststoff sein. Die Substrate können plan oder konkav oder konvex sein oder auch Mikrolinsen aufweisen. Die Substrate 1 werden durch Spacer (Glas- oder Kunststofffaserstücke oder Kügelchen oder lithographisch erzeugte Polymerstrukturen) in einem gleichmäßigen Abstand von einigen μm gehalten. Durch Optikkleber werden die beiden Substrate 1 an den Stirnflächen zueinander fixiert.

Elektroden 2:

Die Glas- oder Kunststoffsubstrate 1 werden mit transparenten Elektroden 2 versehen. Dies sind vorzugsweise Elektroden aus ITO, Metallen bzw. leitfähigen Polymeren, die durch Sputtern, Aufdampfen, Drucken u.a. auf die Substrate 1 aufgebracht werden. Die Elektroden 2 können großflächig oder strukturiert sein, wobei die Strukturierung durch Drucken, mittels Masken beim Aufbringen der Elektroden oder durch nachträgliches (lithographisches) Ätzen erfolgen kann. Alternativ können im Rahmen der Erfindung großflächige Elektroden strukturiert werden.

Orientierungsschichten/Aligninglayer 3:

Auf die ITO Elektroden 2 werden dünne Schichten von Aligninglayern 3 (20nm bis 1μm) aufgebracht, die die homöotrope Orientierung des Komposits bei tiefen Temperaturen bzw. unterhalb des Arbeitstemperaturbereichs bewirken ($T<RT$). Dafür werden im Rahmen der Erfindung Polymere wie Polyimide, Polyvinylalkohol, photosensitive Polymere, Lecithin u.a. eingesetzt.

Optional enthalten die Aligninglayer 3 (photo-)vernetzbare Gruppen, die die kovalente Anbindung der reaktiven Mesogene bzw. daraus gebildeter Netzwerke 9 gestatten.

Isotrope Mischung 4 und 5:

Die isotrope Mischung ist im Arbeitstemperaturbereich isotrop. Ein anisotroper Zustand wird durch Grenzflächenorientierung mit Hilfe von Orientierungsschichten bei Temperaturen unterhalb Arbeitstemperaturbereiches erreicht. Dieser anisotrope Zwischenzustand ist ausschließlich für die Herstellung des anisotropen Netzwerkes 9 durch Photopolymerisation der reaktiven Mesogene 8 erforderlich. Im Arbeitstemperaturbereich wird dann wieder der isotrope Zustand der stäbchenförmigen Moleküle 5 und nicht-stäbchenförmigen Semi-Mesogene 4 eingestellt.

Zustände während der Herstellung und bei Betrieb des erfindungsgemäßen elektrisch steuerbaren optischen Elements sind:

1. Isotroper Ausgangszustand der Ausgangsmischung (Komponenten 4 bis 8) zwischen den Substraten 1 bei Raumtemperatur RT.
2. Homöotroper Zustand bei Temperaturen unterhalb des Arbeitstemperaturbereiches vor der Photopolymerisation (siehe FIG. 2 links).
3. Homöotroper Zustand durch Photopolymerisation unterhalb des Arbeitstemperaturbereiches erzeugtem anisotropen Netzwerk (siehe FIG. 2 rechts).
4. Isotroper Zustand mit anisotropem Netzwerk im Arbeitstemperaturbereiche ohne Spannung U (siehe FIG. 3 links).
5. Orientierung des Komposits durch Anlegen einer elektrischen Spannung U. Die Orientierung wird durch das anisotrope Netzwerk 9 unterstützt (FIG. 3 rechts).

Durch die Kombination von Mischungen mit neuartigen hoch-An Materialien, die Ordnung einstellender bzw. abbauender und zum Kerr-Effekt beitragender Komponenten und die in-situ Generierung anisotroper Polymernetzwerke 9 weisen die erfindungsgemäßen Komposite - gegenüber der Nutzung des Kerr-Effektes in typischen Flüssigkeiten - eine signifikante Erhöhung der spannungsinduzierten Modulation der polarisationsunabhängigen optischen Eigenschaften auf. Hierbei sind die Komposite aus verschieden Funktionskomponenten aufgebaut.

Das sind zum einen stäbchenförmige Moleküle 5 mit großem Dipolmoment, deren Ordnungstendenz im Arbeitstemperaturbereich durch nicht-stäbchenförmige, dipolare Semi-Mesogene, die bei Raumtemperatur isotrope Flüssigkeiten sind und gegebenenfalls nur bei tiefen Temperaturen flüssigkristalline Phasen, d.h. nur eine eingeschränkte Mesogenität aufweisen (Semi-Mesogene 4), reduziert wird. Die Semi-Mesogene 4 spielen hierbei die entscheidende Rolle, da sie quasi als Störung gegenüber den stäbchenförmigen hoch-$\Delta n$ Verbindungen fungieren und so deren Ordnungstendenz im Arbeitstemperaturbereich partiell erniedrigen und die Ausbildung geordneter Zustände, wie LC-Phasen, verhindern. Da sie aber ebenfalls eine hohe dielektrische Anisotropie aufweisen, tragen sie zum Kerr-Effekt in kooperativer Weise bei.

Eine weitere wesentliche Komponente sind die photovernetzbaren Reaktiv-Mesogene 8, kombiniert mit einem Photoinitiator 6. Unterhalb des Arbeitstemperaturbereiches liegen die Ausgangsmischungen in einer nematischen LC Phase vor, die durch Grenzflächeneffekte und/oder elektrische Spannung homöotrop orientiert werden können. Eine UV- Bestrahlung in diesem Zustand führt durch die Photopolymerisation der Reaktiv-Mesogene 8 zur Ausbildung eines weitmaschigen, losen, anisotropen und orientierend wirkenden Netzwerkes 9. Die resultierenden Komposite sind bei Raumtemperatur bzw. im Arbeitstemperaturbereich jedoch isotrop, nicht streuend und optisch transparent. Wird jedoch eine genügend hohe elektrische Spannung angelegt, so orientieren sich die polaren stäbchenförmigen Moleküle 5 der isotropen Flüssigkeit in Richtung der Feldlinien senkrecht zu den Substraten, wodurch die Brechzahl geändert wird. Hierbei unterstützt das anisotrope Netzwerk 9 die Ausrichtung der stäbchenförmigen, polaren Moleküle 5 des Komposits durch einen Vorordnungseffekt und verstärkt somit den optischen Kerr-Effekt. Im Ergebnis wird gegenüber dem Stand der Technik eine wesentlich stärkere Brechzahlmodulation bei geringeren Schaltspannungen erreicht. Darüber hinaus wird die Temperaturabhängigkeit des Prozesses wesentlich reduziert und so die technische Nutzung ermöglicht. Der notwendige spannungsinduzierte Brechungsindexhub bzw. Phasenhub wird auf der Basis des elektro-optischen Kerr-Effektes in den erfindungsgemäßen Kompositen erzeugt. Der spannungsinduzierte Brechungsindexhub in den erfindungsgemäßen Kompositen zeichnet sich durch sehr kurze Schaltzeiten aus.

Bei der vorstehend beschriebenen Konfiguration sind alle Schaltzustände symmetrisch zur Durchstrahlungsrichtung und somit polarisationsunabhängig. Insgesamt erlauben die erfindungsgemäßen Komposite die Nutzung des elektro-optischen Basiseffektes zur Herstellung von Dünnschichtelementen mit Linsen-Funktion, da der Werte der Brechzahlmodulation signifikant erhöht, die Schaltzeiten verringert und die erforderliche Schaltspannung reduziert wird. Dabei können im Rahmen der Erfindung neuartiger Komposite Muster adressierter diffraktiver Linsen als Basiselemente hergestellt werden. Die Erzeugung von aktiven Fresnel- oder Phasen-Zonenplatten erfordert alternativ die Herstellung ringförmiger aperiodischer Elektrodenstrukturen und deren Kontaktierung. Die Ringelektroden können in ITO hergestellt werden. Beide Methoden sind zur Realisierung schaltbarer Linsen, Fresnel-Strukturen im Substrat oder im aktiven Material geeignet, wobei die erfindungsgemäße schaltbare diffraktive Dünnschicht-Linse für verschiedene optische Anwendungen konzipiert und angepasst werden kann.

Wie vorstehend ausgeführt, sind schaltbare Linsen auf Basis des Electrowetting-Prinzips und von Elastomer-Membranen aufgrund ihres Gewichts, der voluminösen Versorgungskomponenten und der eingeschränkten Apertur für Sehhilfen und Teleskop-Brillen wenig geeignet. Auch für die Herstellung von Hybridoptiken sind diese Ansätze nur begrenzt nutzbar.

Schaltbare Linsen auf Basis von Flüssigkristallen zeigen diese Nachteile nicht. Jedoch schränkt die Polarisationsabhängigkeit orientierter Flüssigkristalle diesen Ansatz stark ein. Um diesen Nachteil zu überwinden, müssen zusätzliche optische Komponenten wie z.B. Polarisatoren oder mehrere flüssigkristalline Elemente (LC-Elemente) mit gegenläufiger LC-Orientierung (siehe A.Y.G.; Ko, S.W.; Huang, S.H.; Chen, Y.Y.; Lin, T.H., Opt. Express 2011, 19, 2294-2300) oder gegenläufig orientierende Schichten (siehe insbesondere Ren, H.; Lin, Y.H.; Fan, Y.H.; Wu, S.T. Appl. Phys. Lett. 2005, 86, 141110; Lin, Y.H.; Ren, H.; Wu, Y.H.; Zhao, Y.; Fang, J.; Ge, Z.; Wu, S.T. Opt. Express 2005, 13, 8746-8752; Wang, B.; Ye, M.; Sato, S., Opt. Commun. 2005, 250, 266-273) eingesetzt werden. Dadurch wird aber die Lichtausbeute reduziert, der Systemaufbau wird deutlich aufwändiger und es entstehen zusätzliche Fehlerquellen in der Fertigung.

Isotrope flüssigkristalline Elemente auf PDLC Basis, weisen aufgrund der unterschiedlichen Orientierung der Droplets im OFF-Ausgangszustand eine starke Streuung auf. Nano-PDLC Systeme, die optisch in beiden Zuständen nahezu transparent sind, weisen ebenfalls eine Reststreuung auf. Außerdem ist die notwendige Schaltspannung vergleichsweise hoch und die Schaltzeiten sind durch die Wechselwirkung der Nanometer großen Droplets mit der sie einschließenden Polymermatrix deutlich länger als die anderer flüssigkristalline Elemente (LC-Elemente).

Da bei flüssigkristalline Elementen der Prozess der dielektrischen Reorientierung (besonders im feldfreien Zustand) generell relativ langsam ist, wurden in den letzten Jahren zahlreiche Ansätze verfolgt, um kürzere Schaltzeiten von LCDs und anderer LC-Elemente zu erreichen. Beispiele dafür sind: die Optimierung der viskoelastischen Parameter von NLC's, das Übersteuern des Systems (siehe D.-K. Yang and S.-T. Wu, Fundamentals of Liquid Crystal Devices (John Wiley, New York, 2006)), das "Neuausrichten" eines NLC's in Sub-μm-Polymer-Netzwerk-Templaten (siehe J. Xiang and O. D. Lavrentovich, Appl. Phys. Lett. 103, 051112 (2013)) oder auch durch "Dual Frequency"-LC's (DFLC) (siehe B. Golovin, S. V. Shiyanovskii, and O. D. Lavrentovich, Appl. Phys. Lett. 83, 3864 (2003)), oberflächenstabilisierte ferroelektrische LC's (SSFLC) oder von chiral smektischen LC's (siehe G. Polushin, V. B. Rogozhin, and E. I. Ryumtsev Doklady Physical Chemistry, 2015, Vol. 465, Part 2, pp. 298-300).

Der Kerr-Effekt, der auf der Ausrichtung polarer Moleküle (siehe beispielsweise Bing-Xiang Li, Volodymyr Borshch, Sergij V. Shiyanovskii, Shao-Bin Liu; Oleg D. Lavrentovich, Appl. Phys. Lett. 104, 201105 (2014)) basiert und nicht die dielektrische Reorientierung des LC-Direktors orientierter Flüssigkristalle erfordert (Frederiks-Effekt), weist Schaltzeiten im Nanosekunden-Bereich auf (1-33 ns). Die in konventionellen Kerr-Flüssigkeiten notwendige Schaltspannung beträgt jedoch mehrere hundert Volt (300 bis 900V, E =~$10^8$ V/m), wobei Werte der elektrisch induzierten Doppelbrechung von 0.001 bis 0.01 erreicht werden. Diese Ansätze sind durch kompliziertere Ansteuerungsschaltungen, durch Hysterese-Verhalten und auch durch instabile Schaltzustände (Su Xu, Yan Li, Yifan Liu, Jie Sun, Hongwen Ren, Shin-Tson Wu, Micromachines 2014, 5, 300-324) limitiert.

Eine Alternative sind Blaue flüssigkristalline Phasen, die eine komplexe 3D Struktur aufweisen, aber im feldfreien Zustand optisch isotrop sind. Sie zeichnen sich durch kurze Schaltzeiten aus, sind aber wegen der sehr kleinen thermischen Existenzbereiche der Phasen für Linsen-Anwendungen ungeeignet. Polymerverstärkte Blauen Phasen (PSBP, siehe Su Xu, Yan Li, Yifan Liu, Jie Sun, Hongwen Ren, Shin-Tson Wu, Micromachines 2014, 5, 300-324) zeigen eine höhere Brechzahlmodulation, mit applikationsrelevanten Existenzbereichen, aber weisen relativ hohe Schaltspannungen und deutliche Streueffekte (siehe Y. Haseba and H. Kikuchi, Mol. Cryst. Liq. Cryst., 2007, 470,1; Young-Cheol Yang and Deng-Ke Yang Applied Physics Letters 98, 023502, 2011) im OFF-Zustand auf.

Die Orientierung polarer Moleküle im elektrischen Feld ist seit langem als optischer Kerr-Effekt bekannt. Die Kerr-Konstanten konventioneller Flüssigkeiten wie z.B. Nitrobenzen oder Schwefelkohlenstoff sind jedoch für die Linsen-Anwendung um Größenordnungen zu niedrig und die Schaltspannung für relevante Schichtdicken um Größenordnungen zu hoch. Deutlich höhere Kerr-Konstanten, mit Schaltzeiten im Millisekunden- und sub-ms-Bereich, weisen isotrope Schmelzen nematischer Flüssigkristalle auf (siehe F. Costache, M. Blasl Optik & Photonik Volume 6, Issue 4, pages 29-31, December 2011). Dies führt zu polarisationsfreien, schnell schaltenden und effizienten Kerr-Systemen. Der Effekt hat offensichtlich zwei Ursachen, zum einen bewirken die stäbchenförmigen, polaren Flüssigkristalle mit einem langgestreckten $\pi$-System hohe Kerr-Konstanten und zum anderen ist die Ursache im nematischen Vororientierungseffekt von Molekülschwärmen oberhalb des Klärpunkts zu sehen. Die daraus resultierende extrem starke Temperaturabhängigkeit des Effektes, ist ein wesentlicher Nachteil dieses Ansatzes.

Die beschriebenen Nachteile werden durch die erfindungsgemäßen isotropen Komposite überwunden. Durch die Kombination der isotropen Mischung von Mesogenen und Semi-Mesogen mit dem anisotropen Netzwerk 9 werden hohe Werte der Brechzahlmodulation bei schnellen Schaltzeiten und moderaten Schaltspannungen erreicht. Das neuartige Materialkonzept kann zur Herstellung elektrisch schaltbarer bzw. einstellbarer optischer Linsen und anderer optischer Elemente auf Grundlage des optischen Kerr-Effekts genutzt werden.

Dafür wurden dipolare, stäbchenförmige Moleküle, insbesondere flüssigkristalline Verbindungen mit sehr hoher Brechzahl-Anisotropie ausgewählt und, auf diese abgestimmt, isotrope Semi-Mesogene entwickelt und mit ersteren

gemischt, so dass die resultierenden Mischungen beider Komponenten nur noch latent flüssigkristalline Eigenschaften aufweisen. Insbesondere liegen diese ohne Anlegen von elektrischer Spannung im Arbeitstemperaturbereich als isotrope Flüssigkeiten vor. Die erfindungsgemäßen Semi-Mesogene 4 sind in Struktur, ihrer Eigenschaftskombination und Funktion eine neue Klasse von Funktionsmaterialien. Die Einstellung der dafür erforderlichen Eigenschaften durch geeignetes Moleküldesign und effiziente Synthesen wird nachfolgend noch näher beschrieben.

Die erfindungsgemäßen Komposite erfordern ein genaues Einstellen der optischen und dynamischen Eigenschaften sowie der zwischenmolekularen Wechselwirkungen der Hauptkomponenten dieser Mischungen (siehe FIG. 4), bestehend aus:

- stäbchenförmigen Molekülen, vorzugsweise Flüssigkristalle mit hoher Brechzahl-Anisotropie,
- Semi-Mesogenen 4 zur Einstellung der Ordnung sowie
- (photo-)polymerisierbarer Reaktiv-Mesogene 8 zur Ausbildung eines anisotropen Netzwerks 9.

Erfindungsgemäß enthalten die Kerr-Mischungen stäbchenförmige Moleküle 5, vorzugsweise flüssigkristalline Verbindungen mit großer Brechzahl-Anisotropie. Deren hohe Ordnungstendenz sowie deren hohe Schmelz- und Klärpunkte werden durch Mischen mit Semi-Mesogenen 4 derartig erniedrigt, dass die Mischungen im Arbeitstemperaturbereich (insbesondere Raumtemperatur RT) als isotrope Flüssigkeiten vorliegen. In aufwendigen Versuchsreihen wurden verschiedene molekulare Ansätze zur Einstellung dieser Eigenschaftskombination geprüft; so durch Einstellung geeigneter Länge/Breite-Verhältnisse, die Variation der Länge der starren aromatischen Ringsysteme, der Länge und Verzweigung der Flügelgruppen und durch Variation der Polarität der Kopfgruppe d.h., allgemein die Einstellung geeigneter, die flüssigkristalline Phase unterdrückenden zwischenmolekularen Wechselwirkungen. Die polaren Semi-Mesogene 4 wurden so entworfen, dass sie ebenfalls im elektrischen Feld orientiert werden können, aber die flüssigkristallinen Eigenschaften der Mesogene 5 in der Mischung unterdrücken. Sie sind isotrop-flüssig und weisen nur noch latent flüssigkristalline Eigenschaften auf.

Mit Hinblick auf die ebenfalls geforderten optischen und elektro-optischen Eigenschaften der Kerr-Mischungen, können die Semi-Mesogene 4 nicht durch ein beliebiges Lösungsmittel ersetzt werden. Die Orientierungsordnung der Flüssigkristalle wird erfindungsgemäß definiert abgebaut und eingestellt. So sollen die finalen Mischungen im Arbeitsbereich als optisch isotrope Flüssigkeit vorliegen, jedoch eine nematische Vororientierungstendenz aufweisen. Bei tiefen Temperaturen sollen sie jedoch flüssigkristallin sein und sich durch Aligninglayer oder durch Anlegen eines elektrischen Feldes homöotrop ausrichten lassen. Diese definierte Orientierungsordnung ist für den Aufbau des anisotropen Netzwerkes durch Photopolymerisation bei tiefen Temperaturen notwendig.

Die Semi-Mesogene 4 haben weitere Funktionen zu erfüllen, so tragen sie erfindungsgemäß durch ihr Moleküldesign auch zum optischen Kerr-Effekt bei. Daher sollen sie ebenfalls eine hohe dielektrische Anisotropie aufweisen, einen Beitrag zu einer hohen Brechzahl-Anisotropie leisten sowie die kooperative Orientierung der Mischungen im elektrischen Feld unterstützen. Diese Kombination dieser verschiedenen Eigenschaften wird durch folgende Strukturmerkmale möglich:

(1) Der Abbau der flüssigkristallinen Ordnung ist durch sekundäre oder tertiäre Verzweigung der Alkylflügelgruppe und/oder durch lateralen Substituenten zu erreichen.
(2) Eine hohe dielektrische Anisotropie, hohe Kerr-Konstanten bzw. hohe Brechzahl-Anisotropien werden durch die Variation der polaren Kopfgruppe sowie durch die Einführung von Heterozyklen im starren Molekülteil erreicht.

Die grundlegende Architektur der Semi-Mesogene4 ist FIG. 5 zu entnehmen.

Die beschriebene Funktionalität der isotropen Semi-Mesogene 4 kann auf der Basis geeignet substituierter Biphenyle erzielt werden. Insbesondere verzweigte Flügelgruppen vergrößern die Breite eines Moleküls drastisch und führen zu einer merklichen Absenkung der Übergangstemperaturen. Durch das veränderte Länge/Breite-Verhältnis kann die Ausbildung nematischer Phasen verhindert bzw. der Existenzbereich einer solchen Phase stark reduziert werden. Dies wird durch den Einbau von zum Beispiel Methyl- und Ethylgruppen als Verzweigung der aliphatischen Flügelgruppe erreicht, wobei die Position der Verzweigung an der Flügelgruppe sehr wichtig ist.

Diese Struktureigenschaften ist nachfolgend a) für eine Flügelgruppe mit sekundärer Verzweigung, R = CN

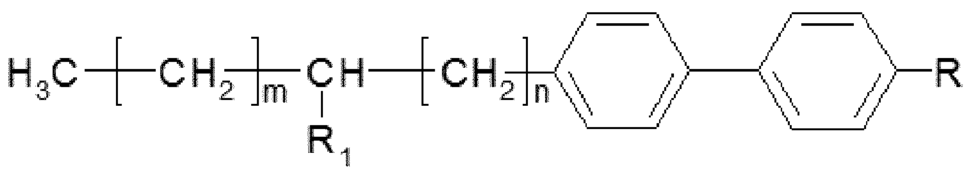

$R_1$ = $-CH_3$, $-C_2H_5$ , m=n= 2 - 4

und b) für eine Flügelgruppe mit tertiärer Verzweigung, R = CN

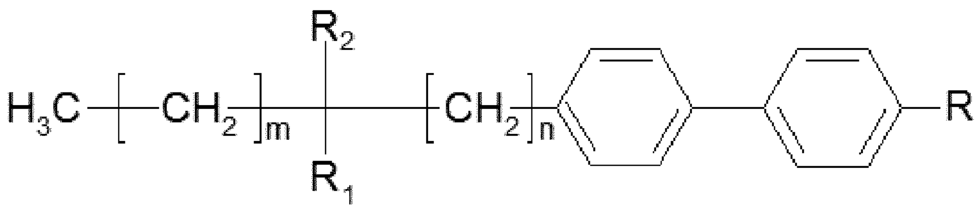

$R_1$ = $-CH_3$, $-C_2H_5$ , m=n= 2 - 4

dargestellt.

Das Ziel isotrope Semi-Mesogene 4 mit einer hohen dielektrischen und optischen Anisotropie, d.h. hohen $\Delta\varepsilon$- und $\Delta$**n** zu synthetisieren, kann zum Beispiel durch eine polare Kopfgruppe gefördert werden. Als besonders geeignete Gruppen, die einerseits einen hohen Beitrag zur elektrisch induzierbaren Doppelbrechung liefern und andererseits zu einer hohen dielektrischen Anisotropie beitragen, sind folgende Substituenten in der para-Position der Biphenyl-Struktur, nämlich Substitution der mesogenen Einheit mit polaren Kopfgruppen, von Vorteil:

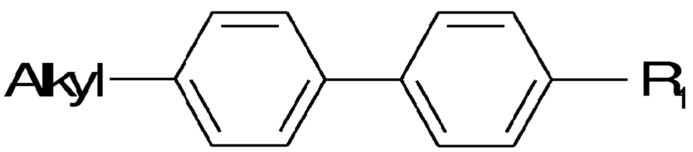

$R_1$ = -CN, -NCS, - Hal (F, Br, Cl)

Weiterhin kann das permanente Dipolmoment und damit die dielektrische Anisotropie $\Delta\varepsilon$ der Semi-Mesogene 4 durch den Austausch von Phenylringen gegen heteroaromatische Kerne erhöht werden. Während sich die Molekülgeometrie durch heteroaromatischen Kerne nur wenig ändert, wird gemäß A. Boller, M. Cereghetti, H. Scherrer, Z. Naturforsch., Teil B, 33, 433 (1978) ein starker Einfluss auf die dielektrischen Eigenschaften erwartet, dabei ist die Position der Heteroatome bzw. auch des Heteroaromaten im Vergleich zur Kopfgruppe so zu wählen, dass sich die Dipolmomente additiv verhalten. Neben der Erhöhung der dielektrischen Anisotropie ist auch ein Anstieg der Polarisierbarkeitsanisotropie und damit eine höhere Doppelbrechung zu erwarten. Dies ist insbesondere für ein Semi-Mesogen 4 mit Pyrimidin-Ring und Variation der Kopfgruppe nachfolgend dargestellt.

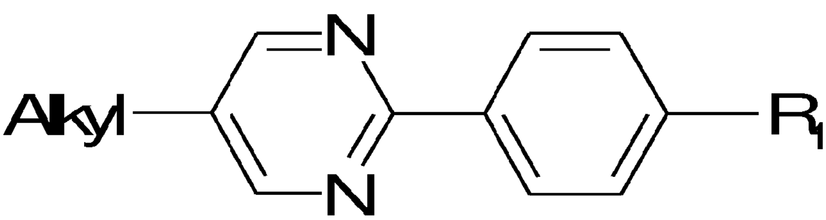

$R_1$ = -CN, -NCS, -Hal (F, Br, Cl)

Die dielektrische Anisotropie kann weiterhin durch polare Gruppen an den starren Ringen erhöht werden. Laterale Substituenten können gleichzeitig einer Teilkompensation der Dipolmomente durch Dimerenbildung entgegenwirken.

So bewirkt insbesondere die Einführung von zwei Fluoratomen in 3,5-Stellung eine Erhöhung der dielektrischen Anisotropie um 8,5 Einheiten (siehe P. Kirsch, A. Hahn, Eur. J. of Org. Chem. (2005), (14), 3095-3100. Im Fall lateraler 3,5-Substitution bleibt die elektrische Partialladung entlang der Moleküllängsachse erhalten (d.h. ein Dipolmoment parallel zur Längsachse), woraus eine positive dielektrische Anisotropie resultiert. Gleichzeitig bewirken die lateralen Substituenten eine Erniedrigung der Übergangstemperaturen. Insbesondere die Erhöhung der dielektrischen Anisotropie durch die Einführung von polaren Substituenten ist nachfolgend dargestellt.

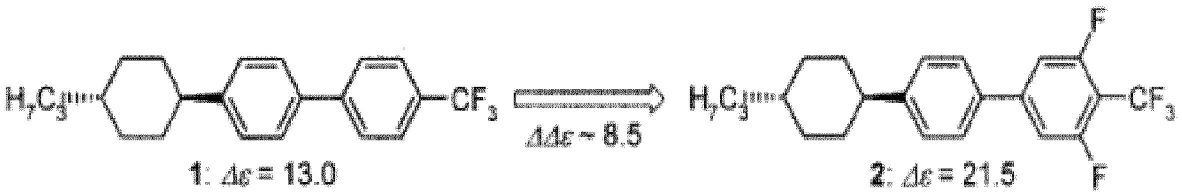


1: Δε = 13.0 2: Δε = 21.5

Erfindungsgemäß erfolgt die Unterstützung der feld-induzierten Ausrichtung der isotropen Mischung durch ein anisotropes Polymernetzwerk 9. Der orientierende Memory-Effekt des Netzwerkes 9 in Kombination mit dem nematischen Vorordnungseffekt der latent flüssigkristallinen Komposite verstärkt den optischen Kerr-Effekt.

Eine weitere, wichtige Aufgabe des Netzwerkes 9 besteht darin, die Temperaturabhängigkeit des Schaltprozesses signifikant herabzusetzen. Zum Aufbau des Netzwerkes 9 werden insbesondere aromatische reaktive Mesogene 8 und aliphathische Monomere in die isotrope Mischung bestehend aus stäbchenförmigen Molekülen, vorzugsweise Mesogenen und Semi-Mesogenen 4 eingebracht. Diese werden dann durch Photopolymerisation im homöotrop geordneten Zustand des Komposits bei tiefen Temperaturen polymerisiert und bilden ein weitmaschiges anisotropes Netzwerk 9 aus. Das Zumischen der reaktiven Mesogene 8 erfordert eine Abstimmung der zwischenmolekularen Wechselwirkungen in den Ausgangsmischungen sowie in den finalen Kompositen nach Aufbau der Netzwerkstruktur. Um zusätzlich eine hohe Stabilität des Netzwerkes 9 zu erreichen, ist das Netzwerk 9 durch Funktionalisierung des Aligninglayers 3 kovalent mit den Substraten verknüpft. FIG 6 zeigt die Erzeugung eines mehrdimensionalen, anisotropen Netzwerks, nämlich:

a) isotrope Mischung mit reaktiven Mesogenen 8 in homöotrop orientierten Mischung (Prekomposit) (siehe FIG. 6a) und
b) kovalente Verknüpfung von Netzwerk 9 und Aligningschicht 3 mit netzwerkstabilisierten Molekülen(siehe FIG. 6b).

Die kovalente Verankerung des Netzwerks 9 an den Grenzflächen der Aligning-Schichten 3 führt zu einer signifikanten Verbesserung des elektro-optischen Schaltverhaltens und der Langzeitstabilität. Dazu wird das Aligning-Material mit temperaturstabilen, reaktiven Gruppen (z.B. OH-Gruppen) funktionalisiert, so dass sie mit den bifunktionalen Reaktiv-Mesogenen 8 eine Verbindung eingehen können. Die durch radikalische Photopolymerisation ausgelöste Netzwerkbildung schließt den Verbund mit den beiden funktionalisierten Aligning-Layem 3 ein, so dass das anisotrope Netzwerk 9 grenzflächen stabilisiert die Zelle permanent durchspannt. Die notwendige Konzentration der Bindungsstellen an den Grenzflächen ist hierbei auf geeignete Weise einzustellen. Hierzu können die Aligning-Layer 3 nach dem Beschichten und Trocknen mit entsprechenden reaktiven Lösungen modifiziert werden, funktionale Verbindungen können schon im Beschichtungsmaterial enthalten sein oder die Oberfläche der Aligning-Layer wird durch Plasma-Verfahren entsprechend funktionalisiert.

Neben der Verbesserung der Eigenschaften der Komposite durch die Netzwerkbildung, basierend auf aliphatischer Monomere und aromatischer reaktiver Mesogene 8, werden auch mögliche Entmischungserscheinungen unterdrückt.

Die erfindungsgemäßen Kerr-Komposite entsprechen, beispielsweise für die Anwendungsfelder Linsen, insbesondere für Sehhilfen und Teleskop-Brillen, folgendem Anforderungsprofil:

- hohe Kerr-Konstante
- hohe dielektrische Anisotropie
- isotrop und fluid im Arbeitstemperaturbereich durch die Semi-Mesogene 4
- hohe elektrisch induzierbare Brechzahlmodulation durch dipolare stäbchenförmige Moleküle 5 und polare Semi-Mesogene 4
- gute Homogenität (Mischbarkeit der Substanzen, geringe Tendenz zur Phasenseparation) im gesamten Arbeitstemperaturbereich
- geringe Schaltzeiten durch niedrige Rotationsviskosität
- geringe Absorption im sichtbaren Spektralbereich
- hohe (photo)-chemische Stabilität.

Weiterhin sind Polarisationsunabhängigkeit und schnelle Schaltzeiten des Ansatzes wesentliche Vorteile im Vergleich zu Flüssigkristall basierten Ansätzen. Die erfindungsgemäßen Komposite verbinden die Vorzüge flüssigkristalliner Systeme welche durch große Kerr-Konstanten stäbchenförmiger polarer Moleküle und hoher Ordnungstendenz gekennzeichnet sind, mit denen von isotropen Flüssigkeiten, welche sich durch eine geringe Rotationsviskosität und sehr kleiner Schaltzeiten.

Ausgehend von den Gegenstände gemäß der nicht vorveröffentlichten DE 10 2015 015 436 A1 der Anmelderin und der nicht vorveröffentlichten WO 2017/092877 A1 der Anmelderin nachfolgend die Ausgestaltung von Linsen unter Verwendung von Oberflächenstrukturen gemäß der Erfindung; insbesondere die Linsenwirkung durch lokal unterschiedliche Orientierung der entwickelten Kerr-Mischungen mittels strukturierter Elektroden. Die Aufgabe des optisch wirksamen Oberflächenprofils O besteht in der Realisierung der Linsenfunktion. Bei ausreichendem Brechungsindexhub bzw. induzierter Phasenverschiebung wird das Licht mit ortsabhängigen Winkeln so abgelenkt, dass im Brennpunkt alle Strahlen zusammengeführt werden.

Eine Ausführung der Erfindung, welche in FIG. 1a dargestellt ist, ist dadurch gekennzeichnet, dass sich auf der inneren Oberfläche eines Substrates 1b oder in das Substrat 1b oder beider Substrate 1a und 1b eingearbeitet ein optisch wirksames Oberflächenprofil O befindet. Dieses Oberflächenprofil O kann hierbei zum Beispiel eine Stufenlinse, eine Phasenplatte oder ein Oberflächengitter sein. Das Oberflächenprofil O ist im spannungslosen Zustand der gefüllten Dünnschichtzelle optisch inaktiv, da das Material den nahezu gleichen Brechungsindex aufweist, wie das erfindungsgemäße (elektro-aktives) Komposit K. Durch Anlegen einer Spannung U verändert sich der Brechungsindex des elektrooptisch aktiven Materials, sodass eine optische Funktion erfüllt wird. Im Fall der Stufenlinse wird eine spannungsabhängige Brechkraft der Dünnschichtzelle D generiert. Die Größe der Brechkraft der Linse ist hierbei abhängig von der Höhe der angelegten Spannung U. Im Fall von Oberflächengitter werden Beamsplitter, - combiner, Monochromator, Multiplexer oder Demultiplexer realisiert.

Eine Ausführung der Erfindung ist dadurch gekennzeichnet, dass das optisch wirksame Oberflächenprofil O als diffraktive oder Stufenlinse ausgeführt ist. Dieses Oberflächenprofil O erzeugt bei einem geeigneten Brechungsindexhub eine von der Profilhöhe abhängigen Phasenhub oder Ablenkwinkel, so dass alle Strahlen, die von verschiedenen Orten des Profils ausgehen, in einem Brennpunkt zusammentreffen (Sammellinse) oder scheinbar von einem virtuellen Brennpunkt ausgehen (Zerstreuungslinse).

Eine weitere Ausführung der Erfindung ist dadurch gekennzeichnet, dass das optisch wirksame Oberflächenprofil O als diffraktives Gitter ausgeführt ist. Ein solches Oberflächenprofil O erzeugt bei einem geeigneten Brechungsindexhub einen ortsunabhängigen aber von der Lichtwellenlänge abhängigen Ablenkwinkel, so dass alle Strahlen gleicher Wellenlänge im gleichen Winkel abgelenkt werden. Auf diese Weise erfolgt die Aufspaltung eines polychromatischen Lichtstrahls in ein räumlich getrenntes Spektrum. In dieser Ausführung wird also ein schaltbarer bzw. einstellbarer Monochromator realisiert.

Der Vorteil der Nutzung eines optisch wirksamen Oberflächenprofils O besteht darin, dass die optische Funktion einer Linse oder eines Monochromators oder eines anderen aktiv lichtformenden Elementes erzeugt werden kann, ohne dass komplizierte Elektrodenstrukturen (1a, 1b; 2a, 2b) notwendig sind und somit einfache flächige Elektroden genutzt werden können, um das notwendige elektrische Feld zu generieren. Da im spannungsfreien Zustand des optischen Elementes erfindungsgemäß kein Brechungsindex- Unterschied in Durchstrahlungsrichtung zwischen Oberflächenprofil O und elektro-optischen Material vorhanden ist, ist das gesamte Element in diesem Zustand optisch neutral.

In einer weiteren Ausführung der Erfindung ist der Brechungsindex des Materials des Oberflächenprofils O, das als eine Stufenlinse oder diffraktive Linse ausgeführt ist, in geeignetem Ausmaß höher als der des spannungsfreien elektro-optisch aktiven Materials. Auf diese Weise kann mit dem gleichen Element spannungsabhängig eine Sammel- oder eine Streuungslinse realisiert werden. Durch die Wahl des optischen Charakters des Linsenprofils/Oberflächenprofils O kann festgelegt werden, ob die elektrisch einstellbare Linse von einer Sammellinse im spannungsfreien Zustand bei Anlegen einer Spannung zu einer Zerstreuungslinse wird oder umgekehrt.

In einer weiteren Ausführung der Erfindung befinden sich auf beiden Substraten 1a und 1b der Dünnschichtzelle optisch wirksame Oberflächenprofile O. Auf diese Weise kann zum Beispiel die Brechkraft einer schaltbaren Linse bei gleicher Strukturtiefe des Gesamtprofils verdoppelt werden.

In einer weiteren Ausführung der Erfindung befinden sich auf beiden Substraten 1a und 1b jeweils auf den Innenflächen Oberflächenprofile O als Oberflächengitter O, die anti-parallel zueinander orientiert sind. Auf diese Weise kann ein Parallel-Strahlteiler realisiert werden, wobei das Intensitätsverhältnis steuerbar ist.

In einer Ausführung der Erfindung wird das Oberflächenprofil O in ein Substrat (1a, 1b) eingearbeitet. Dies kann zum Beispiel durch Mikrozerspanung, Schleifen, Ätzen oder lithographische Verfahren in optisches Glas erfolgen. Optisch wirksame Oberflächenprofile O können auch durch Drucken, Microimprinting oder Nanoimprinting hergestellt werden.

Eine weitere Methode besteht im Pressen von optisch geeigneten Kunststoffen, wobei ein Presswerkzeug das Negativ des gewünschten Oberflächenprofils O trägt. Letzteres ist bedeutend kostengünstiger in der Herstellung.

Des Weiteren kann in einer Ausführung der Erfindung das Oberflächenprofil O auf ein beliebiges geeignetes Substrat (1a, 1b) repliziert werden. Hierzu wird zunächst vom gewünschten Oberflächenprofil O ein Original (Master) durch Mikrozerspanung auf der Oberfläche eines Metallblocks (beispielsweise aus Messing oder Neusilber) oder andere Verfahren hergestellt. Durch Abguss dieses Originals mittels eines geeigneten Materials wird ein Stempel erzeugt. Als besonders geeignetes Material wird vorzugsweise ein härtendes Silikon verwendet. Ein härtendes Silikon zeichnet sich neben einer sehr guten Abformgenauigkeit auch durch eine gute Trennbarkeit vom Original aus. Der auf diese Weise

hergestellte Stempel wird auf ein geeignetes Substrat (1a, 1b) gedrückt, das zuvor mit einem thermisch oder photochemisch aushärtenden Material beschichtet wurde (alternativ kann auch der Stempel beschichtet werden). Nach dem Aushärten des Materials wird der Stempel vom Substrat (1a, 1b) getrennt, wobei durch die geeignete Wahl des aushärtenden Materials/ Oberflächenprofils O dieses auf dem Substrat (1a, 1b) verbleibt und so als Replikat des Originals das optisch wirksame Oberflächenprofil O bildet. Geeignete Materialien für die Replikation sind beispielsweise UVhärtende Kunststoffe. Diese Herstellungsvariante ist sehr kostengünstig.

Die Substrate 1a und 1b sind auf den Innenseiten mit transparenten Elektroden 2a, 2b versehen, die aus ITO oder anderen (teil)transparenten elektrisch leitfähigen Materialien bestehen. Diese Elektroden 2a, 2b sind mit einem Isolator-Material 3 (siehe FIG. 2) beschichtet, dass zugleich isoliert und die aktiven Komponenten 4, 5 und die reaktiven Mesogene 8 der Ausgangsmischung des elektro-aktiven Komposites K unterhalb des Arbeitstemperaturbereiches senkrecht zu den Flächen (homöotrop) ausrichtet. Die Elektroden 2a, 2b sind entweder unter dem Oberflächenprofil O aufgebracht (siehe FIG. 1a), in diesem integriert oder auf diesem angeordnet(siehe FIG. 1b). In dieser Ausführung der Erfindung werden vorzugsweise flächige Elektroden 2a, 2b verwendet.

Die FIG. 1a und FIG. 1b stellen je eine Zelle mit einer optisch wirksamen Oberflächenstruktur O dar, während die Zellen in FIG. 1c und FIG. 1d (siehe nachfolgend) keine derartige Oberflächenstruktur aufweisen, sondern durch flache strukturierte Elektroden 2a, 2b (Ring oder Streifenelektroden z.B. aus ITO) gekennzeichnet sind. Im Vergleich zu den optisch wirksamen (polymeren) Oberflächenstrukturen O in FIG. 1a und FIG. 1b weisen sie eine wesentlich geringere Dicke (ca. 60nm) auf, so dass sie keine nennenswerte optische Wirksamkeit aufweisen.

Die Zellen mit optisch wirksamer Oberflächenstruktur O in FIG. 1a und FIG. 1b bestehend aus zwei Glassubstraten 1a, 1b, deren innere Oberfläche jeweils mit einer großflächigen leitfähigen ITO Elektrode 2a, 2b versehen ist. Auf den Elektroden 2a, 2b werden eine Isolationsschicht und ein Aligning-Layer 3 aufgebracht. Je nach Material kann der Aligning-Layer 3 auch beide Funktionen erfüllen. Auf einem der Substrate 1a, 1b oder auch beiden Substraten 1a, 1b befinden sich polymere Oberflächenstrukturen O mit Linsenwirkung. Die optische Oberflächenstruktur O kann je nach Material und Prozessbedingungen (Plasmabehandlung) im Rahmen der Erfindung als Aligning-Layer 3 fungieren, die Isolationsfunktion ist ebenfalls gegeben, wenn das Material eine Mindestdicke von 100nm aufweist. Ein Isolation- bzw. Aligning-Layer 3 kann aber auch alternativ auf der Oberflächenstruktur O aufgebracht oder darunter aufgebracht werden, falls die Oberflächenstruktur O nicht die gesamte Elektrodenfläche 2a, 2b bedeckt. Abstandshalter (in der Zeichnung nicht dargestellt) stellen einen konstanten Abstand der Substrate 1a, 1b her, die dann mit dem Fachmann aus der Flüssigkristall-Display-Technologie bekannten Materialien langzeitstabil fixiert werden. Die Zelle wird dann mit der elektro-optisch aktiven Mischung bzw. mit der Vorläufer-Mischung des Komposits K gefüllt und anschließend versiegelt.

Um eine größere Übersichtlichkeit zu erreichen, wurde in FIG. 1a und FIG. 1b unter Berücksichtigung der obigen Ausführungen vereinfacht (d.h. die Isolations- bzw. Aligning-Layer 3 und die Abstandshalter wurden weggelassen). Es liegt jedoch der gleiche Aufbau zugrunde wie er in FIG. 6a und FIG. 6b dargestellt wurde. Auf die ITO Elektroden werden dünne Schichten eines Aligning-Layers 3 (20nm bis 1$\mu$m) aufgebracht, welche die homöotrope Orientierung des Komposits K bei tiefen Temperaturen bzw. unterhalb des Arbeitstemperaturbereichs bewirken (T<RT). Dafür werden dafür bekannten Polymere wie bestimmte Polyimide, Polyvinylalkohol, photosensitive Polymere, Lecithin u.a. eingesetzt. Optional können die Aligning-Layer 3 (photo) reaktive Gruppen enthalten, die die kovalente Anbindung der reaktiven Mesogene 8 bzw. daraus gebildeter Netzwerke 9 gestatten.

Es sind verschiedene Kombinationen bzw. Varianten möglich, die folgende Funktionen erfüllen müssen:

1- Isolationsschicht: Isolation der Elektroden 2a, 2b, um eine Stromfluss zu verhindern

2- Aligning-Layer 3: Aligning-Funktion zur Herstellung einer homöotropen Ausrichtung der Vorläufer-Mischung bei tiefen Temperaturen

3- Verankerung des anisotropen Netzwerkes 9: kovalente Verankerung des anisotropen Netzwerkes 9 am Substrat 1a, 1b.

Filme/Schichten aus bestimmten Materialien können aber auch mehrere Funktionen übernehmen. So können die optisch wirksamen Oberflächenstrukturen O auch die Funktion des Isolators der jeweils darunter liegenden Elektrode 2a, 2b übernehmen. Im Falle geeigneter Materialien und Verfahrensschritte können die Oberflächenstrukturen O auch das homöotrope Alignment bewirken.

Die Verankerung des anisotropen Netzwerkes 9 kann durch funktionale Gruppen als Bestandteil des Aligning-Layers 3 oder aber auch durch Plasmabehandlung des Aligning-Layers 3 oder durch Modifizierung der Oberfläche der optischen Oberflächenstruktur O mittels erzeugter reaktiven Gruppen erreicht werden. Derartig reaktive Gruppen sind in der Lage mit den reaktiven Mesogenen 8 eine kovalente Verbindung einzugehen und so das Netzwerk 9 stabil zu verankern.

Im Gegensatz zu den optisch wirksamen polymeren Oberflächenstrukturen O in FIG. 1a und FIG. 1b weisen die Elektrodenstrukturen der Zellen in FIG. 1c und 1d eine wesentlich geringere Dicke (ca. 60nm) auf. Über den strukturierten Elektroden 2a, 2b sind ebenfalls Isolationsschichten bzw. Aligning-Layer 3 notwendig. Diese weitere Ausführung der Erfindung ist dadurch gekennzeichnet, dass eine Elektrode 2b oder beide Elektroden 2a, 2b strukturiert sind oder eine oder beide Elektroden2a, 2b ein Set von Einzelelektroden darstellt, die einzeln, in Gruppen oder in ihrer Gesamtheit angesteuert werden (siehe FIG. 1c und 1d). Eine Weiterführung dieser Ausführung ist dadurch gekennzeichnet, dass eine (untere) Elektrode als Set von Ringelektroden 2b (siehe FIG. 1c) und die andere (obere) Elektrode als flächige Elektrode 2a gestaltet wird. Die Breiten und Durchmesser der Ringelektroden 2b sind hierbei vorzugsweise so ausgelegt, dass sie den Anforderungen an eine Zonenplatte entsprechen. Beim Anlegen einer Spannung U an die gefüllte Dünnschichtzelle D mit den beschriebenen Elektroden 2 werden zwischen oberer und unterer Elektrode 2a und 2b Bereiche im elektro-aktiven Material erzeugt, die einen anderen Brechungsindex aufweisen, als die Bereiche, die nicht unter Einwirkung des elektrischen Feldes stehen. Auf diese Weise wird im erfindungsgemäßen elektro-aktiven Komposit K ein Brechungsindexprofil erzeugt, das eine optische Funktion generiert. In dieser Weiterführung der Erfindung wird so eine Phasen-Zonenplatte realisiert, die als diffraktive Linse auf durchtretendes Licht wirkt (FIG 1c).

Eine weitere Ausführung der Erfindung, insbesondere mit Zellen mit strukturierten Elektroden ist dadurch gekennzeichnet, dass beide Elektroden 2a und 2b als Sets von Streifenelektroden ausgeführt sind (FIG. 1d). Sind beide Sets 2a und 2b orthogonal zueinander angeordnet und einzeln ansteuerbar, so lassen sich beim Anlegen einer Spannung U Pixel unterschiedlichen Phasenhubes erzeugen. Die gesamte Dünnschichtzelle D wirkt hierbei als variabel strukturierbare Phasenmaske. Werden beide Sets 2a und 2b parallel angeordnet, so lassen sich Brechungsindexgitter durch Anlegen einer Spannung realisieren, die als Beamsplitter, - combiner, Monochromator, Multiplexer oder Demultiplexer wirken.

Die Aufgabe der Elektroden 2a, 2b in der Dünnschichtzelle besteht darin, das für die Einstellung des Brechungsindexes des elektro-optisch aktiven Materials notwendige elektrische Feld zu generieren.

Da die Feldstärke bei gegebener Spannung U mit dem Abstand der Elektroden 2a, 2b signifikant abnimmt, sind die Elektroden 2a, 2b günstiger Weise möglichst nah am elektro-optisch aktiven Material zu platzieren, wobei letzteres von den Elektroden 2a, 2b durch eine dünne Schicht aus geeignetem Material zu isolieren ist. Dies ist bei den Substraten 1a, 1b mit optisch wirksamen Oberflächenprofilen O zumeist nicht nötig, da diese gleichzeitig als Isolator fungieren.

In einer Ausführung der Erfindung werden für den Aufbau der Dünnschichtzelle Glassubstrate 1a, 1b benutzt, die auf der nach innen gerichteten Seite mit einer transparenten leitfähigen Schicht versehen sind. Diese kann zum Beispiel aus Indium-Zinn-Oxid (ITO) bestehen. Wird auf dem Substrat 1a, 1b kein Oberflächenprofil O platziert, so wird eine Isolator-Schicht zum Beispiel durch Aufschleudern und anschließender thermischer Behandlung, ein geeignetes Polyamid mit ausreichender, jedoch geringer Schichtdicke flächig aufgebracht (ca. 100nm dick). Hierbei ist jedoch vor dem Temperprozess an einem Substratrand das Isolator-Material zu entfernen, damit die Elektrode (2a, 2b) später kontaktiert werden kann. Das verwendete Material soll gleichzeitig dazu geeignet sein, Flüssigkristalle homöotrop zu orientieren.

In einer weiteren Ausführung der Erfindung ist das Material des Oberflächenprofils O geeignet, den elektrischen Strom zu leiten. Diese Ausführung hat den Vorteil, dass auch Substratmaterialien benutzt werden können, die für typische Verfahren des Aufbringens der anorganischen leitfähigen Schichten nicht geeignet sind. In diesem Fall ist nachträglich eine geeignete Isolationsschicht aufzubringen.

In einer weiteren Ausführung der Erfindung wird das optisch wirksame Oberflächenprofil O in das Substrat 1a, 1b eingearbeitet. Anschließend wird mit einem geeigneten Material und Verfahren eine leitfähige transparente Schicht auf die strukturierte Oberfläche O aufgebracht. Anschließend wird diese, wie schon vorstehend beschrieben, mit einer Isolationsschicht versehen. Diese Ausführung hat den Vorteil, dass zum Beispiel Kunststoff-Substrate verwendet werden können, bei denen das Oberflächenprofil O durch Pressen schon im Herstellungsprozess aufgebracht wurde.

Für Sehhilfen weist die erfindungsgemäße Linse ein polarisationsfreies, elektrisch einstellbares Nahsichtfeld bei moderaten Schaltzeiten und entsprechend der Applikation unkritische Schaltspannungen von < 42V auf. Der Durchmesser der Linse ermöglicht ein angemessenes Sichtfeld und die Brechkraft der schaltbaren Linse liegt bei Werten im einstelligen Dioptrien-Bereich. Die optische Funktion ist im Wesentlichen wenig von der Lichtwellenlänge abhängig und die Beugungseffizienz ist recht hoch, so dass "Geisterbilder" vermieden werden. Weiterhin ist die erfindungsgemäße Linse mit typischen Brillengläsern kombinierbar und weist für die Ansteuerung des Elements ein geringes Gewicht und Bauvolumen auf, so dass diese zusammen mit einem normalen Brillenglas bzw. in einem Brillengestell integriert werden kann.

Im Rahmen der Erfindung kann die Nutzung für Sehhilfen auf eine tunebare, individuell einstellbare Sehhilfe erweitert werden. Durch Nutzung von pixelierten Elektroden-Rastern, ähnlich dem eines transmissiven LC-Displays, lassen sich für sehr kleine Bereiche die optischen Eigenschaften individuell einstellen. Damit ist es möglich, diffraktive Linsen zu erzeugen, die zum Beispiel eine richtungsabhängige Brechkraft aufweisen, wie sie zur Korrektur eines Astigmatismus benötigt werden. Die Einstellung der Linse kann dann individuell angepasst und gespeichert werden, wie dies bei der binokularen elektronischen Brille der EP 1 463 970 B1 beschrieben ist.

Im Rahmen der Erfindung ist der Einsatz der erfindungsgemäßen Linse in einem schaltbaren Vergrößerungssystem für Teleskop-Brillen möglich. Beim Vergrößerungssystem gibt es teilweise ähnliche Anforderungen wie im Bereich Sehhilfen. Jedoch muss die Brechkraft von Okular- und Objektiv-Linse deutlich stärker sein. Bei der notwendigen Apertur sind die Anforderungen insbesondere für die Okular-Linse jedoch deutlich geringer. Für das Vergrößerungssystem ist ein Vergrößerungsfaktor von 2,5 ausreichend. Wie beim Einzelelement ist auch das System mit einem möglichst geringen Gewicht realisierbar, um den angestrebten hohen Tragekomfort zu ermöglichen. Hierin unterscheidet sich die erfindungsgemäße Lösung deutlich von gegenwärtig verfügbaren Teleskop-Brillen. Ein weiterer wesentlicher Vorteil liegt natürlich darin, dass im off-Zustand das gesamte Sichtfeld zur Verfügung steht; zu integrierende Steuer- und Versorgungselemente schränken dieses nicht ein.

Die erfindungsgemäße Linse erfüllt die technischen Anforderungen für:

a) polarisationsfreies, elektrisch einstellbares Nahsichtfeld für Sehhilfen, insbesondere Sehhilfe mit zuschaltbarem Nahsichtteil,
b) tunebare, individuell einstellbare Sehhilfen (Sehhilfen mit pixelweiser Ansteuerung unter Benutzung µm-strukturierter Elektroden, ähnlich bei einem transmissiven Aktivmatrix - Display) und
c) schaltbares Vergrößerungssystem für Teleskop-Brillen bzw. Multifunktionsbrille,

wie aus nachfolgender Tabelle ersichtlich ist.

| | a) | b) | c) |
|---|---|---|---|
| Schaltzeiten | < 10ms | < 10ms | < 10ms |
| Schaltspannung | < 42V | < 42V | < 42V |
| Durchmesser | > 25mm | > 25mm | > 4mm (Okular)<br>> 20mm (Objektiv) |
| Beugungseffizienz | > 80% | > 80% | > 80% |
| Brechkraft bzw. Brennweite | > 4 dpt | > 8 dpt (asphärisch) | < (-)30mm (Okular)<br>< 75 mm (Objektiv) |

Weitere Anforderungen, die erfüllt werden sind hohe Transparenz, Reproduzierbarkeit, hohe Verlässlichkeit und hoher Füllfaktor zur Vermeidung von "ghosting" sowie eine polarisationsunabhängige Funktionsweise. Darüber hinaus sind die einzelnen Elemente im off-Zustand optisch neutral. Bei erfindungsgemäßer Anwendung in schaltbaren Linsen für technische Einrichtungen, wie zum Beispiel Objektive, die nicht am Körper angewendet werden, sind höhere Schaltspannungen bis 100V ebenfalls akzeptabel.

Die gemäß der nicht vorveröffentlichten DE 10 2015 015 436 A1 der Anmelderin und der nicht vorveröffentlichten WO 2017/092877 A1 der Anmelderin zugrundeliegenden Ausgestaltungen eines elektrisch steuerbaren optischen Elements sind nicht auf die dargestellten und beschriebenen Ausführungsbeispiele beschränkt, sondern umfassen auch alle im Sinne der dort beschriebenen Ausführungsbeispiele gleichwirkende Ausführungen. Beispielsweise kann eine Synthese auf Basis lateral substituierter Biphenyle zur Herstellung von Semi-Mesogenen und Synthese eines Katalysators für die finale Kopplungsreaktion zur Herstellung der substituierten Biphenyle durchgeführt werden; zur Herstellung von 5 Semi-Mesogenen kann eine Synthese und Charakterisierung von 5 substituierten Arylboronsäuren durchgeführt werden; zur Abformung von Stufenlinsen in verschiedene Materialien kann eine Oberflächen-Charakterisierung verfügbarer Stufenlinsen mittels Profilometer einschließlich der Herstellung von PDMS-Abgüssen durchgeführt werden (Herstellung von Stempeln von Oberflächengittern und Mikrolinsen-Arrays einschließlich von Epoxid-Mischung zum Abformen von Oberflächengittern in Sylgard 184 (Silikon-Elastomer-Kit) und Herstellung von Replika mit NOA65 (Optischer Klebstoff: Viskosität 1200 (cps), Brechungsindex $n_d$ 1.52), insbesondere geblazter Gitter (Methode zum Abformen von Oberflächen-Gittern mit Sägezahn-Profil zur Herstellung lineare Oberflächen-Gitter, welche als Modellstrukturen für entsprechende Fresnel Zonenplatten dienen); die Abformung der Oberflächen-Gitter erfolgt mit Hilfe eines Masters (kommerzielles Beugungsgitter), dieses wurde als Negativ-Kopie in POMS abgeformt und mit diesem "Stempel" lassen sich dann über einen weiteren Abformungsschritt mit NOA positive Replikate herstellen, die u.a. für den Aufbau schaltbarer optischer Elemente geeignet sind; Anwendung entsprechender Mechanismen der Aryl-Aryl-Kupplung nach Suzuki-Miyaura (Synthese von Biphenylen oder Biphenylderivaten durch Bildung einer C-C-Bindung) bzw. analoger Reaktionen und Anwendung chromatographischer Aufreinigung von Zwischenverbindungen (insbesondere mehrstufige Synthese mit zwischenzeitlichen Reinigungsoperationen). Die Anwendungsgebiete des erfindungsgemäßen elektrisch steuerbaren optischen Elements erstrecken sich in viele Bereiche der Technik, insbesondere:

Messtechnik

- Analyse von Proben mit Kerrzelle im Messkopf
- Waferinspektionssysteme
- Polarisator in Mikroskopen oder Endoskopen
- Messung elektrischer Feldstärke

Fertigungstechnik

- mikrolithographische Projektionsbelichtungsanlage für IC's oder LCD s
- Lichtmodulator zur Belichtung von Druckplatten
- Polarisationsrichtung drehendes Element bei der Aufzeichnung auf CD oder DVD

Nachrichtenübertragungstechnik

- schneller Lichtschalter mit Kerrzelle und mit oder ohne nachgeschaltetem Polarisationsfilter zur Digitalisierung von Signalen bis zu 100 GHz (optisches Signal)

Medizintechnik

- optischer Modulator in einem MRT-System (Magnetresonanztomographie-System)
- Polarisator in Mikroskopen oder Endoskopen

Der Bereich Maschinelles Sehen oder Bildverstehen (englisch machine vision) beschreibt im Allgemeinen die computergestützte Lösung von Aufgabenstellungen, die sich an den Fähigkeiten des menschlichen visuellen Systems orientieren und ist in der Industrie in den letzten 20 Jahren enorm gewachsen. Vor allem werden maschinell sehende Systeme derzeit in industriellen Herstellungsprozessen in den Bereichen Automatisierungstechnik und Qualitätssicherung eingesetzt. Hintergrund ist das Bedürfnis, die industrielle Herstellung von Produkten während der Produktion simultan zu charakterisieren und zu vermessen, und damit eine gleichbleibend hohe Qualität zu garantieren (Qualitätssicherung). Dazu wird in vermehrtem Maße auf Kameratechnik zurückgegriffen, bei dem Produkte im Produktionszyklus während der Herstellung im Takt der Anlagen fotografiert und die Bilder in Echtzeit computergesteuert ausgewertet werden. Dabei werden Produktfehler sofort erkannt und schadhafte Produkte aus der weiteren Fertigung entfernt. Als Basis für diesen Prozess werden u.a. hochexakte Objektive gefordert, die präzise und scharf das Produkt abbilden, damit die nachgelagerte Auswertung stabil funktionieren kann.

Derartige Methoden werden im zunehmenden Maße auch bei der Herstellung kleiner, kleinster bzw. mikrostrukturierter Bauteile genutzt. Die Schärfentiefe stellt dabei für die Charakterisierung dreidimensionaler Produkte ein wichtiges Problem dar. Bei sehr kleinen Objekten werden Makroobjektive genutzt, die kleine Merkmale abbilden und auswerten. Aus physikalischen Gründen ergibt sich bei Makroobjektiven allerdings das Problem, dass der Schärfentiefe-Bereich im Objekt sehr klein ist. Das führt zu Problemen bei der Auswertung, da bei unscharfen Bildern eine Auswertung kleiner Details natürlich nicht mehr möglich ist. Aus physikalischen Gründen bedeutet die Erhöhung der Schärfentiefe durch eine geringere Apertur eine verringerte Auflösungsleistung - dieses Dilemma kann nicht aufgelöst werden. Eine Möglichkeit, das Problem zu umgehen, besteht darin, mehrere Bilder aufzunehmen, um damit über eine Fokusreihe eine Auswertung im dreidimensionalen Raum zu ermöglichen. Eine klassische Lösung dafür ist die Fokussierung des Objektivs. Klassische Autofokussysteme aus dem Consumer Bereich sind nicht einsetzbar, da damit keine 3D-Bildstapel erzeugt werden. Verfahren zur Nachfokussierung basieren aktuell darauf, das Objektiv über mechanische Zustellung zu verfahren (fokussieren). Mechanische Verfahren sind aber träge und weisen Probleme hinsichtlich der Langzeitstabilität auf. So werden im Bereich machine vision einstellbare Systeme mit sehr kurzen Schaltzeiten und großer Zykluszahl erforderlich.

Der Einsatz einstellbarer Elemente im Bereich machine vision hängt sehr stark vom Messproblem und dem apparativen Umfeld ab, so dass eine Basis-Lösung immer auf den konkreten Einzelfall angepasst werden muss. In industriellen Umgebungen werden die Techniken des Bildverstehens (mit den Werkzeugen wie Filter zur Kantenerkennung, Kontrastanalyse zur Erkennung von geometrischen Objekten u.a.) heutzutage erfolgreich eingesetzt. Computer unterstützen beispielsweise die Qualitätskontrolle und vermessen einfache Gegenstände. Bestimmend sind hier die Umgebungsbedingungen, die wichtig für ein fehlerfreies Ablaufen seiner Algorithmen sind (Kameraposition, Beleuchtung, Geschwindigkeit des Fließbandes, Lage der Objekte, Musteranalyse usw.).

Technische Basisparameter elektrisch schaltbarer, fokussierender Elemente für den Bereich machine vision sind neben sehr hoher Reproduzierbarkeit:

| | |
|---|---|
| Schaltzeiten: | < 1ms |
| Schaltspannung: | < 100V |
| Durchmesser: | > 10mm |
| Beugungseffizienz: | > 90% |
| Brennweite: | < 1000mm |

An alle Anwendungen werden darüber hinaus noch weitere Anforderungen gestellt, wie hohe Transparenz, Reproduzierbarkeit, hohe Verlässlichkeit und hoher Füllfaktor zur Vermeidung von "ghosting" sowie eine polarisationsunabhängige Funktionsweise um eine berührungslose 1D-, 2D- und 3D-Vermessung zu ermöglichen. Darüber hinaus sollten die einzelnen Elemente im off-Zustand optisch neutral sein. Im Gegensatz zu anderen Feldern sind in diesem Bereich Hybrid-Systeme aus klassischer Optik und einstellbaren Linsen zur Feineinstellung denkbar.

Die Anforderungsprofile von Linsen für Sehhilfen und solche für den Bereich machine vision sind deutlich verschieden. Weniger kritisch sind Schaltspannung, Brennweite und Durchmesser, wichtig dagegen sind dagegen die ON/OFF Schaltzeiten und hohe optische Qualität über die Fläche.

Ein Ausführungsbeispiel für den Bereich machine vision wird nachfolgend anhand FIG. 7 näher beschrieben und erläutert. Ein durch Mikrozerspanung hergestellter Master einer Stufenlinse (Material insbesondere ARCAP (Nichteisenlegierung Kupfer-Nickel-Zink), Struktur-Durchmesser 12mm) wird auf geeignete Weise mit einem thermisch härtenden Silikon abgeformt. Der so hergestellte Stempel wird benutzt, um Replikationen der Original-Struktur auf einem optischen Substrat herzustellen. Als Substrate 1a, 1b hierfür können Glas- oder Polymerscheiben dienen, die sich durch die notwendige Planität auszeichnen. Diese wurden zuvor mit den notwendigen Funktionsschichten ausgerüstet, die zum einen die notwendige elektrische Isolation garantieren und zum anderen ein flächige, transparent Elektrode 2a, 2b realisieren (z.B. ITO). Als Material für die Replikation der Oberflächenstruktur O wird vorzugsweise UV-härtendes Material verwendet, aber auch andere thermisch härtende Materialen können hierfür eingesetzt werden. Unter Verwendung dieses Substrates1a mit der Oberflächenstruktur O und einem weiteren Substrat 1b mit zum Beispiel einer ITO-Elektrode 2a, Isolierschicht und Aligning-Layer 3 wird eine Dünnschicht-Zelle D mit einem Substratabstand von 2-10$\mu$m zwischen 1a und 1b gefügt. Diese wird anschließend mit dem Komposit-Vorläufer befüllt, versiegelt und ggf. dem Prozessing zum Aufbau des anisotropen Netzwerkes 9 unterzogen. Abschließend wird die Dünnschichtzelle D elektrisch kontaktiert und auf geeignete Weise mechanisch gefasst. Dieses Element wird mechanisch mit weiteren optischen Elementen auf geeignete Weise kombiniert, um ein Makroobjektiv M herzustellen, das eine schnelle Variation der Fokusebene im $\mu$s-Bereich erlaubt.

Im Einzelnen zeigt FIG. 7 das Makroobjektiv M, bestehend aus der Dünnschichtzelle D und einem klassischen Objektiv MO (mit einem Linsensystem von vorzugsweise drei bis fünf Linsen, im dargestellten Fall vier Linsen, insbesondere aus Kunststoff, welche Führungsmittel zur Einstellung durch Verbiegung und/oder Drehung der einzelnen Linsen aufweisen), nahe angeordnet vor einem Kameramodul C, insbesondere einem CCD-Kamera-Modul oder C-MOS-Kameramodul. Das Objektiv MO weist vier Linsen, d.h. vier optisch wirksame Flächen zur Einstellung der gewünschten Brennweite des Linsensystems auf. Das Kameramodul C steht mit einem Zwischenspeicher Z und einer Auswerteelektronik A in Verbindung, wobei in Kombination mit einer Steuereinrichtung (in der Zeichnung nicht dargestellt) die Produkte im Produktionszyklus während der Herstellung im Takt der Anlagen abfotografiert und die Bilder in Echtzeit computergesteuert ausgewertet werden können. Dabei werden Produktfehler sofort erkannt und schadhafte Produkte aus der weiteren Fertigung entfernt. Die im Zwischenspeicher Z gespeicherten Bilder der Fokusreihe (Pixelgrafikdatei oder Vektorgrafikdatei) werden unter Nutzung von Referenzkoordinaten detailgetreu übereinander gelagert und mittels der Auswerteelektronik durch Vergleich mit einem Referenzbild (in Pixelgrafik oder Vektorgrafik) ausgewertet. Die gilt auch für einen Ausschnittsbereich (Kachel) der einzelnen Bilder einschließlich der Umwandlung des jeweiligen Bildausschnitts in Pixelgrafik oder Vektorgrafik bzw. das Bewegen von 3D- Objekten im dreidimensionalen Raum. Die Stromversorgung des Makroobjektivs M, des Kameramoduls C, des Zwischenspeichers Z und der Auswertelektronik A erfolgt mit einem Modul ST.

Das Anlegen einer Spannung an die Dünnschichtzelle D bewirkt erfindungsgemäß die Ausrichtung stäbchenförmiger Moleküle 5 und der Semi-Mesogene 4, wodurch die optische Funktion des schaltbaren Elementes D realisiert wird. Auf diese Weise wird ein Hybrid-Objektiv, d.h. eine Kombination eines klassischen Objektivs MO mit einer elektrisch einstellbaren oder schaltbaren Linse realisiert und die Nutzung von Fokusreihen durch schnelle, fokussierbare Linsenelemente für neuartige Makrobilder mit erhöhter Schärfentiefe ermöglicht. Das Makroobjektiv M vergrößert über Fokusreihen den nutzbaren Bereich zur Auswertung (Schärfentiefe) um den Faktor 20 gegenüber den physikalisch möglichen Schärfentiefenbereich einer Einzelaufnahme (Blende F# 2.8, MAG = 1). So ist eine maximale Schärfentiefe im Bereich von 0,168mm (bei Annahme von 0,015 mm Unschärfe als Kriterium für die Schärfe, der sog. Unschärfekreis). Prinzipiell ist dabei dieser Bereich sogar noch größer machbar, da Fokusreihen im Prinzip fast beliebig erweiterbar sind. Grenzen sind lediglich durch das Objektivdesign und die Aufnahme- und Auswertezeit gegeben (es fallen deutlich höhere Datenmengen zur Auswertung an und es wird eine hohe Bildaufnahmefrequenz gefordert). Der große Vorteil des Makroobjektivs M auf der Basis von elektro-aktiven Flüssigkeiten besteht darin, dass vollkommen auf aktive mechanische Komponenten verzichtet werden kann und somit eine robuste und wartungsfreie Optik ermöglicht wird. Außerdem ist damit eine erhebliche Reduktion von Bautiefe und Gewicht verbunden, wodurch eine Miniaturisierung und Integration der Dünnschichtzelle D unterstützt wird. Durch die präzise und scharfe Abbildung des Produkts kann die nachgelagerte Auswertung stabil funktionieren und im Sekundenzyklus gemessen und geprüft werden, was über 600.000 Zyklen am Tag entspricht.

Im Rahmen der Erfindung kann eine strukturierte Feldstärken-Verteilung u.U. eine strukturierte Orientierungsverteilung bewirken und damit den Strahlverlauf beeinflussen. Im einfachsten Fall kann dies eine radiale Felddichten-Verteilung sein. So sind Elemente mit Variation der Dielektrizitätskonstante (zwei unterschiedlich dicker Schichten von Materialien mit unterschiedlicher Dielektrizitätskonstante und gekrümmter Grenzfläche) zur Strahlformung einsetzbar, vorzugsweise für einstellbare Linsen von wenigen Millimetern.

Bezugszeichenliste:

| | |
|---|---|
| 1a, 1b | Substrate |
| 2a, 2b | leitfähige Schicht, leitfähige ITO-Elektrode |
| 3 | Orientierungsschicht, Aligninglayer, Isolator |
| 4 | nicht stäbchenförmiges Semi-Mesogen |
| 5 | dipolares stäbchenförmiges Molekül |
| 6 | Photoinitiatoren |
| 7 | aliphatische Monomere |
| 8 | reaktive Mesogene |
| 9 | anisotropes Netzwerk, Polymernetzwerk |
| 10 | vernetzte Mesogene |
| A | Auswerteelektronik |
| C | Kamera |
| D | Dünnschichtzelle |
| K | Ausgangsmischung, Kerrflüssigkeit, elektro-aktives Komposit |
| M | Makroobjektiv |
| MO | Objektiv |
| O | Oberflächenprofil |
| RT | Arbeitstemperaturbereich |
| U | Spannung |
| ST | Stromversorgung |
| Z | Zwischenspeicher |

## Patentansprüche

1. Elektrisch steuerbares optisches Element mit einer mit einer Ausgangsmischung (K) gefüllten Zelle (D) mit zwei Substraten (1a, 1b) und einer auf die innere Oberfläche des jeweiligen Substrats (1a, 1b) aufgebrachten leitfähigen Schicht (2a, 2b), wobei die Ausgangsmischung (K) eine Mischung aus dipolaren, stäbchenförmigen Molekülen (5) und Semi-Mesogenen (4) als aktive Komponenten aufweist und dass die Kerr-Mischung (K) eine dünne Schicht mit einem durch Photopolymerisation hergestellten, weitmaschigen, anisotropen Netzwerk (9) zwischen auf einem Substrat (1a, 1b) aufgebrachten strukturierten oder / und flächigen leitfähigen Schicht (2a, 2b) in einer Dünnschichtzelle (D) ausbildet, derart, dass entsprechend dem elektro-optischen Kerr-Effekt der Zustand der aktiven Komposite aus Semi-Mesogene und dipolare, stäbchenförmige Moleküle (4, 5) der Kerr-Mischung (K) ohne elektrisches Feld im Arbeitstemperaturbereich isotrop ist und durch elektrisch kontinuierliche Einstellung der Spannung U oder durch Anlegen einer konstanten Spannung eine Veränderung des spannungsinduzierten Phasenhubs oder Brechungsindexhubes im optischen Element erzeugt wird, **dadurch gekennzeichnet, dass** zusätzlich zur leitfähigen Schicht (2a, 2b) ein optisch wirksames Oberflächenprofil (O) auf der inneren Oberfläche eines Substrates (1a oder 1b) oder in das Substrat (1a oder 1b) oder beider Substrate (1a und 1b) eingearbeitet ist.

2. Elektrisch steuerbares optisches Element nach Anspruch 1, **dadurch gekennzeichnet, dass** das Oberflächenprofil (O) auf der inneren Oberfläche eines Substrates (1a oder 1b) eine Stufenlinse, eine Phasenplatte oder ein Oberflächengitter mit einem Material nahezu des gleichen Brechungsindex wie die gefüllte Dünnschichtzelle (D) im spannungslosen Zustand ist und in diesem Zustand wie die Kerr-Mischung (K) optisch inaktiv ist und dass durch Anlegen einer Spannung U sich der Brechungsindex des elektro-optisch aktiven Materials verändert, sodass eine optische Funktion erfüllt wird.

**3.** Elektrisch steuerbares optisches Element nach Anspruch 1 oder 2, **dadurch gekennzeichnet, dass** die Elektroden (2a, 2b) entweder unter dem Oberflächenprofil (O) aufgebracht, in diesem integriert oder auf diesem angeordnet sind.

**4.** Elektrisch steuerbares optisches Element nach einem oder mehreren der Ansprüche 1 bis 3, **dadurch gekennzeichnet, dass** eine Elektrode (2b) oder beide Elektroden (2a, 2b) strukturiert sind oder eine oder beide Elektroden (2a, 2b) ein Set von Einzelelektroden darstellen, die einzeln, in Gruppen oder in ihrer Gesamtheit ansteuerbar sind.

**5.** Elektrisch steuerbares optisches Element nach einem oder mehreren der Ansprüche 1 bis 4, **dadurch gekennzeichnet, dass** die Dünnschichtzelle (D) zwei Glas- oder Polymersubstrate (1a, 1b) aufweist, deren innere Oberfläche jeweils mit einer leitfähigen ITO-Elektrode (2a, 2b) als leitfähige Schicht und diese mit einer Orientierungsschicht (3) versehen ist und dass die Herstellung eines weitmaschigen, anisotropen Polymernetzwerks in der abgekühlten Kerr-Mischung (K) mittels beigemischter Photoinitiatoren, aliphatischer Monomere (7) und reaktiver Mesogene (8) und UV-Bestrahlung erfolgt, wobei bei Anlegen einer Spannung U ein Ausrichten der stäbchenförmigen Moleküle entlang der Feldlinien erfolgt.

**6.** Elektrisch steuerbares optisches Element nach einem oder mehreren der Ansprüche 1 bis 5, **dadurch gekennzeichnet, dass** die zu einer homöotropen Orientierung führende Orientierungsschicht (3) vernetzbare oder polymersierbare Gruppen enthält und dass das anisotrope Netzwerk (9) vorzugsweise kovalent an die beiden Substratgrenzflächen fixiert ist, wodurch die Langzeitstabilität des Netzwerks in seiner anisotropen Form auch bei der Isotropisierung der Kerrflüssigkeit durch Temperaturerhöhung in den Arbeitstemperaturbereich langzeitstabil erhalten bleibt.

**7.** Elektrisch steuerbares optisches Element nach einem oder mehreren der Ansprüche 1 bis 6, **dadurch gekennzeichnet, dass** die stäbchenförmigen Moleküle (5) mit großem Dipolmoment als aktive Komponenten der Kerr-Mischung (K) teilweise oder ganz in Form nanoskaliger Cluster oder Nanopartikel und wobei die Molekül-Cluster oder sphärische und asphärische Nanopartikeln in einer Ausgangsmischung (4, 5, 6, 7, 8) dispergiert werden, wodurch einerseits eine Erhöhung des Kerr-Effekts durch hohe stabile Orientierungsordnung der geordnet fixierten Cluster oder Nanopartikel erreicht und andererseits die Temperaturabhängigkeit des Kerr-Effekts in Lösungen oder flüssigkristallinen Materialien oberhalb des Klärpunktes minimiert wird.

**8.** Elektrisch steuerbares optisches Element nach einem oder mehreren der Ansprüche 1 bis 7, **dadurch gekennzeichnet, dass** die zwischenmolekulare Wechselwirkungen der dipolaren, stäbchenförmigen Moleküle (5) auf Basis von H-Brückenbindungen, ionische Wechselwirkungen oder $\pi\pi$-Wechselwirkungen von Pyridin/Säure oder von Säure/Säure gebildet wird und dass die unterschiedliche Temperaturabhängigkeit der zwischenmolekularen Wechselwirkungen und des Vororientierungseffekt zur Stabilisierung des Kerr-Effekts genutzt wird.

**9.** Elektrisch steuerbares optisches Element nach Anspruch 1, **dadurch gekennzeichnet, dass** die Semi-Mesogene (4) als aktive Komponenten der Kerr-Mischung (K) durch zwischenmolekulare Wechselwirkungen gebildet werden und dass eine Temperaturerhöhung zur Schwächung der nicht-kovalenten Wechselwirkungen führt, wobei die Komplexe teilweise abgebaut werden.

**10.** Elektrisch steuerbares optisches Element nach Anspruch einem oder mehreren der Ansprüche 1 bis 9, **dadurch gekennzeichnet, dass** um isotrope Semi-Mesogene (4) mit einer hohen dielektrischen und optischen Anisotropie zu synthetisieren, Substituenten in die para-Position einer Biphenyl-Struktur gemäß

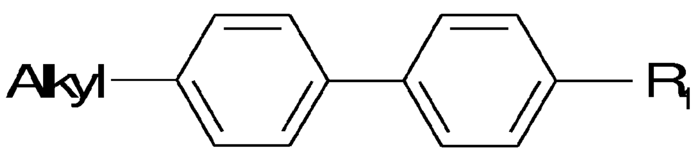

$R_1$ = -CN, -NCS, - Hal (F, Br, Cl)

als polare Kopfgruppe eingefügt sind.

11. Elektrisch steuerbares optisches Element nach einem oder mehreren der Ansprüche 1 bis 10, **dadurch gekennzeichnet, dass** durch einen Austausch von Phenylringen gegen heteroaromatische Kerne bei Semi- Mesogenen (4) mit Pyrimidin-Ring und Variation der Kopfgruppe gemäß

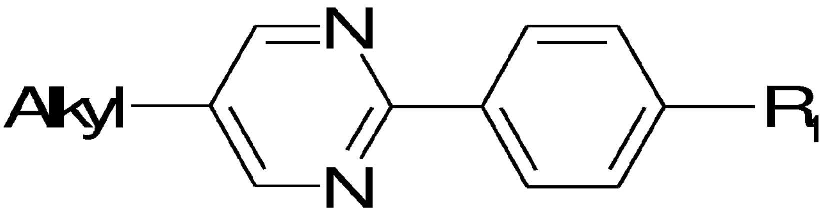

$R_1$ = -CN, -NCS, -Hal (F, Br, Cl)

das permanente Dipolmoment und damit die dielektrische Anisotropie der Semi-Mesogene (4) erhöht sind.

12. Verfahren zur Herstellung eines elektrisch steuerbaren optischen Elements mit einer mit Kerr-Mischung gefüllten Zelle mit zwei Substraten (1a, 1b) und einer auf die innere Oberfläche des jeweiligen Substrats (1a, 1b) aufgebrachten leitfähigen Schicht (2a, 2b), bei dem: a) die Ausgangsmischung (K) eine Mischung aus dipolaren, stäbchenförmigen Molekülen (5) und Semi-Mesogenen (4) als aktive Komponenten, reaktiven Mesogenen (8), Photoinitiatoren (6) und aliphatischen Monomere (7) aufweist, b) die Ausgangsmischung (K) in eine Dünnschichtzelle (D) gefüllt wird, c) die Ausgangsmischung (K) auf eine tiefere Temperatur T als Raumtemperatur R Tabgekühlt wird, bei der sich eine-flüssigkristalline Phase mit einer homöotropen Orientierung ausbildet, d) durch eine UV-Bestrahlung der homöotrop orientierten Schichten Radikale erzeugt werden, die eine Polymerisation der orientierten reaktiven Mesogenen (8) bewirken, derart, dass ein weitmaschiges, loses anisotropes Netzwerk (9) aus mit denaliphatischen Monomeren (7) vernetzten reaktiven Mesogenen (10) in der Ausgangsmischung (K) entsteht, und e) ein parallel zur leitfähigen Schicht (2a, 2b) sich erstreckendes, optisch wirksames Oberflächenprofil (O) auf der inneren Oberfläche eines Substrates (1a oder 1b) oder in das Substrat (1a oder 1b) oder beider Substrate (1a und 1b) eingearbeitet wird,so dass ohne Spannung U im Arbeitstemperaturbereich das Komposit aus stäbchenförmigen Molekülen (5) mit großem Dipolmoment und Semi-Mesogenen (4) wieder isotrop ist und bei Anlegen der Spannung U sich die Moleküle des Komposits in Richtung der E-Feldlinien orientieren.

13. Verfahren nach Anspruch 12, **dadurch gekennzeichnet, dass** eine oder beide zu einer homöotropen Orientierung führende Orientierungsschicht (3) photovernetzbare oder photopolymersierbare Gruppen enthält,

14. Verfahren nach Anspruch 12, **dadurch gekennzeichnet, dass** Glas- oder Polymerscheiben als Substrate (1a, 1b) und ein thermisch härtendes Material für eine Replikation der Oberflächenstruktur (O) verwendet werden.

15. Makroobjektiv (M) mit einer Dünnschichtzelle (D) als elektrisch steuerbares optisches Element nach Anspruch 1, wobei die Dünnschichtzelle (D) in Kombination mit einem handelsüblichen Objektiv (MO) ein Hybrid-Objektiv realisiert.

## Claims

1. Electrically controllable optical element with a cell (D) filled with an initial mixture (K) and having two substrates (1a, 1b) and a conductive layer (2a, 2b) applied to the inner surface of the respective substrate (1a, 1b), the starting mixture (K) has a mixture of dipolar, rod-shaped molecules (5) and semi-mesogens (4) as active components and that the Kerr mixture (K) has a thin layer with a wide-meshed, anisotropic network (9) produced by photo polymerization between a structured and/or flat conductive layer (2a, 2b) applied to a substrate (1a, 1b) in a thin-layer cell (D) in such a way that, in accordance with the electro-optical Kerr effect, the state of the active composites of semimesogens and dipolar, rod-shaped molecules (4, 5) of the Kerr mixture (K) is isotropic without an electric field in the working temperature range and a change in the voltage-induced phase deviation or refractive index deviation in the optical element is produced by electrically continuously adjusting the voltage U or by applying a constant voltage, **characterized in that** in addition to the conductive layer (2a, 2b) an optically effective surface profile (O) on the inner surface of a substrate (1a or 1b) or in the substrate (1a or 1b) or both substrates (1a and 1b) is incorporated.

2. Electrically controllable optical element according to claim 1, **characterized in that** the surface profile (O) on the inner surface of a substrate (1a or 1b) is a Fresnel lens, a phase plate or a surface grating with a material having almost the same refractive index as the filled thin-film cell (D) is in the voltage-free state and in this state, like the Kerr mixture (K), is optically inactive and that applying a voltage U changes the refractive index of the electro-optically active material, so that an optical function is fulfilled.

3. Electrically controllable optical element according to claim 1 or 2, **characterized in that** the electrodes (2a, 2b) are applied under the surface profile (O), integrated into it or arranged on it.

4. Electrically controllable optical element according to one or more of claims 1 to 3, **characterized in that** one electrode (2b) or both electrodes (2a, 2b) are structured or one or both electrodes (2a, 2b) represent a set of individual electrodes which can be controlled individually, in groups or in their entirety.

5. Electrically controllable optical element according to one or more of claims 1 to 4, **characterized in that** the thin-film cell (D) has two glass or polymer substrates (1a, 1b), the inner surface of which is each provided with a conductive ITO electrode (2a, 2b) as a conductive layer and this is provided with an orientation layer (3) and that the production of a wide-meshed, anisotropic polymer network in the cooled Kerr mixture (K) by means of admixed photo initiators, aliphatic monomers (7) and reactive mesogens (8) and UV radiation takes place, whereby when a voltage U is applied, the rod-shaped molecules (4, 5) are aligned along the field lines.

6. Electrically controllable optical element according to one or more of claims 1 to 5, **characterized in that** the orientation layer (3) leading to a homeotropic orientation contains cross linkable or polymerizable groups and that the anisotropic network (9) is preferably fixed covalently to the two substrate interfaces, whereby the long-term stability of the network in its anisotropic form remains stable over the long term even when the Kerr liquid is isotropized by increasing the temperature in the working temperature range.

7. Electrically controllable optical element according to one or more of claims 1 to 6, **characterized in that** the rod-shaped molecules (5) with a large dipole moment as active components of the Kerr mixture (K) are partially or entirely in the form of nanoscale clusters or nanoparticles and the molecules -clusters or spherical and aspherical nanoparticles are dispersed in a starting mixture (4, 5, 6, 7, 8), which on the one hand increases the Kerr effect due to the high stable orientation order of the ordered fixed clusters or nanoparticles and on the other hand the temperature dependence of the Kerr Effect is minimized in liquids or liquid crystalline materials above the clearing point.

8. Electrically controllable optical element according to one or more of claims 1 to 7, **characterized in that** the intermolecular interactions of the dipolar, rod-shaped molecules (5) on the basis of H bridge bonds, ionic interactions or $\pi\pi$ interactions of pyridine/acid or of acid/ acid is formed and that the different temperature dependence of the intermolecular interactions and the preorientation effect is used to stabilize the Kerr effect.

9. Electrically controllable optical element according to claim 1, **characterized in that** the semi-mesogens (4) are formed as active components of the Kerr mixture (K) by intermolecular interactions and that an increase in temperature leads to weakening of the non-covalent interactions, the complexes be partially dismantled.

10. Electrically controllable optical element according to claim one or more of claims 1 to 9, **characterized in that** in order to synthesize isotropic semi-mesogens (4) with a high dielectric and optical anisotropy, substituents in the para position according to a biphenyl structure

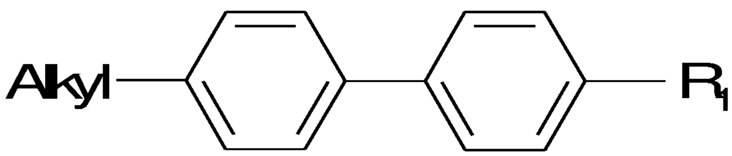

$R_1$ = -CN, -NCS, - Hal (F, Br, Cl)

are inserted as a polar head group.

11. Electrically controllable optical element according to one or more of claims 1 to 10, **characterized in that** by replacing phenyl rings with heteroaromatic nuclei in semi-mesogens (4) with pyrimidine ring and variation of the head group

according to

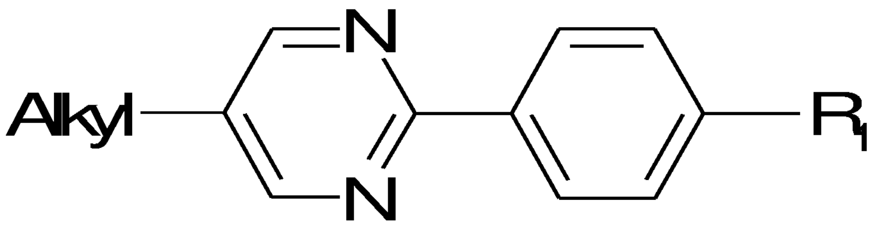

$R_1$ = -CN, -NCS, -Hal (F, Br, Cl)

the permanent dipole moment and thus the dielectric anisotropy of the semi-mesogens (4) are increased.

**12.** A method for producing an electrically controllable optical element with a cell filled with Kerr mixture with two substrates (1a, 1b) and a conductive layer (2a, 2b) applied to the inner surface of the respective substrate (1a, 1b), **in which:**

a) the starting mixture (K) has a mixture of dipolar, rod-shaped molecules (5) and semi-mesogens (4) as active components, reactive mesogens (8), photoinitiators (6) and aliphatic monomers (7),
b) the starting mixture (K) is filled into a thin-layer cell (D),
c) the starting mixture (K) is cooled to a lower temperature T than room temperature RT, at which a liquid-crystalline phase with a homeotropic orientation forms,
d) radicals are generated by UV irradiation of the homeotropically oriented layers, which cause polymerization of the oriented reactive mesogens (8) in such a way that a wide-meshed, loose anisotropic network (9) of reactive mesogens (10) crosslinked with the aliphatic monomers (7) is formed in the starting mixture (K), and
e) an optically effective surface profile (O) extending parallel to the conductive layer (2a, 2b) on the inner surface of a substrate (1a or 1b) or in the substrate (1a or 1b) or both substrates (1a and 1b) becomes,

so that without voltage U in the working temperature range, the composite of rod-shaped molecules (5) with a large dipole moment and semi-mesogens (4) is again isotropic and when the voltage U is applied, the molecules of the composite are oriented in the direction of the E field lines.

**13.** Method according to claim 12, **characterized in that** one or both orientation layer (3) leading to a homeotropic orientation contains photocrosslinkable or photopolymerizable groups.

**14.** Method according to claim 12, **characterized in that** glass or polymer panes are used as substrates (1a, 1b) and a thermally curing material is used for replication of the surface structure (O).

**15.** Macro lens (M) with a thin-layer cell (D) as an electrically controllable optical element **according to claim 1,** the thin-layer cell (D) in combination with a commercially available lens (MO) realizing a hybrid lens.

## Revendications

**1.** Elément optique électrocommandable avec une cellule (D) remplie d'un mélange initial (K) et ayant deux substrats (1a, 1b) et une couche conductrice (2a, 2b) appliquée sur la surface intérieure du substrat respectif (1a, 1b) , le mélange de départ (K) contient un mélange de molécules dipolaires en forme de bâtonnet (5) et de semi-mésogènes (4) en tant que composants actifs et en ce que le mélange de Kerr (K) présente une couche mince avec un réseau anisotrope à larges mailles (9) réalisé par photopolymérisation entre une couche conductrice structurée et/ou plane (2a, 2b) appliquée sur un substrat (1a, 1b) dans une cellule en couche mince (D) de telle sorte que, conformément à l'électro -effet Kerr optique, l'état des composés actifs des semi-mésogènes et des molécules dipolaires en forme de bâtonnet (4, 5) du mélange Kerr (K) est isotrope sans champ électrique dans la plage de température de travail et changement de la une déviation de phase ou une déviation d'indice de réfraction induite par la tension dans l'élément optique est produite en ajustant électriquement en continu la tension U ou en appliquant une tension constante, **caractérisé en ce qu'**en plus de la couche conductrice (2a, 2b) un profil de surface optiquement efficace (O) sur la surface intérieure d'un substrat (1a ou 1b) ou dans le substrat (1a ou 1b) ou les deux substrats (1a et 1b)

est incorporé.

2. Elément optique électrocommandable selon la revendication 1, **caractérisé en ce que** le profil de surface (O) sur la surface intérieure d'un substrat (1a ou 1b) est une lentille de Fresnel, une lame de phase ou un réseau de surface avec un matériau ayant presque le même coefficient de réfraction car la cellule à couche mince remplie (D) est à l'état sans tension et dans cet état, comme le mélange de Kerr (K), est optiquement inactive et que l'application d'une tension U modifie l'indice de réfraction de la cellule électro-optiquement active matériau, de sorte qu'une fonction optique est remplie.

3. Elément optique électrocommandable selon la revendication 1 ou 2, **caractérisé en ce que** les électrodes (2a, 2b) sont appliquées sous le profil de surface (O), intégrées dans celui-ci ou disposées sur celui-ci.

4. Elément optique électrocommandable selon une ou plusieurs des revendications 1 à 3, **caractérisé en ce qu'**une électrode (2b) ou les deux électrodes (2a, 2b) sont structurées ou une ou les deux électrodes (2a, 2b) représentent un ensemble d'électrodes individuelles qui peuvent être contrôlés individuellement, en groupe ou dans leur intégralité.

5. Elément optique électrocommandable selon l'une ou plusieurs des revendications 1 à 4, **caractérisé en ce que** la cellule en couche mince (D) présente deux substrats en verre ou en polymère (1a, 1b), dont la surface intérieure est munie chacune d'un ITO conducteur l'électrode (2a, 2b) en tant que couche conductrice et celle-ci est pourvue d'une couche d'orientation (3) et que la production d'un réseau polymère anisotrope à larges mailles dans le mélange Kerr refroidi (K) au moyen de photo-initiateurs mélangés, aliphatiques des monomères (7) et des mésogènes réactifs (8) et un rayonnement UV ont lieu, de sorte que lorsqu'une tension U est appliquée, les molécules en forme de bâtonnet (4, 5) sont alignées le long des lignes de champ.

6. Elément optique électrocommandable selon une ou plusieurs des revendications 1 à 5, **caractérisé en ce que** la couche d'orientation (3) conduisant à une orientation homéotrope contient des groupes réticulables ou polymérisables et **en ce que** le réseau anisotrope (9) est de préférence fixé de manière covalente aux deux des interfaces substrat, la stabilité à long terme du réseau sous sa forme anisotrope restant stable à long terme même lorsque le liquide du Kerr est isotrope par élévation de température dans la plage de température de travail.

7. Elément optique électrocommandable selon l'une ou plusieurs des revendications 1 à 6, **caractérisé en ce que** les molécules en forme de bâtonnet (5) avec un grand moment dipolaire en tant que composants actifs du mélange de Kerr (K) sont partiellement ou entièrement sous forme de particules nanométriques clusters ou nanoparticules et les molécules -clusters ou nanoparticules sphériques et asphériques sont dispersées dans un mélange de départ (4, 5, 6, 7, 8), ce qui d'une part augmente l'effet Kerr en raison de l'ordre d'orientation stable élevé des ordonnés amas ou nanoparticules fixes et, d'autre part, la dépendance à la température de l'effet Kerr est minimisée dans les liquides ou les matériaux cristallins liquides au-dessus du point de clarification.

8. Elément optique électrocommandable selon l'une ou plusieurs des revendications 1 à 7, **caractérisé en ce que** les interactions intermoléculaires des molécules dipolaires en forme de bâtonnet (5) sur la base de ponts H, d'interactions ioniques ou d'interactions $\pi\pi$ de pyridine/acide ou d'acide/acide se forme et que la dépendance à la température différente des interactions intermoléculaires et de l'effet de pré-orientation est utilisée pour stabiliser l'effet Kerr.

9. Elément optique électrocommandable selon la revendication 1, **caractérisé en ce que** les semi-mésogènes (4) sont formés comme composants actifs du mélange de Kerr (K) par des interactions intermoléculaires et qu'une augmentation de la température conduit à un affaiblissement des interactions non covalentes, les complexes soient partiellement démantelés.

10. Elément optique électrocommandable selon l'une ou plusieurs des revendications 1 à 9, **caractérisé en ce que** pour synthétiser des semi-mésogènes isotropes (4) à forte anisotropie diélectrique et optique, des substituants en position para selon une structure biphényle

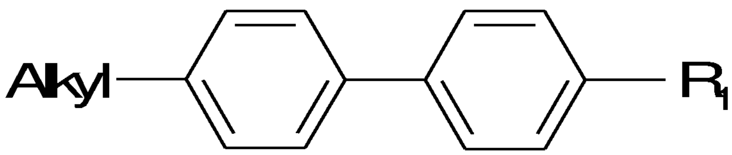

$R_1$ = -CN, -NCS, - Hal (F, Br, Cl)

sont insérés en tant que groupe de têtes polaires.

**11.** Elément optique électrocommandable selon une ou plusieurs des revendications 1 à 10, **caractérisé en ce qu'**en remplaçant les noyaux phényle par des noyaux hétéroaromatiques dans des semi-mésogènes (4) par un noyau pyrimidine et en modifiant le groupe de tête selon

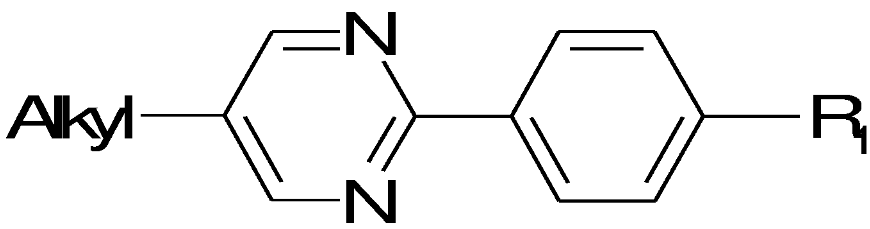

$R_1$ = -CN, -NCS, -Hal (F, Br, Cl)

le moment dipolaire permanent et donc l'anisotropie diélectrique des semi-mésogènes (4) sont augmentés.

**12.** Procédé de production d'un élément optique pouvant être commandé électriquement avec une cellule remplie d'un mélange de Kerr avec deux substrats (1a, 1b) et une couche conductrice (2a, 2b) appliquée sur la surface intérieure du substrat respectif (1a, 1b), **dans lequel:**

a) le mélange de départ (K) contient un mélange de molécules dipolaires en forme de bâtonnet (5) et de semi-mésogènes (4) comme composants actifs, de mésogènes réactifs (8), de photoinitiateurs (6) et de monomères aliphatiques (7),
b) le mélange de départ (K) est versé dans une cellule à couche mince (D),
c) le mélange de départ (K) est refroidi à une température T inférieure à la température ambiante RT, à laquelle se forme une phase cristalline liquide avec une orientation homéotrope,
d) des radicaux sont générés par irradiation UV des couches orientées de manière homéotrope, qui provoquent la polymérisation des mésogènes réactifs orientés (8) de telle sorte qu'un réseau anisotrope lâche et à larges mailles (9) de mésogènes réactifs (10) réticulé avec le des monomères aliphatiques (7) sont formés dans le mélange de départ (K), et
e) un profil de surface optiquement efficace (O) s'étendant parallèlement à la couche conductrice (2a, 2b) sur la surface interne d'un substrat (1a ou 1b) ou dans le substrat (1a ou 1b) ou les deux substrats (1a et 1b) devient,

de sorte que sans tension U dans la plage de température de travail, le composite de molécules en forme de bâtonnet (5) à grand moment dipolaire et semi-mésogènes (4) est à nouveau isotrope et lorsque la tension U est appliquée, les molécules du composite sont orienté dans la direction des lignes de champ E.

**13.** Procédé selon la revendication 12, **caractérisé en ce qu'**une ou les deux couches d'orientation (3) conduisant à une orientation homéotrope contiennent des groupements photoréticulables ou photopolymérisables.

**14.** Procédé selon la revendication 12, **caractérisé en ce que** des vitres en verre ou en polymère sont utilisées comme substrats (1a, 1b) et un matériau durcissant thermiquement est utilisé pour la reproduction de la structure de surface (O).

**15.** Lentille macro (M) avec une cellule à couche mince (D) en tant qu'élément optique commandable électriquement selon **la revendication 1,** la cellule à couche mince (D) en combinaison avec une lentille disponible dans le commerce (MO) réalisant une lentille hybride.

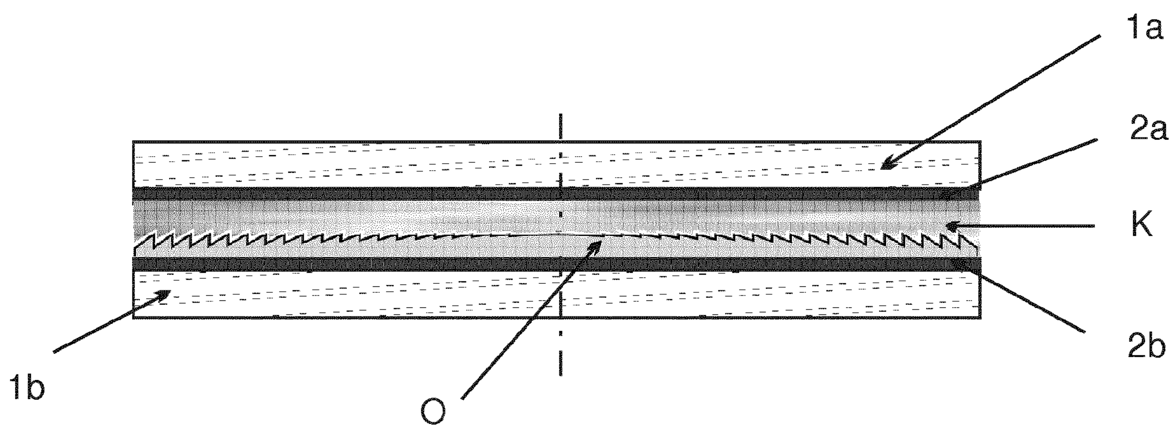


FIG. 1a

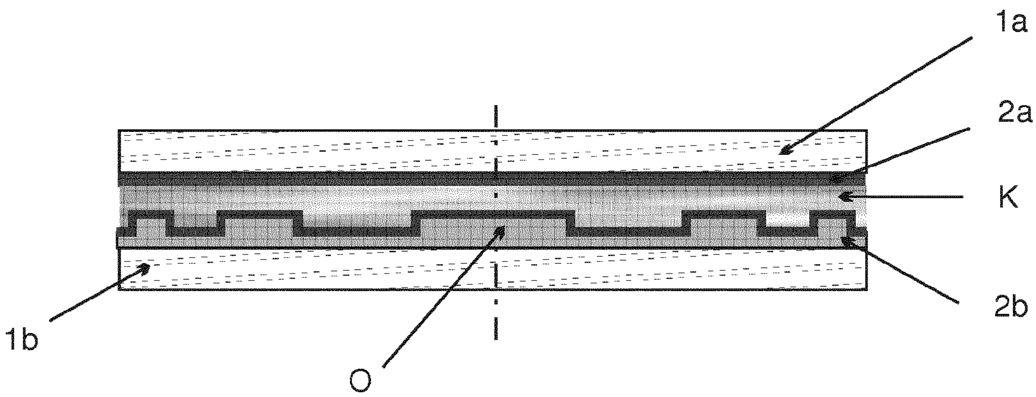


FIG. 1b

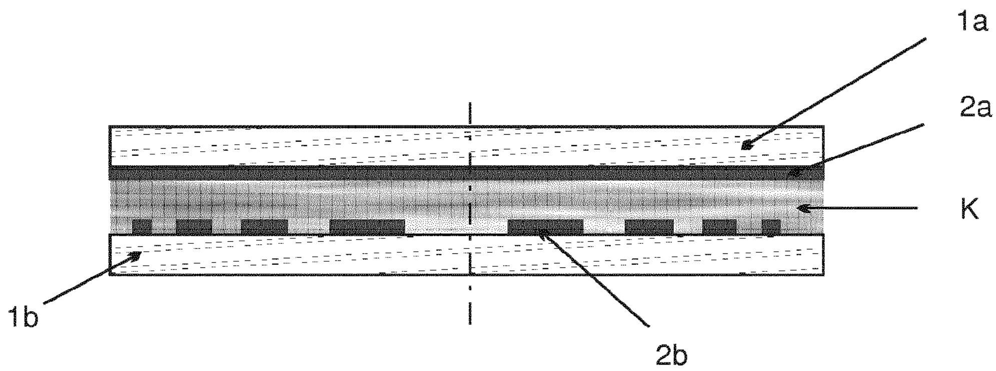


FIG. 1c

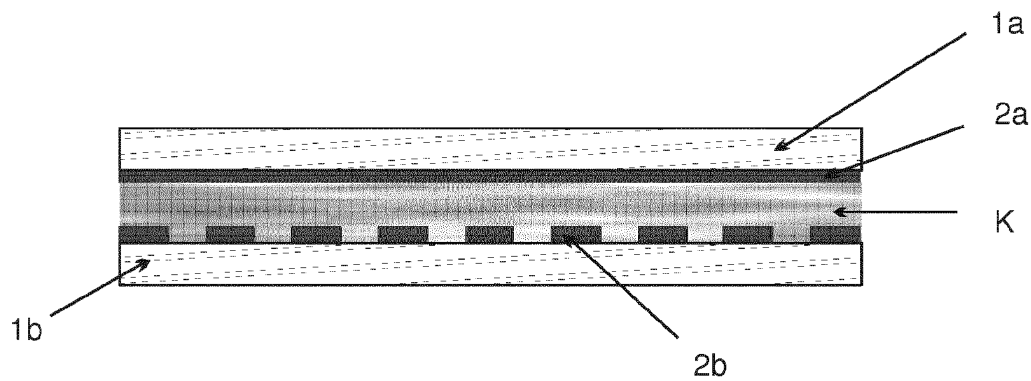


FIG. 1d

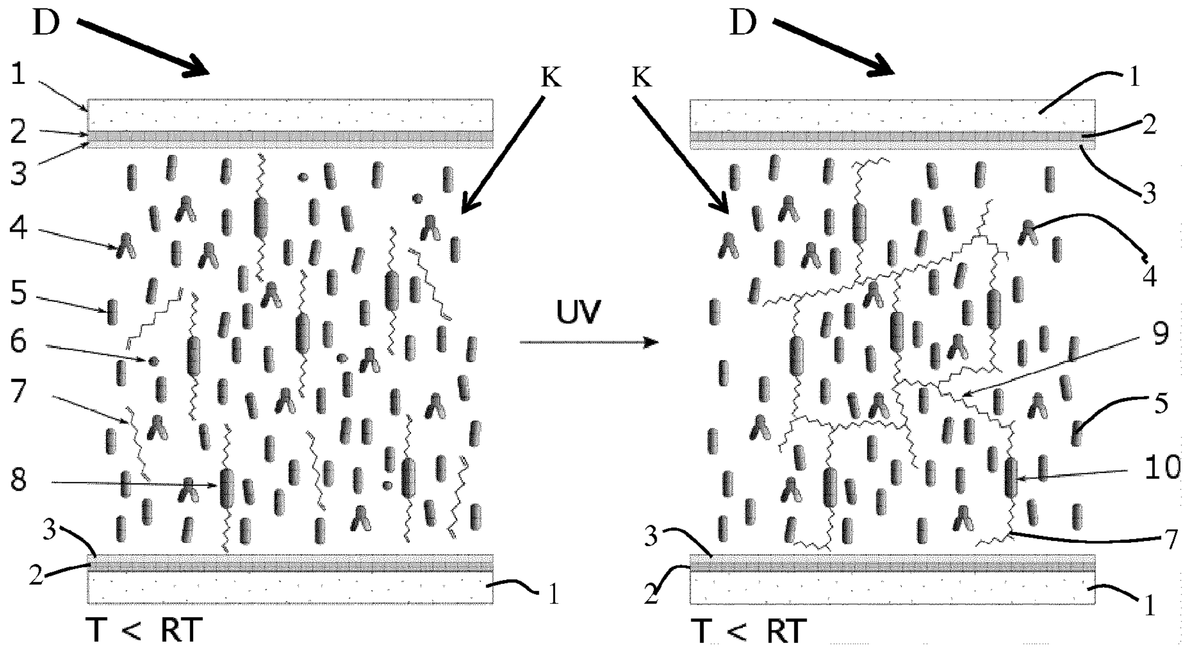


FIG. 2

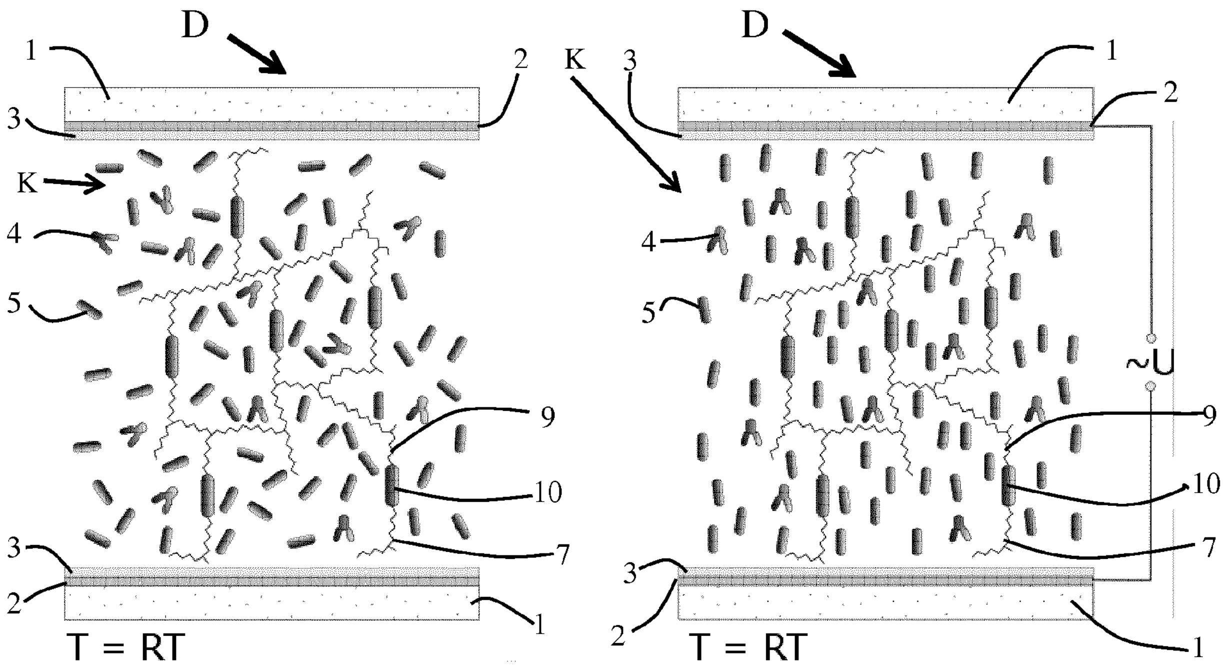


FIG. 3

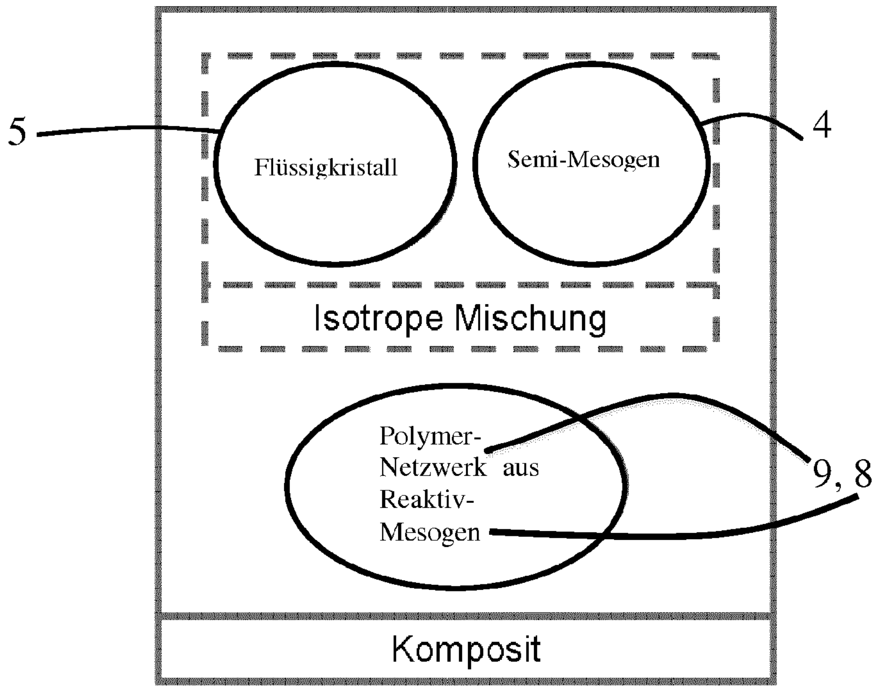
5
Flüssigkristall
Semi-Mesogen
4
Isotrope Mischung
Polymer-Netzwerk aus Reaktiv-Mesogen
9, 8
Komposit

FIG. 4

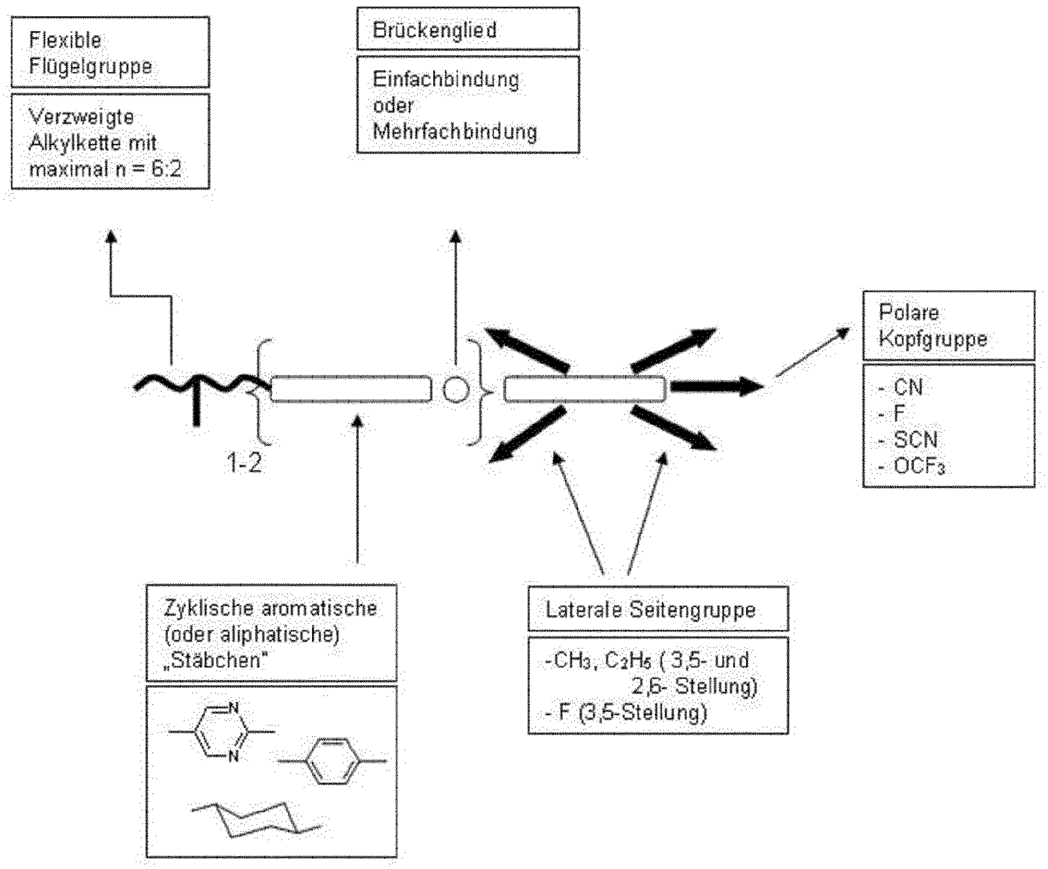
Flexible Flügelgruppe
Verzweigte Alkylkette mit maximal n = 6:2
Brückenglied
Einfachbindung oder Mehrfachbindung
Polare Kopfgruppe
- CN
- F
- SCN
- $OCF_3$
1-2
Zyklische aromatische (oder aliphatische) „Stäbchen"
Laterale Seitengruppe
-$CH_3$, $C_2H_5$ ( 3,5- und 2,6- Stellung)
- F (3,5-Stellung)

FIG. 5

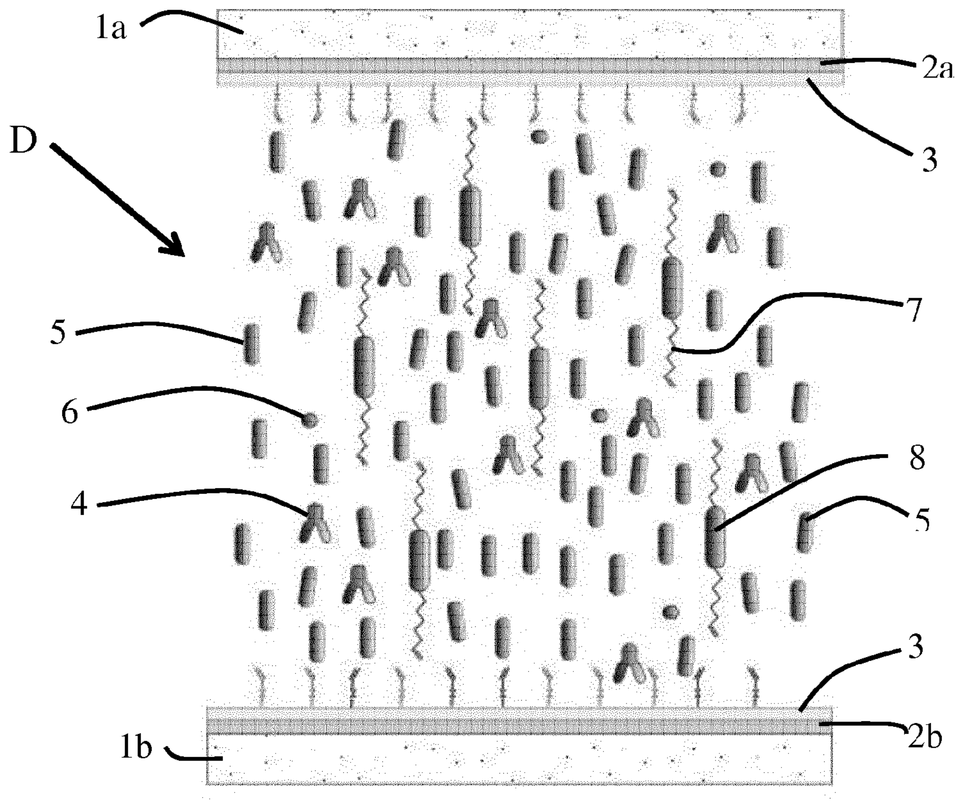


FIG. 6a

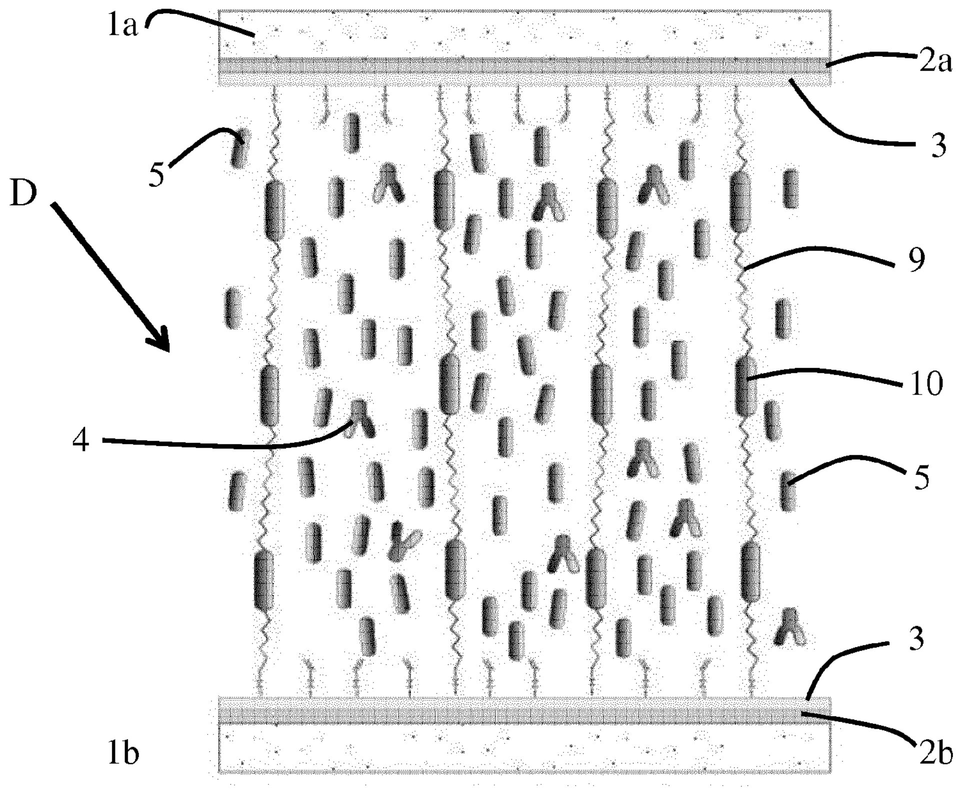


FIG. 6b

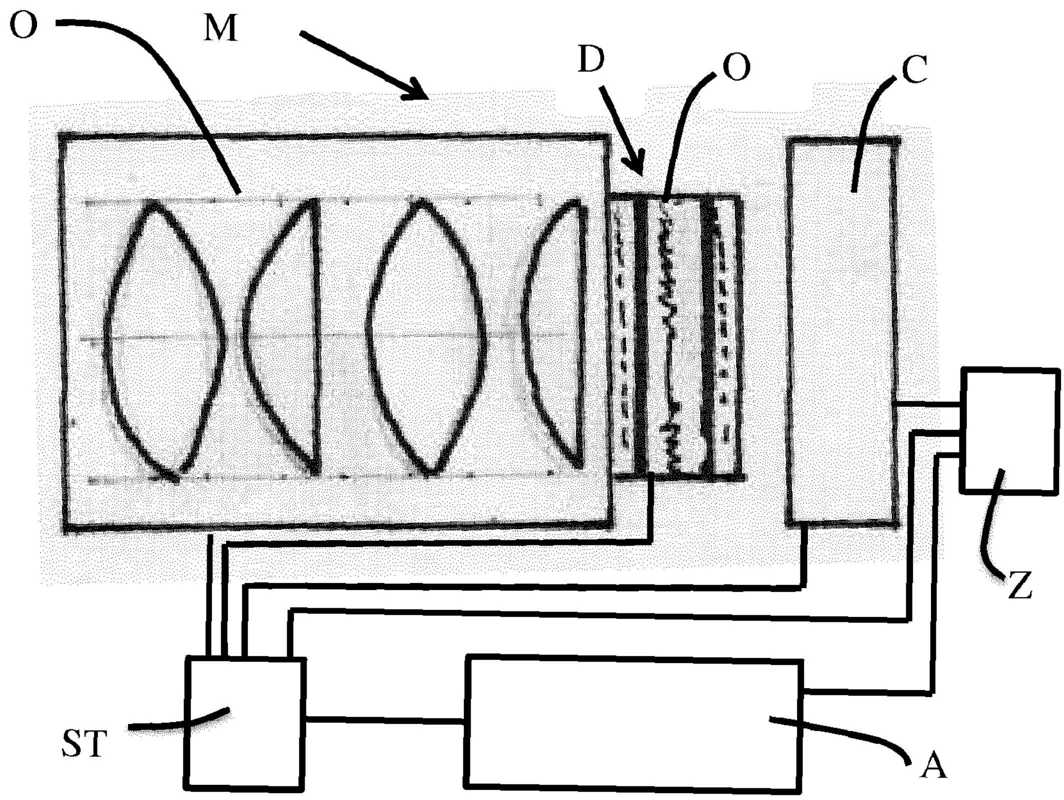


FIG. 7

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- DE 555249 A
- DE 622368 A
- WO 2004046796 A1
- WO 2004046796 A
- EP 1155355 B1
- DE 2828910 A1
- EP 1463970 B1
- DE 102015015436 A1
- WO 2017092877 A1

### In der Beschreibung aufgeführte Nicht-Patentliteratur


- **ZINTH, W.** Optik. Oldenbourg-Verlag, 2011
- Faraday Trans. *J. Chem. Soc,* 1976, vol. 2 (72), 1447-1458
- *Appl. Phys. Lett.,* 2011
- **DUNMUR D. A. ; TOMES A. E .** *Mol. Cryst. Liq. Cryst.,* 1981, vol. 76, 231
- *J. Phys. D: Appl. Phys,* 2009, vol. 42, 112002
- *Biomed. Opt. Express,* 2014, vol. 5 (2), 645-652
- *Biomed. Opt. Express,* 2014, vol. 5 (6), 1877-1885
- **A.Y.G. ; KO, S.W. ; HUANG, S.H. ; CHEN, Y.Y. ; LIN, T.H.** *Opt. Express,* 2011, vol. 19, 2294-2300
- **REN, H. ; LIN, Y.H. ; FAN, Y.H. ; WU, S.T.** *Appl. Phys. Lett.,* 2005, vol. 86, 141110
- **LIN, Y.H. ; REN, H. ; WU, Y.H. ; ZHAO, Y. ; FANG, J. ; GE, Z. ; WU, S.T.** *Opt. Express,* 2005, vol. 13, 8746-8752
- **WANG, B. ; YE, M. ; SATO, S.** *Opt. Commun.,* 2005, vol. 250, 266-273
- **D.-K. YANG ; S.-T. WU.** Fundamentals of Liquid Crystal Devices. John Wiley, 2006
- **J. XIANG ; O. D. LAVRENTOVICH.** *Appl. Phys. Lett.,* 2013, vol. 103, 051112
- **B. GOLOVIN ; S. V. SHIYANOVSKII ; O. D. LAVRENTOVICH.** *Appl. Phys. Lett.,* 2003, vol. 83, 3864
- **G. POLUSHIN ; V. B. ROGOZHIN ; E. I. RYUMTSEV DOKLADY.** *Physical Chemistry,* 2015, vol. 465, 298-300
- **BING-XIANG LI ; VOLODYMYR BORSHCH ; SERGIJ V. SHIYANOVSKII ; SHAO-BIN LIU ; OLEG D. LAVRENTOVICH.** *Appl. Phys. Lett.,* 2014, vol. 104, 201105
- **SU XU ; YAN LI ; YIFAN LIU ; JIE SUN ; HONGWEN REN ; SHIN-TSON WU.** *Micromachines,* 2014, vol. 5, 300-324
- **Y. HASEBA ; H. KIKUCHI.** *Mol. Cryst. Liq. Cryst.,* 2007, vol. 470, 1
- **YOUNG-CHEOL YANG ; DENG-KE YANG.** *Applied Physics Letters,* 2011, vol. 98, 023502
- **F. COSTACHE ; M. BLASL.** *Optik & Photonik,* Dezember 2011, vol. 6 (4), 29-31
- **P. KIRSCH ; A. HAHN.** *Eur. J. of Org. Chem.,* 2005, vol. 14, 3095-3100